(19) **Europäisches Patentamt / European Patent Office / Office européen des brevets**

(11) **EP 4 772 819 A1**

(12) **EUROPEAN PATENT APPLICATION**
published in accordance with Art. 153(4) EPC

(43) Date of publication:
08.07.2026 Bulletin 2026/28

(21) Application number: 24859778.3

(22) Date of filing: 27.08.2024

(51) International Patent Classification (IPC):
*F26B 17/20* (2006.01)    *B01D 9/02* (2006.01)
*B01D 24/00* (2006.01)    *B01D 24/44* (2006.01)
*B01D 24/48* (2006.01)    *B01D 29/00* (2006.01)
*B01D 29/01* (2006.01)    *B01D 29/25* (2006.01)
*B01D 29/37* (2006.01)    *B01D 29/39* (2006.01)
*B01D 29/60* (2006.01)    *B01D 29/90* (2006.01)
*B01D 29/94* (2006.01)    *B01D 35/22* (2006.01)
*B01F 23/50* (2022.01)    *B01F 23/53* (2022.01)
*B01F 23/57* (2022.01)    *B01F 25/10* (2022.01)
*B01F 27/50* (2022.01)    *B01F 27/73* (2022.01)
*B01F 27/90* (2022.01)

(52) Cooperative Patent Classification (CPC):
**B01D 9/02; B01D 24/00; B01D 24/44; B01D 24/48;
B01D 29/00; B01D 29/01; B01D 29/25;
B01D 29/336; B01D 29/39; B01D 29/60;
B01D 29/90; B01D 29/94; B01D 35/22;
B01F 23/50; B01F 23/53;**    (Cont.)

(86) International application number:
**PCT/JP2024/030521**

(87) International publication number:
**WO 2025/047746 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 28.08.2023   JP 2023138382
28.08.2023   JP 2023138383
28.08.2023   JP 2023138384
28.08.2023   JP 2023138385

(71) Applicant: **Tsukishima Kikai Co., Ltd.
Tokyo 104-0053 (JP)**

(72) Inventors:
• **TSUZAKI, Hiroya
Tokyo 104-0053 (JP)**

• **SATO, Sumito
Tokyo 104-0053 (JP)**
• **KURITA, Shimpei
Tokyo 104-0053 (JP)**
• **OKI, Yusuke
Tokyo 104-0053 (JP)**
• **FURUKAWA, Tomohiro
Tokyo 104-0053 (JP)**
• **WATANABE, Kenji
Tokyo 104-0053 (JP)**
• **NISHIGAI, Yuki
Tokyo 104-0053 (JP)**

(74) Representative: **Dr. Weitzel & Partner
Patent- und Rechtsanwälte mbB
Friedenstrasse 10
89522 Heidenheim (DE)**

(54) **FINE PARTICLE POWDER MANUFACTURING METHOD AND MANUFACTURING DEVICE, FINE PARTICLE SLURRY WASHING AND CONCENTRATING DEVICE, FINE PARTICLE POWDER MANUFACTURING DEVICE AND MANUFACTURING METHOD, AND FINE PARTICLE SLURRY CONCENTRATING DEVICE**

(57) A fine particle powder manufacturing apparatus (1) includes a fine particle slurry manufacturing device (2) that manufactures a slurry containing fine particles having a particle diameter equal to or less than 7 μm by

**(Cont. next page)**

reacting a plurality of raw materials in a mother liquor in which a swirling flow is generated in a crystallization device (10), a slurry tank (30) that washes the slurry by adding a washing liquid while stirring the slurry, a stirring type cross-flow filtration device (6) that removes a part of the mother liquor and the washing liquid from the slurry and concentrates the slurry, a switching device (70) that switches an initial concentration process, a dilution washing process, and a final concentration process, and a drying device (8) that transfers the final concentrated slurry while mixing the slurry with a heated stirring blade and dries the slurry by conductive heat transfer.

*FIG. 1*

(52) Cooperative Patent Classification (CPC): (Cont.)
**B01F 23/57; B01F 25/10; B01F 27/112; B01F 27/1122; B01F 27/115; B01F 27/191; B01F 27/2123; B01F 27/2322; B01F 27/50; B01F 27/702; B01F 27/73; B01F 27/90; B01F 35/95; B01J 2/00; B01J 2/10; F26B 17/20; H01M 4/04; H01M 4/36; H01M 4/48; H01M 4/505; H01M 4/525;** Y02E 60/10

**Description**

Technical Field

The present invention relates to a fine particle powder manufacturing method and manufacturing apparatus, a fine particle slurry washing and concentrating apparatus, a fine particle powder manufacturing apparatus and manufacturing method, and a fine particle slurry concentrating apparatus, a fine particle powder manufacturing apparatus and manufacturing method, and relates to a method and device suitable for manufacturing, for example, a secondary battery positive electrode active material precursor.

The present application claims priority based on Japanese Patent Application No. 2023-138382, Japanese Patent Application No. 2023-138384, Japanese Patent Application No. 2023-138383, and Japanese Patent Application No. 2023-138385 filed in Japan on August 28, 2023, the contents of which are incorporated herein by reference.

Background Art

In manufacturing of a fine particle powder, for example, in manufacturing of a secondary battery positive electrode active material precursor or the like, in recent years, it has been desired to reduce the particle diameter of fine particles as much as possible in order to improve the performance of a final product, and a manufacturing method including a process of obtaining a stock solution slurry containing precipitate components mainly composed of a transition metal hydroxide by bringing a solution containing a transition metal element into contact with an alkali solution or an alkali, a process of performing washing and concentration or concentration of the precipitate components in the slurry to obtain a washed and concentrated slurry or a concentrated slurry, and a process of drying the washed and concentrated slurry or a concentrated slurry to obtain a fine particle powder is generally used.

However, in this type of fine particle powder manufacturing method, when fine particles are obtained by adjusting conditions in the process of manufacturing a stock solution slurry, filtration resistance of a cake layer formed at the time of filtration with a filter in the filtration and washing process is very large, and thus it is difficult to apply a cake filtration method such as a generally used filter press (pressure filtration).

In addition, in the filter press method, it is difficult to make the entire filter chamber have a uniform cake thickness, and when a replacement washing method of performing washing by permeating washing water through a cake layer having a non-uniform thickness is attempted to be employed, the washing water tends to permeate in a concentrated manner in a portion having a thin cake thickness, and on the other hand, since the washing water is difficult to permeate in a portion having a thick cake, it is necessary to increase the amount of washing water, but it is still inevitable that the degree of washing is uneven, and it is difficult to uniformly clean the entire cake layer.

Therefore, a method disclosed in Patent Literature 1 or Patent Literature 2 has been proposed. The methods of

Patent Literatures 1 and 2 include processes of bringing a solution containing a transition metal element into contact with an alkali solution to obtain a stock solution slurry containing precipitate components mainly composed of a transition metal hydroxide, then concentrating the precipitate components in the slurry by cross-flow filtration, and drying the obtained concentrated slurry by a hot air drying method by convection heat transfer in which hot air is blown to the concentrated slurry.

The cross-flow filtration is a method of performing filtration while causing the stock solution slurry to flow in parallel to an inner wall of the filter. Shear force of the slurry flowing in parallel with the inner wall of the filter suppresses solid content from being deposited on a surface of the filter as a cake layer, which has an advantage that a relatively high filtration speed can be maintained even when the stock solution slurry contains fine particles or an advantage that clogging hardly occurs. As the cross-flow filtration method, it is conceivable to use a cartridge-type membrane module such as a hollow fiber membrane, a tubular membrane, or a spiral membrane, a rotary filter provided with a stirring blade for stirring the surface of the filter, or the like.

Citation List

Patent Literature

Patent Literature 1: JP 2012-87039 A
Patent Literature 2: JP 2012-99470 A

Summary of Invention

Technical Problem

When fine particles of 7 μm or less are manufactured by the methods of Patent Literatures 1 and 2, a fine membrane filtration system such as a microfiltration membrane (MF membrane) or an ultrafiltration membrane (UF membrane) is necessary. However, in a cartridge-type cross-flow filtration method using a hollow fiber membrane, a tubular membrane, a spiral membrane module, or the like, a flow path through which the slurry flows in the module is narrow, and thus the slurry concentration cannot be increased in the concentration process.

Further, even if fine particles of 7 μm or less can be manufactured, the washing and concentration process by cross-flow filtration is performed at a low slurry concentration that does not cause clogging of the flow path, and then the process of drying by a hot air drying method by convection heat transfer in which hot air is blown is performed. As a result, there is a problem that the amount of washing liquid in the washing process increases, energy cost in the drying process increases, and it is difficult to improve manufacturing efficiency.

In the filtration and washing operations in the methods of Patent Literatures 1 and 2, it is a problem to reduce the amount of washing water or the amount of washing wastewater to be used in consideration of reduction of running cost.

In the methods of Patent Literatures 1 and 2, in consideration of filtration and washing operations, it is preferable to perform concentration operations so that the concentration of the slurry in the system is as high as possible. However, when the slurry is excessively concentrated, the fluidity of the slurry circulating in the system becomes poor, and the slurry cannot be transferred by a pump or the like, which causes a problem of clogging.

Therefore, Patent Literature 1 proposes a method of controlling the concentration state of the slurry circulating in the system by monitoring the current value and the torque of the motor that drives a rotary blade of a rotary type cross-flow filtration device. However, there is no linear relationship between the viscosity of the slurry circulating in the system and a current value and torque of the motor that drives the rotary blade, and particularly when the slurry has a high concentration, the current value and torque may change unstably and rapidly with a slight concentration difference, and thus it is difficult to stably control the high concentration state with the current value and torque of the motor.

In the processes of drying the concentrated slurry in the methods of Patent Literatures 1 and 2, particularly drying by a hot air drying method by convection heat transfer causes a large amount of heat to be exhausted, and there is a problem in improving energy efficiency in consideration of running cost and reduction in environmental load.

Solution to Problem

The present invention has been made in view of the above problems, and an object thereof is to provide a fine particle powder manufacturing apparatus and manufacturing method capable of manufacturing a fine particle powder of 7 μm or less in a process of manufacturing a stock solution slurry, suppressing energy cost, and improving manufacturing efficiency.

The present invention has been made in view of the above problems, and an object thereof is to provide a fine particle slurry washing and concentrating apparatus and an apparatus and a method capable of stably manufacturing a fine particle powder, which can reduce the amount of washing water to be used or the amount of washing wastewater.

The present invention has been made in view of the above problems, and an object thereof is to provide a fine particle slurry concentrating apparatus, a fine particle powder manufacturing apparatus, and a fine particle powder manufacturing method capable of stably concentrating a fine particle slurry even in a high concentration region.

The present invention has been made in view of the above problems, and an object thereof is to provide an apparatus and a method capable of stably manufacturing a fine particle powder while improving energy efficiency in a process of drying a concentrated slurry.

A fine particle powder manufacturing method according to Aspect 1 of the present invention includes a fine particle slurry manufacturing process of manufacturing a fine particle slurry containing fine particles having a particle diameter equal to or less than 7 μm by reacting a plurality of raw materials in a mother liquor in which a swirling flow is generated in a reaction processor, an initial concentration process of supplying the fine particle slurry to filtration equipment in which a slurry tank and a stirring type cross-flow filtration device are arranged on a circulation path, and initially concentrating the fine particle slurry while circulating the fine particle slurry in the filtration equipment to obtain an initially concentrated slurry, a dilution washing process of obtaining a washed slurry by performing filtration in the stirring type cross-flow filtration device while supplying a washing liquid to the initially concentrated slurry in the slurry tank, a final concentration process of filtering the washed slurry in the stirring type cross-flow filtration device to perform final concentration to obtain a final concentrated slurry, and a drying process of supplying the final concentrated slurry to a drying device, transferring the final concentrated slurry while stirring the final concentrated slurry with a heated stirring blade, and drying the final concentrated slurry by conductive heat transfer to obtain a fine particle powder, in which the stirring type cross-flow filtration device includes a slurry chamber and a filtrate chamber separated by a filter, a stirring body disposed in the slurry chamber along the filter, and a drive unit that moves the stirring body along the filter to prevent deposition of fine particles on a surface of the filter, and performs filtration by supplying the fine particle slurry or the initially concentrated slurry or the washed slurry supplied from the slurry tank to the slurry chamber.

By the fine particle powder manufacturing method of Aspect 1, in the fine particle slurry manufacturing process, a plurality of raw materials is reacted in a mother liquor in which a swirling flow is generated in a reaction processor to manufacture a fine particle slurry containing fine particles having a particle diameter equal to or less than 7 $\mu$m, and in the initial concentration process, an initially concentrated slurry is obtained while circulating the fine particle slurry in the filtration equipment. Next, in the dilution washing process, filtration is performed in the stirring type cross-flow filtration device while supplying a washing liquid to the initially concentrated slurry in the slurry tank to obtain a washed slurry, and then in the final concentration process, the washed slurry is filtered by the stirring type cross-flow filtration device to obtain a final concentrated slurry. Furthermore, in the drying process, the final concentrated slurry is supplied to a drying device, and the final concentrated slurry is transferred while being stirred by a heated stirring blade and dried by conductive heat transfer to obtain a fine particle powder. Therefore, it is possible to manufacture fine particles of 7 $\mu$m or less by suppressing the growth of the particles during the reaction of the raw material by the swirling flow, and then to efficiently perform the advanced concentration using the washing and stirring type cross-flow filtration device by the initial concentration process, the dilution washing process, and the final concentration process without causing clogging of the filter and the flow path, and further, in the drying process, the final concentrated slurry is brought into contact with the heated stirring blade to perform heating by conductive heat transfer, so that it is possible to manufacture fine particles of 7 $\mu$m or less with high manufacturing efficiency while suppressing the energy cost.

In the fine particle powder manufacturing method according to Aspect 2 of the present invention, in Aspect 1, the fine particle powder is a positive electrode material precursor for a secondary battery, and in the fine particle slurry manufacturing process, a solution containing a transition metal element as a first raw material is reacted with an alkali solution as a second raw material to obtain fine particles containing a transition metal hydroxide as a main component.

By the fine particle powder manufacturing method of Aspect 2, in the fine particle slurry manufacturing process, a solution containing a transition metal element as a first raw material is reacted with an alkali solution as a second raw material to obtain fine particles containing a transition metal hydroxide as a main component, whereby the fine particle powder as a positive electrode material precursor for a secondary battery can be manufactured with high manufacturing efficiency while suppressing energy cost.

In the fine particle powder manufacturing method according to Aspect 3 of the present invention, in Aspect 1 or 2, in the initial concentration process, the fine particle slurry obtained in the fine particle slurry manufacturing process is filtered by the stirring type cross-flow filtration device and concentrated until a solid content concentration becomes 35 to 65 wt% to obtain the initially concentrated slurry.

By the fine particle powder manufacturing method of Aspect 3, in the initial concentration process, the fine particle slurry is filtered by the stirring type cross-flow filtration device and concentrated until the solid content concentration becomes 35 to 65 wt% to obtain the initially concentrated slurry, whereby problems such as filter clogging by fine particles do not occur, removal efficiency of impurities from the fine particle slurry is high, the amount of washing liquid and the washing time consumed in the dilution washing process can be reduced, the energy cost is suppressed, and the manufacturing efficiency is increased.

In the fine particle powder manufacturing method according to Aspect 4 of the present invention, in any one of Aspects 1 to 3, in the final concentration process, the washed slurry is concentrated by the stirring type cross-flow filtration device until a solid content concentration becomes 50 to 65 wt% to obtain the final concentrated slurry.

By the fine particle powder manufacturing method according to Aspect 4, since the final concentrated slurry is concentrated until the solid content concentration becomes 50 to 65 wt% in the final concentration process, the amount of liquid to be removed in the drying process is reduced while the problem of filter clogging by fine particles is solved, and the energy cost is suppressed and the manufacturing efficiency is enhanced.

In the fine particle powder manufacturing method according to Aspect 5 of the present invention, in any one of Aspects 1 to 4, in the fine particle slurry manufacturing process, a reaction liquid containing the mother liquor and the raw material in the reaction processor is once discharged to an outside, the discharged reaction liquid is returned into the reaction processor to form a circulation system of the reaction liquid, a swirling flow is generated in the reaction processor by an inflow force of the reaction liquid, and the fine particle slurry containing fine particles crystallized by a reaction of the raw material is manufactured from the circulation system of the reaction liquid.

By the fine particle powder manufacturing method of Aspect 5, it is easy to generate a high-speed swirling flow with simple equipment, fine particles having a particle diameter equal to or less than 7 $\mu$m, preferably equal to or less than 5 $\mu$m can be precipitated by uniformly mixing raw materials in a high-speed swirling flow in a short time, and the particle diameter of the finally obtained fine particle powder can be reduced and the particle diameter distribution can be narrowed.

In a fine particle powder manufacturing method according to Aspect 6 of the present invention, in any one of Aspects 1 to 5, the drying process is a process of drying the final concentrated slurry for which the final concentration process has been completed by a stirring heat transfer device, the stirring heat transfer device including a casing having an inflow port formed at one end and an outflow hole formed at another end, a plurality of rotation shafts rotatable about respective axes in the casing and arranged so that the axes are parallel to each other, stirring blades fixed to each of the rotation shafts at an interval in an axial direction so that respective stirring blades of the rotation shafts partially overlap each other as viewed in the axial direction, and a heating mechanism that heats the stirring blades, the heated stirring blades mix the final concentrated slurry supplied from the inflow port and a wet powder held in the casing and transfer the mixed slurry to the outflow hole by rotating the rotation shafts, and a mixture of the final concentrated slurry and the wet powder is dried by conductive heat transfer during the transfer to convert the mixture into a fine particle powder.

By the fine particle powder manufacturing method of Aspect 6, as the stirring blades fixed to each of the rotation shafts at an interval in the axial direction so that respective stirring blades of the rotation shafts partially overlap each other as viewed in the axial direction rotates, the heated stirring blades transfer the final concentrated slurry supplied from the inflow port and the wet powder held in advance in the casing to the discharge port while mixing the final concentrated slurry and the wet powder, and during the transfer, the high-temperature stirring blades come into contact with the mixture of the final concentrated slurry and the wet powder and dry them by conductive heat transfer to convert them into a fine particle powder. Therefore, the mixture of the final concentrated slurry and the wet powder can be heated by conductive heat transfer due to contact with the heated stirring blades, and the thermal efficiency is higher than that in the case of using hot air or the like, the energy cost is suppressed, and the manufacturing efficiency is enhanced.

A fine particle powder manufacturing apparatus according to Aspect 7 of the present invention includes a fine particle slurry manufacturing device that manufactures a fine particle slurry containing fine particles having a particle diameter equal to or less than 7 $\mu$m by reacting a plurality of raw materials in a mother liquor in which a swirling flow is generated in a reaction processor, filtration equipment in which a slurry tank and a stirring type cross-flow filtration device are arranged on a circulation path, a washing liquid supply device for supplying a washing liquid into the slurry tank, a switching device for switching among (a) an initial concentration process of performing initial concentration while circulating the fine particle slurry in the filtration equipment to obtain an initially concentrated slurry, (b) a dilution washing process of filtering the initially concentrated slurry in the stirring type cross-flow filtration device while supplying a washing liquid from the washing liquid supply device to the initially concentrated slurry in the slurry tank, to obtain a washed slurry, and (c) a final concentration process of filtering the washed slurry in the stirring type cross-flow filtration device to perform final concentration to obtain a final concentrated slurry, and a drying device that transfers the final concentrated slurry while stirring the final concentrated slurry with a heated stirring blade and dries the final concentrated slurry by conductive heat transfer to obtain a fine particle powder, in which the stirring type cross-flow filtration device includes a slurry chamber and a filtrate chamber separated by a filter, a stirring body disposed in the slurry chamber along the filter, and a drive unit that moves the stirring body along the filter to prevent deposition of fine particles on a surface of the filter, and performs filtration by supplying the fine particle slurry or the initially concentrated slurry or the washed slurry supplied from the slurry tank to the slurry chamber.

By the fine particle powder manufacturing apparatus of Aspect 7, the fine particle slurry manufacturing device manufactures a fine particle slurry containing fine particles having a particle diameter equal to or less than 7 $\mu$m by reacting a plurality of raw materials in a mother liquor in which a swirling flow is generated in the reaction processor. Next, by using filtration equipment in which a slurry tank and a stirring type cross-flow filtration device are arranged on a circulation path, and by sequentially switching the processes by the switching device, (a) in the initial concentration process, an initially concentrated slurry is obtained while circulating the fine particle slurry in the filtration equipment, (b) in the dilution washing process, a washed slurry is obtained by filtering by the stirring type cross-flow filtration device while supplying a washing liquid from the washing liquid supply device to the initially concentrated slurry in the slurry tank, and (c) in the final concentration process, the washed slurry is filtered by the stirring type cross-flow filtration device to obtain a final concentrated slurry. Further, the final concentrated slurry is transferred by a drying device while being stirred by the heated stirring blades and dried by conductive heat transfer to obtain a fine particle powder. Therefore, it is possible to manufacture fine particles of 7 $\mu$m or less by suppressing growth of particles during the reaction of the raw materials by the swirling flow, and then it is possible to efficiently perform advanced concentration using a washing and stirring type cross-flow filtration device by the initial concentration process, the dilution washing process, and the final concentration process without causing clogging of the filter or the flow path. Furthermore, in the drying process, the final concentrated slurry is brought into contact with the heated stirring blade to be heated by conductive heat transfer, so that fine particles of 7 $\mu$m or less can be manufactured with high efficiency while suppressing energy cost.

A fine particle slurry washing and concentrating apparatus according to Aspect 8 of the present invention includes a slurry tank that stores a fine particle slurry containing fine particles having a particle diameter equal to or less than 7 $\mu$m, a flow path that supplies the stored fine particle slurry to a stirring type cross-flow filtration device, a return flow path that returns filtrate discharged from the stirring type cross-flow filtration device to the slurry tank, a waste flow path that discards the filtrate discharged from the stirring type cross-flow filtration device, a filtrate sensor including at least one of a conductivity sensor that measures conductivity of the filtrate discharged from the stirring type cross-flow filtration device or a density sensor that measures density of the filtrate, a flow path switching device that switches a flow path of the filtrate discharged from the stirring type cross-flow filtration device between flowing to the return flow path and flowing to the waste flow path, and a control unit that controls the flow path switching device so as to cause the filtrate to flow into the waste flow path when a measurement result of the filtrate sensor is equal to or more than a threshold, and to cause the filtrate to flow into the return flow path when the measurement result of the filtrate sensor is less than the threshold.

By the fine particle slurry washing and concentrating apparatus of Aspect 8, when the conductivity or density of the filtrate discharged from the stirring type cross-flow filtration device is smaller than the threshold, the filtrate is reused as a washing liquid, so that the amount of washing water or the amount of washing wastewater used in the fine particle slurry washing and concentrating apparatus can be reduced.

In the fine particle slurry washing and concentrating apparatus according to Aspect 9 of the present invention, in Aspect 8, the filtrate sensor is a conductivity sensor, and the threshold is set to a value in a range equal to or less than 10 [mS/cm].

By the fine particle slurry washing and concentrating apparatus of Aspect 9, the filtrate sensor is a conductivity sensor, and the amount of washing water or the amount of washing wastewater used in the fine particle slurry washing and concentrating apparatus can be reduced by setting the threshold to a value in a range equal to or less than 10 [mS/cm].

In the fine particle slurry washing and concentrating apparatus according to Aspect 10 of the present invention, in Aspect 8 or 9, the filtrate sensor is provided on a downstream side of the stirring type cross-flow filtration device and on an upstream side of the flow path switching device.

By the fine particle slurry concentrating apparatus of Aspect 10, since the filtrate sensor is provided on the downstream side of the stirring type cross-flow filtration device and on the upstream side of the flow path switching device, it is possible to appropriately determine whether to discard or reuse the filtrate discharged from the stirring type cross-flow filtration device and to reduce the amount of washing water or the amount of washing wastewater used in the fine particle slurry washing and concentrating apparatus.

In a fine particle slurry washing and concentrating apparatus according to Aspect 11 of the present invention, in any one of Aspects 8 to 10, the fine particles are a positive electrode material precursor for a secondary battery.

The fine particle slurry washing and concentrating apparatus according to Aspect 11 can stably manufacture a fine particle slurry as a positive electrode material precursor for a secondary battery while reducing the amount of washing water or the amount of washing wastewater to be used.

A fine particle powder manufacturing apparatus according to Aspect 12 of the present invention includes a drier of a conductive heat transfer type that dries the fine particle slurry supplied from the fine particle slurry washing and concentrating apparatus according to Aspect 8, in which the drier includes a stirring heat transfer device, and the stirring heat transfer device includes a casing having an inflow port formed at one end and an outflow hole formed at another end, a plurality of rotation shafts rotatable about respective axes in the casing and arranged so that the axes are parallel to each other, stirring blades fixed to each of the rotation shafts at an interval in an axial direction so that respective stirring blades of the rotation shafts partially overlap each other as viewed in the axial direction, and a heating mechanism that heats the stirring blades, and by rotating the rotation shafts, the heated stirring blades transfer the concentrated slurry supplied from the inflow port to the outflow hole while heating the concentrated slurry, and during the transfer, the concentrated slurry is dried and converted into a fine particle powder.

By the fine particle powder manufacturing apparatus of Aspect 12, since the fine particle slurry washing and concentrating apparatus capable of reducing the amount of washing water or the amount of washing wastewater used in an apparatus for manufacturing a fine particle slurry and the drier capable of stably manufacturing a fine particle powder by drying the fine particle slurry by conductive heat transfer excellent in thermal efficiency are used in combination, the environmental load can be reduced.

A fine particle powder manufacturing method according to Aspect 13 of the present invention includes a dilution washing filtration process of filtering a slurry obtained by adding a washing liquid to a slurry containing fine particles having a particle diameter equal to or less than 7 μm and a mother liquor by a stirring type cross-flow filtration device to obtain a washed slurry, and a concentration process of concentrating the washed slurry by the stirring type cross-flow filtration device to obtain a concentrated slurry, a flow path switching process of measuring conductivity or density of a filtrate discharged from the stirring type cross-flow filtration device, discarding the filtrate when the conductivity or density is equal to or higher than a threshold, and reusing the filtrate as the washing liquid when the conductivity or density is lower than the threshold, and a drying process of heating and drying the concentrated slurry to obtain a fine particle powder.

By the fine particle powder manufacturing method of Aspect 13, by measuring the conductivity or density of a filtrate discharged from the stirring type cross-flow filtration device, discarding the filtrate when the conductivity or density of the filtrate is equal to or more than a threshold, and reusing the filtrate when the conductivity or density of the filtrate is lower than the threshold, the fine particle powder can be stably manufactured while reducing the amount of washing water or the amount of washing wastewater used in the fine particle powder manufacturing apparatus.

A fine particle slurry concentrating apparatus according to Aspect 14 of the present invention includes a slurry tank that stores a fine particle slurry, a washing liquid supply device that supplies a washing liquid to the slurry tank, a stirring type cross-flow filtration device for concentrating the fine particle slurry, a first flow path for supplying the fine particle slurry stored in the slurry tank to the stirring type cross-flow filtration device, a second flow path that returns a concentrated slurry discharged from the stirring type cross-flow filtration device to the slurry tank, a density sensor that generates a signal corresponding to a density of the concentrated slurry discharged from the stirring type cross-flow filtration device, and a control device that controls a supply amount of the washing liquid to the slurry tank by the washing liquid supply device based on the output of the density sensor.

With the fine particle slurry concentrating apparatus of Aspect 14, while the fine particle slurry stored in the slurry tank is supplied to the stirring type cross-flow filtration device through the first flow path and concentrated, the concentrated slurry discharged from the stirring type cross-flow filtration device is returned to the slurry tank through the second flow path as necessary. In the process, the density of the concentrated slurry discharged from the stirring type cross-flow filtration device is measured by the density sensor, and the amount of the washing liquid supplied to the slurry tank by the washing liquid supply device is controlled based on the output of the density sensor. Therefore, as compared with a means for monitoring the stirring torque of the slurry, the viscosity change of the slurry can be correctly grasped even in the high concentration region by using the density sensor, the viscosity can be controlled with high accuracy, and the fine particle slurry can be stably concentrated even in the high concentration region while clogging of the flow path is suppressed.

A fine particle slurry concentrating apparatus according to Aspect 15 of the present invention includes, in Aspect 14, a conductivity sensor that generates a signal corresponding to conductivity of a filtrate discharged from the stirring type cross-flow filtration device, in which the control device switches or instructs a timing of switching from an initial concentration process (A) to a dilution washing process (B) or from a final concentration process (C) to a discharge process (D) based on the output of the density sensor, and switches or instructs a timing of switching from the dilution washing process (B) to the final concentration process (C) based on the output of the density sensor and an output of the conductivity sensor,

(A) the initial concentration process including supplying the fine particle slurry stored in the slurry tank to the stirring type cross-flow filtration device through the first flow path, and returning the concentrated slurry discharged from the stirring type cross-flow filtration device to the slurry tank through the second flow path, thereby separating a mother liquor in the fine particle slurry to obtain an initially concentrated slurry,

(B) the dilution washing process including supplying a washing liquid to the slurry tank by the washing liquid supply device, supplying the initially concentrated slurry stored in the slurry tank to the stirring type cross-flow filtration device through the first flow path, and returning the concentrated slurry discharged from the stirring type cross-flow filtration device to the slurry tank through the second flow path, thereby diluting and washing the initially concentrated slurry to obtain a washed slurry,

(C) the final concentration process including stopping the supply of the washing liquid to the slurry tank by the washing liquid supply device, supplying a washed slurry stored in the slurry tank to the stirring type cross-flow filtration device through the first flow path, and returning the concentrated slurry discharged from the stirring type cross-flow filtration device to the slurry tank through the second flow path, thereby separating a washing liquid in the washed slurry to obtain a final concentrated slurry, and

(D) the discharge process including discharging the final concentrated slurry from the stirring type cross-flow filtration device.

By the fine particle slurry concentrating apparatus of Aspect 15, the slurry can be stably concentrated even in a high concentration region while switching among the initial concentration process (A) of obtaining an initially concentrated slurry, the dilution washing process (B) of diluting and washing the initially concentrated slurry to obtain a washed slurry, the final concentration process (C) of concentrating the washed slurry to obtain a final concentrated slurry, and a discharge process (D) of discharging the final concentrated slurry, based on an output of the density sensor or based on an output of the density sensor and an output of the conductivity sensor.

A fine particle slurry concentrating apparatus according to Aspect 16 of the present invention includes, in Aspect 14, a second density sensor that generates a signal corresponding to a density of a filtrate discharged from the stirring type cross-flow filtration device, in which

the control device switches or instructs a timing of switching from an initial concentration process (A) to a dilution washing process (B), from the dilution washing process (B) to a final concentration process (C), or from the final concentration process (C) to a discharge process (D) based on outputs of the density sensor and the second density sensor,

(A) the initial concentration process including supplying the fine particle slurry stored in the slurry tank to the stirring type cross-flow filtration device through the first flow path, and returning the concentrated slurry discharged from the stirring type cross-flow filtration device to the slurry tank through the second flow path, thereby separating a mother liquor in the fine particle slurry to obtain an initially concentrated slurry,

(B) the dilution washing process including supplying a washing liquid to the slurry tank by the washing liquid supply device, supplying the initially concentrated slurry stored in the slurry tank to the stirring type cross-flow filtration device through the first flow path, and returning the concentrated slurry discharged from the stirring type cross-flow filtration device to the slurry tank through the second flow path, thereby diluting and washing the initially concentrated slurry to obtain a washed slurry,

(C) the final concentration process including stopping the supply of the washing liquid to the slurry tank by the washing liquid supply device, supplying a washed slurry stored in the slurry tank to the stirring type cross-flow filtration device through the first flow path, and returning the concentrated slurry discharged from the stirring type cross-flow filtration device to the slurry tank through the second flow path, thereby separating a washing liquid in the washed slurry to obtain a final concentrated slurry, and

(D) the discharge process including discharging the final concentrated slurry from the stirring type cross-flow filtration device.

By the fine particle slurry concentrating apparatus of Aspect 16, the slurry can be stably concentrated even in a high concentration region while switching among the initial concentration process (A) of obtaining an initially concentrated slurry, the dilution washing process (B) of diluting and washing the initially concentrated slurry to obtain a washed slurry, the final concentration process (C) of concentrating the washed slurry to obtain a concentrated slurry, and the discharge process (D) of discharging the final concentrated slurry, based on outputs of the density sensor and the second density sensor.

In a fine particle slurry concentrating apparatus according to Aspect 17 of the present invention, in Aspect 15 or 16, in the dilution washing process, the control device decreases or stops the supply of the washing liquid by the washing liquid supply device when a density of the concentrated slurry is lower than a lower limit value of a target density range, and performs feedback control by increasing a supply amount or starting supply of the washing liquid in the washing liquid supply device when the density of the concentrated slurry is higher than an upper limit value of the target density range, based on an output of the density sensor.

By the fine particle slurry concentrating apparatus of Aspect 17, by feedback-controlling the supply amount of the washing liquid based on the output of the density sensor, the slurry can be stably concentrated even in a high concentration range while maintaining the density of the concentrated slurry discharged from the stirring type cross-flow filtration device within a certain range.

In a fine particle slurry concentrating apparatus according to Aspect 18 of the present invention, in Aspect 15 or 17, in the initial concentration process (A), the control device compares an output of the density sensor with a slurry density corresponding to a predetermined value in a range of a solid content concentration of the concentrated slurry of 35 to 65 wt%, and at a time point when the density sensor reaches the slurry density corresponding to the predetermined value, the control device switches to the dilution washing process (B) or instructs a timing to switch to the dilution washing process (B).

By the fine particle slurry concentrating apparatus of Aspect 18, with the function of the control device, in the initial concentration process (A), it is possible to switch to the dilution washing process (B) at a time point when the solid content concentration of the concentrated slurry reaches a predetermined value within a range of 35 to 65 wt% based on the output of the density sensor, and it is possible to smoothly transition from the initial concentration process (A) to the dilution washing process (B) at an appropriate timing, and to enhance the washing efficiency.

In a fine particle slurry concentrating apparatus according to Aspect 19 of the present invention, in Aspect 16, in the initial concentration process (A), the control device switches to the dilution washing process (B) or instructs a timing to switch to the dilution washing process (B) at a time point when the solid content concentration of the concentrated slurry reaches a predetermined value within a range of 35 to 65 wt% based on outputs of the density sensor and the second density sensor.

By the fine particle slurry concentrating apparatus of Aspect 19, by the function of the control device, in the initial concentration process (A), it is possible to switch to the dilution washing process (B) at a time point when the solid content concentration of the concentrated slurry reaches a predetermined value within a range of 35 to 65 wt% based on the outputs of the density sensor and the second density sensor, and it is possible to smoothly transition from the initial concentration process (A) to the dilution washing process (B) at an appropriate timing, and to enhance the washing efficiency.

A fine particle slurry concentrating apparatus according to Aspect 20 of the present invention is the fine particle slurry concentrating apparatus according to any one of Aspects 15, 17, and 18, in which in the final concentration process, the control device compares an output of the density sensor with a slurry density corresponding to a predetermined value in a range of a solid content concentration of the concentrated slurry of 50 to 65 wt%, and shifts to the discharge process (D) at a time point when the density sensor reaches the slurry density corresponding to the predetermined value.

By the fine particle slurry concentrating apparatus of Aspect 20, in the final concentration process (C), it is possible to stop returning the concentrated slurry to the slurry tank and to shift to the discharge process (D) and to smoothly shift from the final concentration process (C) to the discharge process (D) at an appropriate timing when the solid content concentration of the concentrated slurry reaches a predetermined value in a range of 50 to 65 wt% based on the output of the density sensor by the operation of the control device. In addition, the amount of moisture removed in the drying process after the discharge process (D) can be reduced as much as possible, and the energy cost required for drying can also be suppressed.

A fine particle slurry concentrating apparatus according to Aspect 21 of the present invention is the fine particle slurry concentrating apparatus according to any one of Aspects 16, 17, and 19, in the final concentration process (C), the control device shifts to the discharge process (D) at a time point when a solid content concentration of the concentrated slurry reaches a predetermined value within a range of 50 to 65 wt% based on outputs of the density sensor and the second density sensor.

By the fine particle slurry concentrating apparatus of Aspect 21, in the final concentration process (C), it is possible to stop returning the concentrated slurry to the slurry tank and to shift to the discharge process (D) and to smoothly shift from the final concentration process (C) to the discharge process (D) at an appropriate timing when the solid content concentration of the concentrated slurry reaches a predetermined value in a range of 50 to 65 wt% based on the outputs of the density sensor and the second density sensor by the function of the control device. In addition, the amount of moisture removed in the drying process after the discharge process (D) can be reduced as much as possible, and the energy cost required for drying can also be suppressed.

In a fine particle slurry concentrating apparatus according to Aspect 22 of the present invention, in any one of Aspects 14 to 21, the density sensor is a vibration type in-line density sensor including a vibrator in contact with the concentrated slurry, and a controller that vibrates the vibrator and measures a resonance frequency of the vibrator.

Furthermore, in any one of Aspects 16, 19, and 21, the second density sensor may be a vibration type in-line density sensor including a vibrator in contact with the concentrated slurry, and a controller that vibrates the vibrator and measures a resonance frequency of the vibrator.

By the fine particle slurry concentrating apparatus of Aspect 22, the vibrator in contact with the concentrated slurry is vibrated by the vibration type density sensor, and the resonance frequency thereof is measured as a function of the density of the concentrated slurry, and thus even if the concentrated slurry has a high concentration and high viscosity, the density of the concentrated slurry can be measured with high accuracy without delay, whereby the fine particle slurry can be stably concentrated even in a high concentration region while clogging by the concentrated slurry is prevented. The same applies to a case where the second density sensor is a vibration type in-line density sensor.

In a fine particle slurry concentrating apparatus according to Aspect 23 of the present invention, in any one of Aspects 14 to 22, the stirring type cross-flow filtration device includes a slurry chamber and a filtrate chamber separated by a filter, a stirring body disposed in the slurry chamber along the filter, and a drive unit that moves the stirring body along the filter to prevent fine particle deposition on a surface of the filter, and concentrates the fine particle slurry passing through the slurry chamber.

By the fine particle slurry concentrating apparatus of Aspect 23, it is possible to manufacture a concentrated slurry in a high concentration region by the stirring type cross-flow filtration device having the above-described configuration, and it is possible to increase the manufacturing efficiency in the initial concentration process, the dilution washing process, the final concentration process, and the drying process and to suppress the energy cost while preventing clogging of the high concentration slurry.

In a fine particle slurry concentrating apparatus according to Aspect 24 of the present invention, in any one of Aspects 14 to 23, the fine particles are a positive electrode material precursor for a secondary battery.

By the fine particle slurry concentrating apparatus of Aspect 24, even when the average particle diameter of the fine particles is extremely small, for example, equal to or less than 7 $\mu$m, the fine particle slurry can be stably concentrated even in a high concentration region, and a positive electrode material precursor for a secondary battery having a small average particle diameter can be stably obtained.

A fine particle powder manufacturing apparatus according to Aspect 25 of the present invention includes a fine particle slurry concentrating apparatus according to any one of Aspects 14 to 24, and a stirring heat transfer drying device that dries a concentrated slurry supplied from the fine particle slurry concentrating apparatus, the stirring heat transfer drying device includes a casing having an inflow port formed at one end and an outflow hole formed at another end, a plurality of rotation shafts rotatable about respective axes in the casing and arranged so that the axes are parallel to each other, stirring blades fixed to each of the rotation shafts at an interval in an axial direction so that respective stirring blades of the rotation shafts partially overlap each other as viewed in the axial direction, and a heating mechanism that heats the stirring blades, and by rotating the rotation shafts, the heated stirring blades transfer the concentrated slurry supplied from the inflow port to the outflow hole while heating the concentrated slurry, and during the transfer, the concentrated slurry is dried and converted into a fine particle powder.

By the fine particle powder manufacturing apparatus according to Aspect 25, even when the average particle diameter of the fine particles is extremely small, for example, equal to or less than 7 $\mu$m, the fine particle slurry can be stably concentrated even in a high concentration region, and a fine particle powder having a small average particle diameter can be stably manufactured. In the stirring heat transfer drying device, the heated stirring blade comes into contact with the slurry while rotating to evaporate moisture by conductive heat transfer, so that energy cost can be reduced.

A fine particle powder manufacturing method according to Aspect 26 of the present invention includes a dilution washing filtration process of filtering a slurry obtained by adding a washing liquid to a slurry containing fine particles having a particle diameter equal to or less than 7 $\mu$m and a mother liquor by a stirring type cross-flow filtration device to obtain a washed slurry, a concentration process of concentrating the washed slurry by the stirring type cross-flow filtration device to obtain a concentrated slurry, and a drying process of heating and drying the concentrated slurry to obtain a fine particle powder, in which in the dilution washing filtration process, a density of the washed slurry is measured by a density sensor, and when the density of the washed slurry measured by the density sensor is lower than a lower limit value of a target range, a supply amount of the washing liquid in the dilution washing filtration process is decreased or the supply is stopped, and when the density of the washed slurry measured by the density sensor is higher than an upper limit value of the target range, the supply amount of the washing liquid in the dilution washing filtration process is increased or the supply is started to perform feedback control.

By the fine particle powder manufacturing method according to Aspect 26, although the average particle diameter of the fine particles is as extremely small as 7 μm or less, the viscosity change of the slurry can be correctly grasped even in a high concentration region by using the density sensor as compared with a means for monitoring the stirring torque of the slurry, the fine particles can be stably concentrated even in a high concentration region while suppressing clogging, and a fine particle powder having a small average particle diameter can be stably manufactured.

A fine particle powder manufacturing apparatus according to Aspect 27 of the present invention includes a fine particle slurry concentrating apparatus including a slurry tank that stores a fine particle slurry, a washing liquid supply device that supplies a washing liquid to the slurry tank, a stirring type cross-flow filtration device for concentrating the fine particle slurry, a first flow path for supplying the fine particle slurry stored in the slurry tank to the stirring type cross-flow filtration device, and a second flow path that returns a concentrated slurry discharged from the stirring type cross-flow filtration device to the slurry tank, and a stirring heat transfer drying device that dries the concentrated slurry supplied from the fine particle slurry concentrating apparatus, in which the stirring heat transfer drying device includes a casing having an inflow port formed at one end and an outflow hole formed at another end, a plurality of rotation shafts rotatable about respective axes in the casing and arranged so that the axes are parallel to each other, stirring blades fixed to each of the rotation shafts at an interval in an axial direction so that respective stirring blades of the rotation shafts partially overlap each other as viewed in the axial direction, and a heating mechanism that heats the stirring blades, and by rotating the rotation shafts, the heated stirring blades transfer the concentrated slurry supplied from the inflow port to the outflow hole while heating the concentrated slurry, and during the transfer, the concentrated slurry is dried and converted into a fine particle powder.

By the fine particle powder manufacturing apparatus of Aspect 27, since the concentrated slurry is dried by conductive heat transfer excellent in thermal efficiency using the stirring heat transfer drying device, the fine particle powder can be stably manufactured while improving energy efficiency.

In a fine particle powder manufacturing apparatus according to Aspect 28 of the present invention, in Aspect 27, the rotation shaft is rotated to mix the concentrated slurry supplied from the inflow port by the heated stirring blades with a wet powder held in the casing, transfer the concentrated slurry to the outflow hole while heating, and dry the concentrated slurry during the transfer to convert the concentrated slurry into a fine particle powder.

By the fine particle powder manufacturing apparatus of Aspect 28, since the concentrated slurry is mixed with the wet powder held in the casing and heated, abnormal adhesion that hinders the function of the stirring heat transfer drying device is avoided, and the mixture is easily transferred in the casing.

In a fine particle powder manufacturing apparatus according to Aspect 29 of the present invention, in either Aspect 27 or 28, in each of two adjacent rotation shafts among the rotation shafts, the stirring blades forming a pair are fixed at positions rotationally symmetric about the rotation axis by 180°, in each of the rotation shafts, the stirring blades are inclined in opposite directions with respect to the rotation shaft and twisted along a virtual spiral plane around the rotation shaft, and two adjacent rotation shafts of the rotation shafts rotate in opposite directions.

By the fine particle powder manufacturing apparatus in Aspect 29, every time the rotation shaft rotates by 180°, the locus of the stirring blade swings in the axial direction within a certain angle range, so that the final concentrated slurry and the wet powder can be mixed while preventing the final concentrated slurry and the wet powder from adhering to the stirring blade between the stirring blades adjacent in the axial direction. In addition, since the stirring blade has a twist along the virtual spiral plane around the rotation shaft, the mixture of the final concentrated slurry and the wet powder can be gradually transferred from the upstream side to the downstream side of the casing as the rotation shaft rotates.

In a fine particle powder manufacturing apparatus according to Aspect 30 of the present invention, in any one of Aspects 27 to 29, the fine particle powder is a positive electrode material precursor for a secondary battery.

By the fine particle powder manufacturing apparatus according to Aspect 30, the positive electrode material precursor for a secondary battery can be stably manufactured while improving energy efficiency in drying the concentrated slurry.

A fine particle powder manufacturing method according to Aspect 31 of the present invention includes a fine particle slurry concentrating apparatus including a slurry tank that stores a fine particle slurry, a washing liquid supply device that supplies a washing liquid to the slurry tank, a stirring type cross-flow filtration device for concentrating the fine particle slurry, a first flow path for supplying the fine particle slurry stored in the slurry tank to the stirring type cross-flow filtration device, and a second flow path that returns a concentrated slurry discharged from the stirring type cross-flow filtration device to the slurry tank, and a stirring heat transfer drying device that dries the concentrated slurry supplied from the fine particle slurry concentrating apparatus, in which the stirring heat transfer drying device includes a casing having an inflow port formed at one end and an outflow hole formed at another end, a plurality of rotation shafts rotatable about respective axes in the casing and arranged so that the axes are parallel to each other, stirring blades fixed to each of the rotation shafts at an interval in an axial direction so that respective stirring blades of the rotation shafts partially overlap each other as viewed in the axial direction, and a heating mechanism that heats the stirring blades, and by rotating the rotation shafts, the heated stirring blades transfer the concentrated slurry supplied from the inflow port to the outflow hole while heating the concentrated slurry, and during the transfer, the concentrated slurry is dried and converted into a fine particle powder.

By the fine particle powder manufacturing method of Aspect 31, the fine particle powder can be stably manufactured while improving energy efficiency in the process of drying the concentrated slurry by heating and drying the concentrated slurry with conductive heat transfer excellent in thermal efficiency.

Advantageous Effects of Invention

As described above, by a fine particle powder manufacturing method and manufacturing apparatus of the present invention, fine particles of 7 $\mu$m or less can be manufactured in a fine particle slurry manufacturing process, subsequent washing, concentration, and drying can be efficiently performed, and manufacturing efficiency can be enhanced while energy cost is suppressed.

As described above, by the fine particle slurry washing and concentrating apparatus, a fine particle powder manufacturing apparatus, and a fine particle powder manufacturing method of the present invention, conductivity or density of a filtrate discharged from a stirring type cross-flow filtration device is measured, the filtrate is discarded when the conductivity or density of the filtrate is equal to or more than a threshold, and the filtrate is reused when the conductivity or density of the filtrate is less than the threshold, thereby obtaining an excellent effect that the fine particle powder can be stably manufactured while reducing the amount of washing water or the amount of washing wastewater used in the fine particle slurry washing and concentrating apparatus.

As described above, by the fine particle slurry concentrating apparatus, the fine particle powder manufacturing apparatus, and the fine particle powder manufacturing method according to each aspect of the present invention, the viscosity change of the slurry is correctly grasped even in a high concentration region by the density sensor, and the washing liquid supply amount to the slurry tank by the washing liquid supply device is controlled by the control device, so that it is possible to stably concentrate a fine particle slurry even in a high concentration region while suppressing clogging of a filter and an attached flow path.

As described above, by a fine particle powder manufacturing apparatus and manufacturing method of the present invention, a fine particle powder can be stably manufactured while improving energy efficiency in a process of drying a concentrated slurry.

Brief Description of Drawings

Fig. 1 is a block diagram illustrating a fine particle powder manufacturing apparatus of a first embodiment of the present invention.
Fig. 2 is a block diagram illustrating a fine particle slurry manufacturing device in the same embodiment.
Fig. 3 is a cross-sectional view illustrating a stirring type cross-flow filtration device in the same embodiment.
Fig. 4 is a side cross-sectional view illustrating a drying device in the same embodiment.
Fig. 5 is a plan view illustrating the drying device in the same embodiment in a state where a top plate is removed.
Fig. 6 is a front cross-sectional view illustrating the drying device in the same embodiment.
Fig. 7 is a block diagram illustrating a fine particle powder manufacturing apparatus of a second embodiment of the present invention.
Fig. 8 is a block diagram illustrating a fine particle powder manufacturing apparatus of a third embodiment and a fourth embodiment of the present invention.
Fig. 9 is a cross-sectional view illustrating a stirring type cross-flow filtration device and a density sensor, a conductivity sensor, and a second density sensor in the third embodiment and the fourth embodiment.
Fig. 10 is a flowchart illustrating an example of process switching control in the third embodiment.
Fig. 11 is a flowchart illustrating an example of process switching control in the fourth embodiment.
Fig. 12 is a graph illustrating operation of a control device in the third embodiment and the fourth embodiment.
Fig. 13 is a graph illustrating another example of the operation of the control device in the third embodiment and the fourth embodiment.

Fig. 14 is a graph illustrating another example of the operation of the control device in the third embodiment and the fourth embodiment.

Fig. 15 is a block diagram illustrating a fine particle powder manufacturing apparatus of a fifth embodiment of the present invention.

Description of Embodiments

Hereinafter, a fine particle powder manufacturing apparatus 1 according to a first embodiment of the present invention will be described in detail. A fine particle powder manufacturing apparatus 1 of the present embodiment includes a fine particle slurry manufacturing device 2 that manufactures a fine particle slurry containing fine particles having a particle diameter equal to or less than 7 $\mu$m by reacting a plurality of raw materials in a mother liquor in which a swirling flow is generated in a crystallization device 10 (reaction processor), a slurry tank 30 that washes the fine particle slurry obtained by the fine particle slurry manufacturing device 2 by adding a washing liquid depending on a processing stage while stirring the fine particle slurry, a stirring type cross-flow filtration device 6 that removes a part of the mother liquor and the washing liquid from the fine particle slurry or the post-washing slurry sent from the slurry tank 30 and concentrating the fine particle slurry, and a conductive heat transfer drying device (drier) 8 that dries a final concentrated slurry after final concentration is completed by the stirring type cross-flow filtration device 6 by mixing with a wet powder held in advance in a casing 92 with a heated stirring blade, transferring the wet powder, and drying the wet powder by conductive heat transfer. Note that the final concentrated slurry may be simply referred to as a concentrated slurry.

[Crystallization Device]

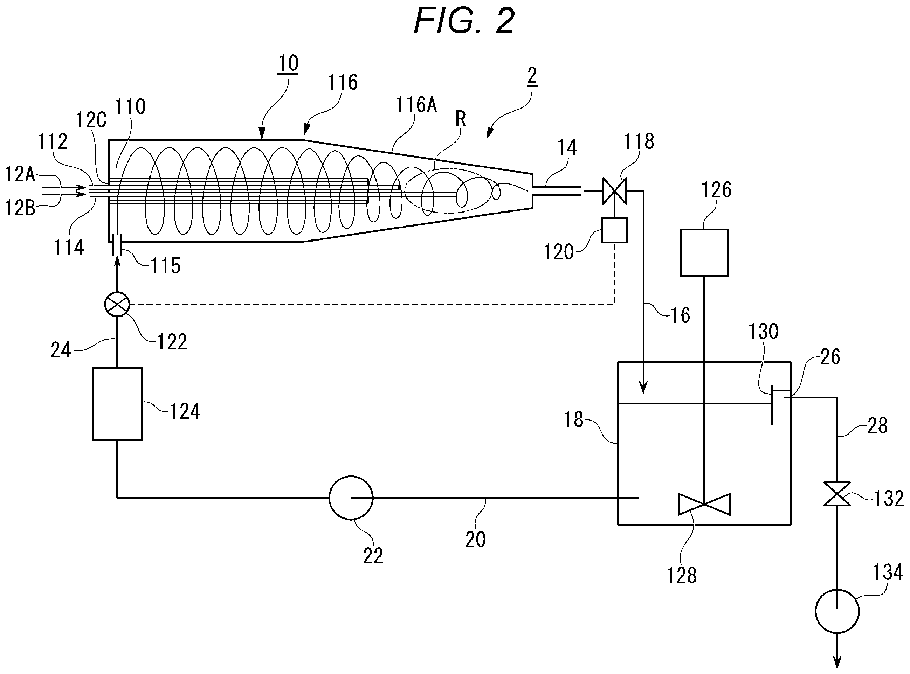

As illustrated in Fig. 2, the crystallization device 10 has an elongated cylindrical reaction vessel 116. An upstream side of the reaction vessel 116 has a cylindrical shape, and a downstream side has a coaxial and conical tapered portion 116A that narrows toward the downstream side. A cylindrical outer tube 110 is coaxially disposed inside the reaction vessel 116 so as to reach the tapered portion 116A from an upstream end, and an upstream end of the outer tube 110 is opened at the upstream end of the reaction vessel 116. A first inner tube 112 and a second inner tube 114 are inserted into the outer tube 110, the first inner tube 112 protrudes from a downstream end of the outer tube 110, and the second inner tube 114 protrudes from the downstream end of the outer tube 110 to be longer than the first inner tube 112. A first raw material 12A is supplied into the reaction vessel 116 from the first inner tube 112, and a second raw material 12B is supplied from the second inner tube 114. If necessary, a mother liquor 12C can be supplied into the reaction vessel 116 from a gap between the outer tube 110 and each of the first inner tube 112 and the second inner tube 114.

An introduction port 115 is formed in an outer peripheral portion of an upstream end of the reaction vessel 116, and by blowing a reaction liquid from the introduction port 115 at a high speed, a swirling flow is generated in the reaction vessel 116, the rotation speed increases as an inner diameter is narrowed in the tapered portion 116A, and the reaction liquid is discharged as a vortex flow from the discharge hole 14. The outer tube 110, the first inner tube 112, and the second inner tube 114 are located at the center of the swirling flow, and the first raw material 12A from the first inner tube 112 and the second raw material 12B from the second inner tube 114 are mixed while being vigorously stirred in the center region R of the swirling flow in the tapered portion 116A. In this mixing process, the first raw material 12A and the second raw material 12B are mixed and reacted at high speed, a reaction product is generated as fine particles having a very small particle diameter, and flows out from the discharge hole 14 together with the reaction liquid.

A conduit 16 is connected to the discharge hole 14, and a reaction liquid containing fine particles is supplied to the reservoir 18 through the conduit 16. A flow rate adjusting valve 118 is interposed on an upstream side of the conduit 16 connected to the discharge hole 14, and can be opened and closed by a drive unit 120 to adjust an outflow speed of the reaction liquid from the discharge hole 14.

The drive unit 120 is controlled manually or automatically by a control panel, which is not illustrated, in accordance with an instruction value of a pressure gauge 122 that measures the inflow pressure from the introduction port 115. When the value of the pressure gauge 122 is high, the opening degree of the flow rate adjusting valve 118 is increased to promote the outflow of the reaction liquid, and when the value of the pressure gauge 122 is low, the opening degree of the flow rate adjusting valve 118 is decreased to suppress the outflow of the reaction liquid. Thus, the fine particles in the reaction vessel 116 are appropriately crystallized.

A stirring blade 128 rotated by a motor 126 is disposed in the reservoir 18, and uniformly stirs the reaction liquid to prevent fine particles from precipitating. A conduit 20 is connected to a lower end of the reservoir 18, and the slurry containing fine particles flowing out from the lower end of the reservoir 18 is pressurized by a pump 22, passes through a temperature adjuster 124, passes through a conduit 24 and a pressure gauge 122, and is blown into the reaction vessel 116 from an introduction port 115. The temperature adjuster 124 functions to appropriately adjust the temperature of the reaction liquid in the reaction vessel 116.

In this embodiment, the types of the first raw material 12A and the second raw material 12B are not limited, but it is sufficient that a compound having low solubility is precipitated by reacting the first raw material 12A with the second raw material 12B. As an example, when a positive electrode material precursor for a secondary battery is manufactured, a solution containing a transition metal element such as a nickel salt is used as the first raw material 12A, and an alkali solution is used as the second raw material 12B, whereby fine particles containing a transition metal hydroxide as a main component can be obtained by a reaction in the crystallization device 10. As a more specific raw material of the positive electrode material precursor for a secondary battery, an aqueous solution of nickel sulfate, cobalt sulfate, manganese sulfate, or the like can be used as the first raw material 12A, and an aqueous solution of sodium hydroxide, ammonia water, or the like can be used as the second raw material 12B.

The particle diameter of the fine particles in the fine particle slurry manufactured by the crystallization device 10 is preferably equal to or less than 7 $\mu$m, more preferably equal to or more than 1 $\mu$m and equal to or less than 5 $\mu$m, and still more preferably equal to or more than 1 $\mu$m and equal to or less than 3 $\mu$m. In this description, it is assumed that the particle diameter of the fine particles in the fine particle slurry is measured by laser diffraction or a scattering method. In addition, the particle diameter in the present description means an average particle diameter at an integrated value of 50% in a particle size distribution measured by the measurement method. With the crystallization device 10 using a swirling flow, it is possible to suppress the growth of crystal grains after the generation of the crystal grains, and it is easy to manufacture a slurry containing fine particles having such a fine grain size. When the particle diameter of the fine particles is equal to or less than 7 $\mu$m, for example, in the case of manufacturing a positive electrode material precursor for a secondary battery, it is possible to improve the performance by improving the homogeneity of the positive electrode material for the secondary battery. In other applications, the performance of the final product can be expected to be improved because the particle diameters of the fine particles are as small as possible and have a uniform particle diameter. However, in the present invention, fine particles having an average particle diameter of more than 7 $\mu$m may be used as a target as necessary.

A fine particle slurry containing fine particles generated in the crystallization device 10 is stored in the reservoir 18.

A partition plate 130 for wave dissipation is disposed in a part of the reservoir 18 near the liquid level, a fine particle slurry outlet 26 is formed in a side wall of the reservoir 18 facing the partition plate 130, and a conduit 28 leading to the slurry tank 30 is connected. The conduit 28 is provided with an extraction valve 132 and a pump 134 to transfer the fine particle slurry from the reservoir 18 to the slurry tank 30 at an appropriate timing and flow rate. Note that a part of the fine particle slurry stored in the reservoir 18 may be drawn out and concentrated, and then the concentrated slurry may be returned to the reservoir 18. Crystallization can be performed in a state where the slurry concentration is high by performing the concentration operation.

The concentration of the solid content in the fine particle slurry transferred from the outlet 26 to the slurry tank 30 is not limited, but is preferably equal to or more than 5 wt% and equal to or less than 40 wt%, more preferably equal to or more than 10 wt% and equal to or less than 40 wt%, still more preferably equal to or more than 15 wt% and equal to or less than 40 wt%, for example, in the case of manufacturing a positive electrode material precursor for a secondary battery. When the concentration is in such a range, the fine particles can be stably manufactured, a load balance in the slurry tank 30, the stirring type cross-flow filtration device 6, and the drying device 8 in the subsequent stage is good, and it is possible to increase the total processing efficiency and energy efficiency without impairing stability by exerting strain on each process.

[Slurry Tank]

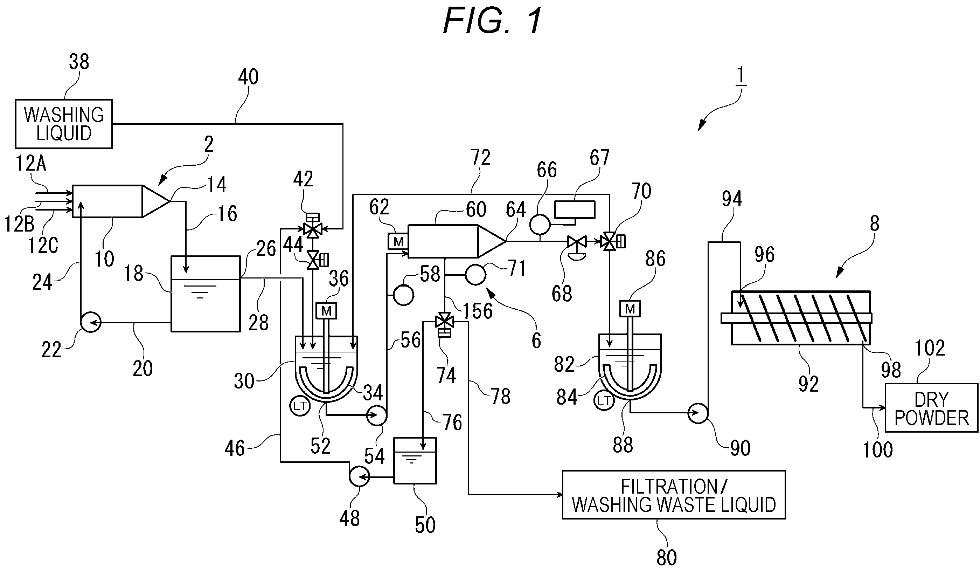

As illustrated in Fig. 1, the slurry tank 30 has a function of temporarily storing the fine particle slurry sent from the reservoir 18 and sending the fine particle slurry to the stirring type cross-flow filtration device 6, or washing the slurry by adding a washing liquid to an initially concentrated slurry obtained by initially concentrating the fine particle slurry, and sending the slurry as a washed slurry to the stirring type cross-flow filtration device 6.

The slurry tank 30 has a bottomed cylindrical shape, and a bottom inner surface is formed in a hemispherical shape. A semi-circular anchor type stirring blade 34 is arranged along the bottom inner surface of the slurry tank 30 with a slight constant gap from the bottom inner surface, and is rotated coaxially with the slurry tank 30 by the motor 36.

A washing liquid source 38 for supplying a clean washing liquid to the slurry tank 30 is provided, and a first port of a three-way valve 42 is connected via a conduit 40. A second port of the three-way valve 42 is connected to the slurry tank 30 via an on-off valve 44, and a third port of the three-way valve 42 is connected to a pump 48 and a washing liquid tank 50 via a conduit 46.

A gap amount between an outer peripheral edge of the anchor type stirring blade 34 and an inner bottom surface of the slurry tank 30 is not limited, but is preferably, for example, about 0.5 to 3.0 cm in order to prevent fine particles from accumulating and adhering to the inner bottom surface of the slurry tank 30. In addition, the length of the semicircular outer peripheral edge of the anchor type stirring blade 34 is preferably a length that can face the entire inner bottom surface of the anchor type stirring blade 34. The rotation peripheral speed of the motor 36 at the outer peripheral portion of the anchor type stirring blade 34 is not limited, but is preferably about 0.1 to 3.0 m/sec. Within such a range, an effect of preventing fine particles from being deposited and fixed on the inner bottom surface of the slurry tank 30 is high.

During the concentration of the slurry in each process, the filtrate is extracted from the stirring type cross-flow filtration device 6 while the slurry is circulated between the slurry tank 30 and the stirring type cross-flow filtration device 6. Thus, the slurry is gradually concentrated, but when the slurry reaches a high concentration state, the viscosity of the slurry also increases, and only the slurry in the vicinity of the stirring blade can be caused to flow with a normal paddle-type stirring blade. Therefore, the slurry in the entire slurry tank 30 cannot be kept uniform, and fine particles settle in the slurry tank 30 to form a hard and compressed solid layer in the lower part of the slurry tank 30, making it impossible to extract the slurry. The anchor type stirring blade 34 can solve this problem.

Further, each process in the present apparatus can select a batch type operation, but when the subsequent drying device 8 is continuously operated, a buffer means for holding the slurry in each process for a relatively long time is required. Therefore, by applying the slurry tank 30 including the anchor type stirring blade 34 as described above, the entire slurry in the slurry tank 30 can be uniformly convected, and deposition and adhesion of fine particles can be prevented.

In particular, in the case of manufacturing a positive electrode material precursor for a secondary battery, since the fine particles are metal compounds and have a large specific gravity, if the inside of the slurry tank 30 cannot be uniformly stirred, the solid material rapidly settles to the lower part of the tank, is compacted hard, and cannot be extracted. Furthermore, since the slurry having a high concentration has a large specific gravity and a very high viscosity, only the slurry in the vicinity of the stirring blade can be convected by a general paddle type stirring blade, and it is difficult to uniformly convect the entire slurry in the slurry tank 30 to maintain a dispersion state.

The washing liquid tank 50 is a container for storing a fraction having relatively less impurities in the filtrate discharged from the stirring type cross-flow filtration device 6. As an index for grasping the tendency of impurity content, the conductivity of the filtrate can be used. When the conductivity is higher than a preset threshold, a large amount of an electrolyte as an impurity is contained in the filtrate, and the electrolyte adversely affects, for example, the positive electrode material precursor for a secondary battery. For example, by operating the three-way valve 42 and the on-off valve 44 when the detected conductivity is higher than a preset threshold, it is possible to select either the clean washing liquid of the washing liquid source 38 or the washing liquid with high cleanliness collected from the stirring type cross-flow filtration device 6 in the washing liquid tank 50 and supply the selected washing liquid to the slurry tank 30.

A discharge hole 52 is formed at a bottom lower end of the slurry tank 30, and the slurry in various states (fine particle slurry, initially concentrated slurry, washed slurry, or final concentrated slurry) extracted from the slurry tank 30 is sent to a conduit 56 via a pump 54, and the slurry in various states can be transferred to the stirring type cross-flow filtration device 6 through the conduit (first flow path) 56.

[Stirring Type Cross-flow Filtration Device]

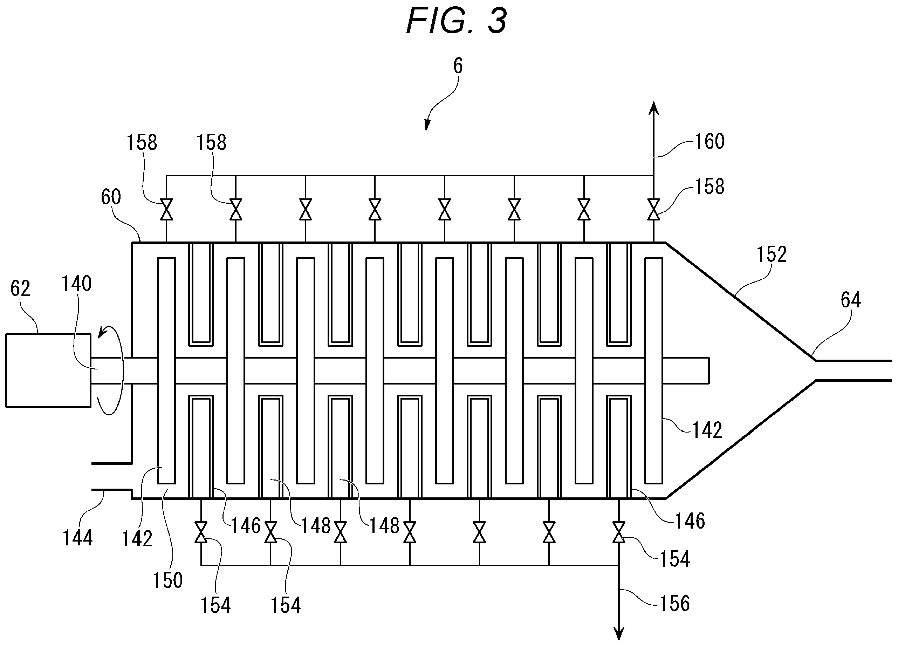

As illustrated in Fig. 3, the stirring type cross-flow filtration device 6 has a cylindrical casing 60 arranged substantially horizontally. A rotation shaft 140 is disposed along a center line of the casing 60 and is rotated by the motor 62. A plurality of disk-shaped stirring blades 142 is fixed to the rotation shaft 140 at regular intervals in an axial direction. An outer diameter of a stirring blade 142 is smaller than an inner diameter of the casing 60. A ring-shaped filter 146 having a constant thickness is fixed coaxially with the casing 60 between every adjacent stirring blades 142 on the inner peripheral surface of the casing 60, and a filtrate chamber 148 having a disk shape is formed inside each filter 146. The number of stirring blades 142 and the number of filters 146 are determined by the processing capacity required for the stirring type cross-flow filtration device 6. A gap having a constant thickness is formed between an inner surface of the casing 60, the stirring blades 142, and the filters 146, and this gap forms a slurry chamber 150.

An introduction port 144 is formed at an upstream end of the casing 60, and the slurry in various states supplied from the introduction port 144 meanders in the slurry chamber 150 and is transferred to a downstream side while being kneaded between the rotating stirring blades 142 and the fixed filters 146. The slurry chamber 150 is pressurized by liquid feeding pressure of the pump 54, and in this transfer process, the slurry is pressed against the filters 146 while being stirred by the rotation of the stirring blades 142, and the mother liquor and the washing liquid in the slurry pass through the filters 146 and enter the filtrate chambers 148. The material of the filters 146 may be any material as long as the fine particles in the slurry are not allowed to pass, the filtrate is allowed to pass, and the filter has sufficient mechanical strength.

Filtrate discharge valves 154 leading to the respective filtrate chambers 148 are attached to the casing 60, and outlets of the filtrate discharge valves 154 are collectively connected to a conduit 156. The filtrate entering the filtrate chambers 148 flows out to the conduit 156 via the filtrate discharge valves 154. As illustrated in Fig. 1, the conduit 156 is connected to a first port of a three-way valve 74 which is a flow path switching device, and is connected to a liquid discharge path 80 at a second port of the three-way valve 74 via a conduit (waste flow path) 78. A third port of the three-way valve 74 is connected to the washing liquid tank 50 via a conduit (return flow path) 76.

[Conductivity Sensor]

As illustrated in Fig. 1, a conductivity sensor(also referred to as a electro-conductivity sensor ) 71 is installed in a conduit 156 serving as a filtrate outlet of the stirring type cross-flow filtration device 6. The conductivity sensor 71 continuously measures the conductivity of the filtrate discharged from the stirring type cross-flow filtration device 6, and transmits the conductivity to a control device 67. The control device 67 that has received an output of the conductivity sensor 71 detects the degree of progress of a dilution washing process from an output result and the conductivity of the filtrate stored in advance, and determines a completion timing of the dilution washing process. Specifically, when the output result falls below the threshold set by the control device 67, it is determined that it is the completion timing of the dilution washing process. Note that the present invention is not limited to the conductivity sensor 71, and another sensor may determine the completion timing of the dilution washing process. For example, a second density sensor, which is not illustrated, may be provided in the conduit 156 serving as the filtrate outlet of the stirring type cross-flow filtration device 6. The second density sensor continuously measures the density of the filtrate discharged from the stirring type cross-flow filtration device 6, and transmits the density to the control device 67. The control device 67 that has received the output of the second density sensor detects the degree of progress of the dilution washing process from the density of the filtrate and determines the completion timing of the dilution washing process.

At the time of initial concentration and for a while after the start of washing by the stirring type cross-flow filtration device 6, the filtrate entering the filtrate chamber 148 has a large amount of impurities, but as the filtration time elapses, the filtrate becomes a filtrate having a small amount of impurities, so that the conductivity detected by the conductivity sensor 71 decreases. Therefore, the three-way valve 74 is switched by the control device 67 at the timing when the conductivity reaches the predetermined threshold, and the filtrate flowing to the liquid discharge path 80 is stored in the washing liquid tank 50. The relatively clean filtrate stored in the washing liquid tank 50 is supplied as a washing liquid to the slurry tank 30 through the conduit 46, the three-way valve 42, and the on-off valve 44 by moving the pump 48 in the next dilution washing process, and is used as a washing liquid in the initial stage of the dilution washing process. This makes it possible to reduce the amount of washing liquid used by the washing liquid source 38, which helps to reduce the cost of manufacturing the fine particle powder. Furthermore, it is possible to reduce the amounts of filtrate and washing waste liquid discarded outside the fine particle powder manufacturing apparatus 1, and it is possible to reduce the load on the environment.

A downstream portion of the casing 60 is a conical tapered portion 152 that narrows toward the downstream side, and a discharge port 64 is formed at a distal end of the tapered portion 152. Moisture is removed while being transferred to the downstream side while meandering in the slurry chamber 150. Filtration and concentration are performed by the stirring type cross-flow filtration device 6 while circulating through the slurry tank 30 and the stirring type cross-flow filtration device 6, and concentrated slurry having high viscosity is discharged from the discharge port 64.

An optimum value of solid content concentration of the concentrated slurry discharged from the discharge port 64 of the stirring type cross-flow filtration device 6 is different among the initial concentration process, the dilution washing process, and the final concentration process, and is not necessarily limited. As a preferred example, for example, in the case of manufacturing a positive electrode material precursor for a secondary battery, the solid content concentration in the initially concentrated slurry is preferably equal to or more than 35 wt% and equal to or less than 65 wt%, more preferably equal to or more than 45 wt% and equal to or less than 65 wt% at the time of completion of the initial concentration process. The solid content concentration of the washed slurry at the time of completion of the dilution washing process is preferably equal to or more than 35 wt% and equal to or less than 60 wt%, and more preferably equal to or more than 35 wt% and equal to or less than 45 wt%. The solid content concentration of the final concentrated slurry at the time of completion of the final concentration process is preferably 50 wt% to 65 wt%, more preferably equal to or more than 60 wt% and equal to or less than 65 wt%.

In each process, when the concentration range is as described above, it is not difficult to transfer the concentrated slurry in the casing 60 of the stirring type cross-flow filtration device 6, and it is possible to effectively reduce the impurity amount of eventual final concentrated slurry while limiting the consumption amount of the washing liquid. Therefore, the load balance between the stirring type cross-flow filtration device 6 and the drying device 8 is good, and it is possible to increase the total processing efficiency and energy efficiency without exerting strain on each process.

As illustrated in Fig. 1, the discharge port 64 of the casing 60 is connected to a first port of a three-way valve 70 (process switching device) via a density sensor 66 and a flow rate adjusting valve 68. The three-way valve 70 is controlled to be switched by the control device 67, or is manually switched in response to an instruction from a control panel. A second port of the three-way valve 70 is connected to the slurry tank 30 via a conduit 72.

A third port of the three-way valve 70 is connected to a slurry tank 82 for storing the final concentrated slurry provided at a front stage of the drying device 8. By operating the three-way valve 70, the slurry in various states discharged from the discharge port 64 of the stirring type cross-flow filtration device 6 can be returned to the slurry tank 30 and circulated, or can be supplied to the slurry tank 82 serving as a buffer of the drying device 8.

The concentrated slurry discharged from the discharge port 64 of the stirring type cross-flow filtration device 6 has a slurry density measured by the density sensor 66, and an output signal of the density sensor 66 is transmitted to the control device 67. There are mainly two purposes of the density sensor 66, and the first is to measure the timing at which the concentrated slurry discharged from the stirring type cross-flow filtration device 6 is sufficiently dehydrated and reaches a predetermined density, grasp the timing of at least one of a completion timing of an initial concentration process (a) or a completion timing of a final concentration process (c), and use it for control to shift to the next process.

Note that, when the completion timing of the dilution washing process (b) is determined, it is preferable to satisfy any one of the following conditions: (1) the conductivity of the filtrate decreases to a predetermined threshold based on the output of the conductivity sensor 71, and the density of the concentrated slurry increases to a predetermined threshold based on the output of the density sensor 66; and (2) the conductivity of the filtrate decreases to the predetermined threshold based on the output of the conductivity sensor 71 (the output of the density sensor 66 is not involved in the determination criteria).

A second object of slurry density measurement by the density sensor 66 is to enhance the washing effect of the slurry in the dilution washing process (b). Specifically, a lower limit value and an upper limit value are set to a density value corresponding to the output signal of the density sensor 66, and when the upper limit value is reached, the supply of the washing liquid from the washing liquid source 38 to the slurry tank 30 is increased (or resumed from a pause), and when the lower limit value is reached, the supply of the washing liquid from the washing liquid source 38 is reduced (or paused), whereby the solid content concentration of the concentrated slurry discharged from the stirring type cross-flow filtration device 6 in the dilution washing process is maintained within a certain range until the conductivity of the filtrate discharged from the stirring type cross-flow filtration device 6 is sufficiently lowered, and the washing degree is adjusted.

The slurry tank 82 serves a buffering function to adjust the supply amount of the final concentrated slurry to the drying device 8. The slurry tank 82 has a bottomed cylindrical shape, and the bottom inner surface is formed in a hemispherical shape. A semicircular anchor type stirring blade 84 is disposed along the bottom inner surface of the slurry tank 82 with a slight constant gap from the bottom inner surface, and is rotated by the motor 86. The rotation speed of the motor 86 is adjusted so that the final concentrated slurry does not precipitate and solidify in the slurry tank 82. A discharge port 88 is formed at the bottom lower end of the slurry tank 82, and the final concentrated slurry having high viscosity extracted from the slurry tank 82 is sent to a conduit 94 via a pump 90 and sent to a drying device 8.

A gap amount between an outer peripheral edge of the anchor type stirring blade 84 and an inner bottom surface of the slurry tank 82 is not limited, but may be, for example, about 0.5 to 3.0 cm in order to prevent fine particles from accumulating and adhering to the inner bottom surface of the slurry tank 82, similarly to the anchor type stirring blade 34 described above. In addition, the length of the semicircular outer peripheral edge of the anchor type stirring blade 84 is preferably a length that can face the entire inner bottom surface of the slurry tank 82. Furthermore, the rotation peripheral speed of the motor 86 at the outer peripheral portion of the anchor type stirring blade 84 is not limited, but is preferably about 0.1 to 3.0 m/sec. Within such a range, an effect of preventing fine particles from being deposited and fixed on the inner bottom surface of the slurry tank 82 is obtained. In particular, in the case of manufacturing a positive electrode material precursor for a secondary battery, the fine particles are metal compounds and have a large specific gravity, which is an important effect.

[Drying Device]

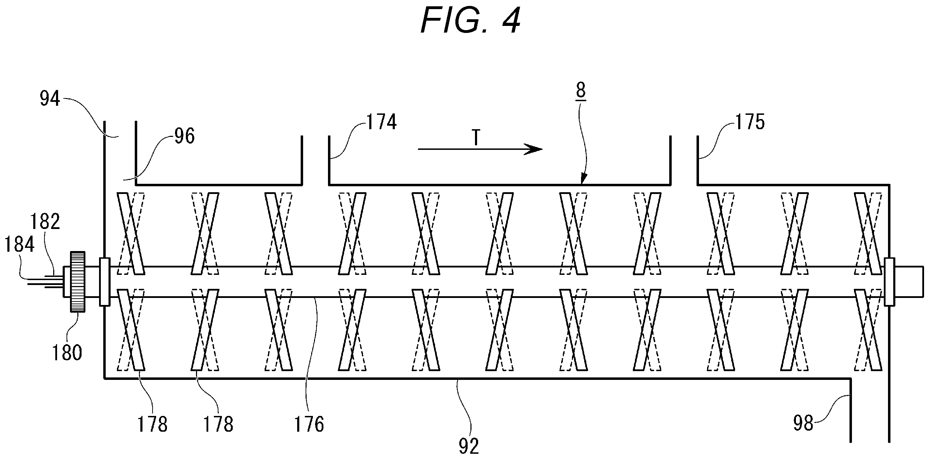

Figs. 4 to 6 are a side cross-sectional view, a plan view from which a top plate is removed, and a front cross-sectional view illustrating a stirring heat transfer device as the drying device 8. The drying device 8 has a rectangular parallelepiped casing 92, and the casing 92 has a gutter shaped inner wall 194, an outer wall 198 covering an outer peripheral surface of the inner wall 194, and a rectangular top plate 196 closing an upper end of the inner wall 194. An airtight gap having a constant thickness is formed between the inner wall 194 and the outer wall 198 and this gap is a heat medium flow path 199, and a heat medium inlet 200 communicating with the heat medium flow path 199 and a heat medium outlet, which is not illustrated, are formed in the outer wall 198. By supplying high-temperature steam, heat medium oil, or the like from the heat medium inlet 200 to the heat medium outlet, the inside of the casing 92 can be uniformly heated.

An introduction port 96 is formed at an upper end on an upstream side of the casing 92, and the conduit 94 is connected thereto. A gas inlet 174 is formed in an upper surface on the upstream side of the casing 92, a gas outlet 175 is formed in an upper surface on a downstream side, normal temperature or heated air or the like is blown from the gas inlet 174, and moist air or the like is discharged from the gas outlet 175 together with water vapor generated along with evaporation of the mother liquor and the washing liquid in the casing 92, so that water vapor generated in the casing 92 is discharged to the outside of the machine, whereby humidity can be maintained in an appropriate state. On the other hand, a discharge port 98 is formed in the lower surface of the downstream end of the casing 92, and the fine particle powder dried in the casing 92 is discharged.

In the casing 92, two hollow rotation shafts 176 are symmetrically disposed along a longitudinal direction, and both ends or one end is rotatably supported by bearings. Hollow stirring blades 178 are fixed to each hollow rotation shaft 176 at regular intervals in the axial direction, and in a region between two hollow rotation shafts 176, the hollow stirring blades 178 of one hollow rotation shaft 176 are located in the middle of the hollow stirring blades 178 of the other hollow rotation shaft 176.

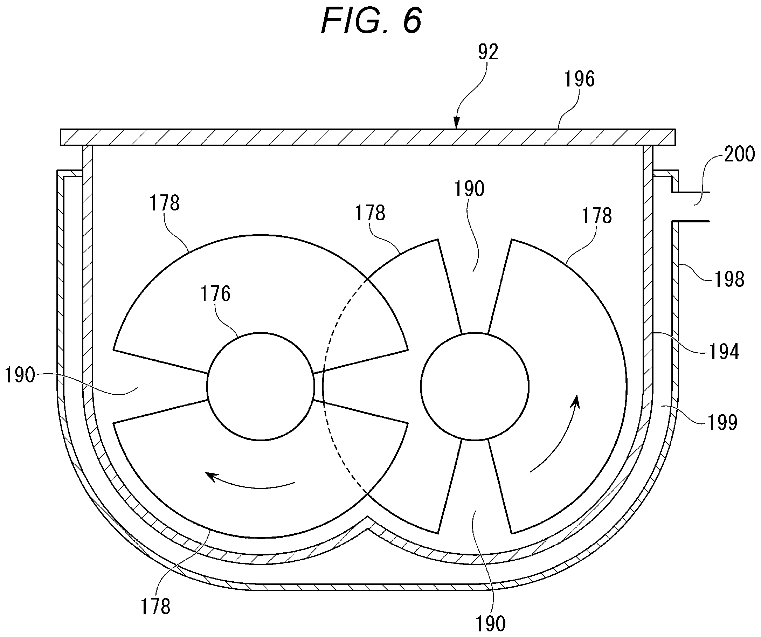

As illustrated in Fig. 6, each of the hollow stirring blades 178 has a fan shape having a central angle of less than 180°, and hollow stirring blades 178 forming a pair is fixed at positions rotationally symmetric about the hollow rotation shaft 176 by 180°. A notch 190 having a constant width is formed between the hollow stirring blades 178 forming a pair so that a mixture of the final concentrated slurry and a wet powder passes in the axial direction. An inside of a hollow stirring blade 178 is hollow, communicates with the internal space of the hollow rotation shaft 176, and the heat medium supplied to the hollow rotation shaft 176 also enters the inside of the hollow stirring blade 178 to heat the hollow stirring blade 178.

The wet powder is a dried product of the final concentrated slurry held in advance in the casing 92, and is not completely dried but is moist. By mixing the wet powder held in advance with the final concentrated slurry, abnormal adhesion that hinders the function of the drying device 8 is avoided, and transfer in the casing 92 by the hollow stirring blades 178 is facilitated.

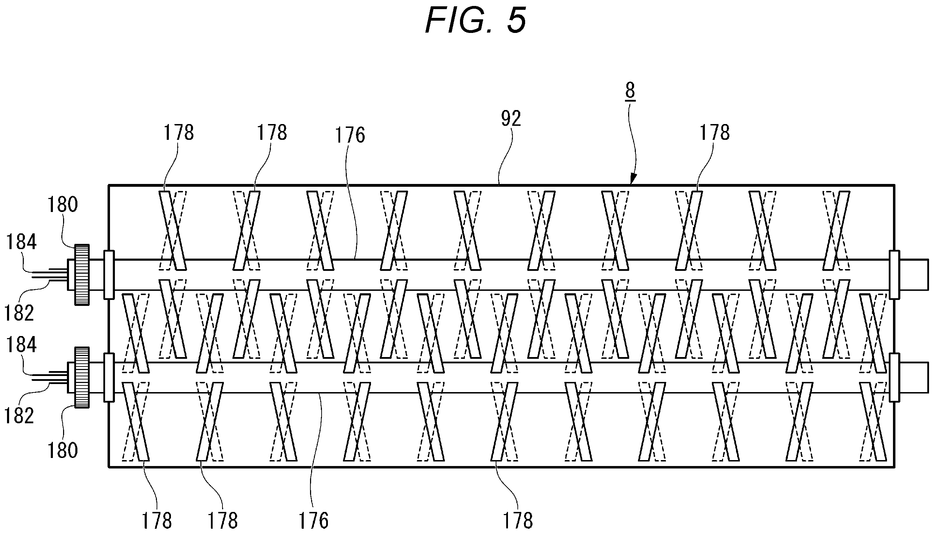

As illustrated in Figs. 4 and 5, the hollow stirring blades 178 forming a pair are inclined in opposite directions with respect to the hollow rotation shaft 176, and each time the hollow rotation shaft 176 rotates by 180°, trajectories of the hollow stirring blades 178 swing in the axial direction within a certain angle range as illustrated by a solid line and a dotted line in the drawings. This swinging achieves a function of mixing the final concentrated slurry and the wet powder while preventing the final concentrated slurry and the wet powder from adhering to the hollow stirring blades 178 between the hollow stirring blades 178 adjacent in the axial direction. In addition, the hollow stirring blade 178 also has a twist along a virtual spiral plane around the hollow rotation shaft 176, and also functions to gradually transfer the mixture of the final concentrated slurry and the wet powder from the upstream side to the downstream side of the casing 92 as the hollow rotation shaft 176 rotates.

The hollow stirring blades 178 and the hollow rotation shaft 176 are formed of metal having high thermal conductivity, and a heat medium introduction hole(also referred to as a heat media introduction port) 184 and a heat medium discharge hole(also referred to as a heat media discharge port) 182 are formed at an end on an upstream side of the hollow rotation shaft 176. A heat medium such as high-temperature steam or heat medium oil is continuously supplied from a heat medium source, which is not illustrated, to the heat medium discharge hole 182 from the heat medium introduction hole 184, and the heat medium spreads over the entire length of the hollow rotation shaft 176, and enters the insides of the hollow stirring blades 178, and the entire hollow rotation shaft 176 and the hollow stirring blades 178 are heated to a temperature equal to or higher than the boiling points of the mother liquor and the washing liquid contained in the final concentrated slurry and the wet powder. Thus, every time the mixture of the final concentrated slurry and the wet powder comes into contact with the hollow rotation shaft 176 and the hollow stirring blades 178, the mixture is heated by conductive heat transfer, and the mother liquor and the washing liquid contained in the mixture are evaporated, and eventually, the mixture becomes a fine particle powder. A rotation mechanism 180 is provided at one end of the hollow rotation shaft 176, and the hollow rotation shafts 176 are simultaneously reversely rotated by a motor, which is not illustrated, and the mixture of the final concentrated slurry and the wet powder held in the casing 92 is transferred in a transfer direction T from upstream to downstream of the casing 92 while being heated by conductive heat transfer by the hollow stirring blades 178. In addition, the positional relationship between the heat medium introduction hole 184 and the heat medium discharge hole 182 illustrated in Fig. 4 may be reversed. That is, the heat medium discharge hole 182 may be provided on the radially inner side of the heat medium introduction hole 184.

The fine particle powder discharged from the discharge port 98 of the drying device 8 is stored in a storage container 102 through a carry-out path 100 as illustrated in Fig. 1. Note that the number of the hollow rotation shafts 176 is not limited to two, and may be two or more. Thus, it can be said that a plurality of hollow rotation shafts 176 is sufficient. The plurality of hollow rotation shafts 176 may also be parallel to each other.

A fine powder manufacturing method by the fine particle powder manufacturing apparatus 1 described above is performed as follows.

[Fine Particle Slurry Manufacturing Process]

First, the crystallization device 10 and the reservoir 18 are filled with the mother liquor as an initial state. The stirring blade 128 is rotated by the motor 126, and the pump 22 is operated to blow the mother liquor in the reservoir 18 from the introduction port 115 into the reaction vessel 116, thereby generating a swirling flow in the reaction vessel 116. The first raw material 12A is supplied from the first inner tube 112, the second raw material 12B is supplied from the second inner tube 114, the both are intensely mixed in the center region R in the tapered portion 116A, and fine particles are generated by reaction between the first raw material 12A and the second raw material 12B. The mother liquor containing the fine particles is returned to the reservoir 18 through the conduit 16, and a fine particle slurry is generated in the reservoir 18 as the mother liquor repeats circulation. The pressure of the mother liquor introduced from the introduction port 115 is measured by the pressure gauge 122, the flow rate of the fine particle slurry flowing out from the discharge hole 14 is appropriately adjusted by the flow rate adjusting valve 118, and the solid content concentration of the fine particle slurry in the reservoir 18 is adjusted to an appropriate range.

[Initial Concentration Process]

When the solid content concentration of the fine particle slurry in the reservoir 18 reaches an appropriate range, the initial concentration process (a) for concentrating the fine particle slurry and converting the fine particle slurry to an initially concentrated slurry is started. The initial concentration process (a) is a process of performing so-called dehydration before washing. In the initial concentration process (a), the three-way valve 70 is controlled to set a circulation path so that the slurry discharged from the stirring type cross-flow filtration device 6 returns to the slurry tank 30 through the conduit 72. Further, in the initial concentration process (a), supply of the washing liquid is stopped.

The extraction valve 132 is opened to allow the fine particle slurry in the reservoir 18 to flow out from the outlet 26 through the conduit 28 and be transferred to the slurry tank 30 by the pump 134. In the slurry tank 30, the anchor type stirring blade 34 is rotated by the motor 36, and the pump 54 is operated while precipitation of the fine particles in the fine particle slurry is prevented to supply the fine particle slurry from the discharge hole 52 to the stirring type cross-flow filtration device 6. As illustrated in Fig. 3, the fine particle slurry is continuously introduced into the slurry chamber 150 in the casing 60 from the introduction port 144 of the stirring type cross-flow filtration device 6.

In the slurry chamber 150, the slurry is pressurized by a discharge pressure of the pump 54, the stirring blade 142 is continuously rotated by the motor 62, the fine particle slurry is pressed against the side surface of the filter 146 while being stirred by the stirring blade 142, and the mother liquor in the fine particle slurry is filtered by the filter 146 and flows into the filtrate chamber 148. As the fine particle slurry advances downstream in the casing 60, the mother liquor in the fine particle slurry decreases and becomes a slurry concentrated to some extent and is discharged from the discharge port 64. The discharged slurry is returned to the slurry tank 30 via the three-way valve 70 and the conduit 72.

The filtrate flowing into the filtrate chamber 148 is collected in the conduit 156 via the filtrate discharge valve 154.

In the initial state, the conduit 156 is connected to the conduit 78 by the three-way valve 74, and the initial filtrate with a large amount of impurities is discarded into the liquid discharge path 80. This process is repeated while the density of the slurry is measured by the density sensor 66 until the density of the fine particle slurry reaches a predetermined value and an initially concentrated slurry having the solid content concentration described above is obtained.

[Dilution Washing Process]

When an initially concentrated slurry having a predetermined concentration is obtained in the slurry tank 30, the initial concentration process (a) is completed, and the dilution washing process (b) of diluting and washing the initially concentrated slurry with a washing liquid is started. In the dilution washing process, the three-way valve 70 maintains a circulation path through which the slurry discharged from the stirring type cross-flow filtration device 6 returns to the slurry tank 30 through the conduit 72. Even in this state, the filtrate collected in the conduit 156 via the filtrate discharge valve 154 is discharged to the liquid discharge path 80 as filtrate with a large amount of impurities via the three-way valve 74 and the conduit 78.

Further, while performing density management by the density sensor 66 and level management of the slurry tank 30, the on-off valve 44 is opened, the conduit 46 is connected to the slurry tank 30 by the three-way valve 42, and the pump 48 is operated to first supply the washing liquid from the washing liquid tank 50 to the slurry tank 30. The washing liquid tank 50 stores a relatively clean washing liquid obtained in the previous manufacturing of the fine particle powder. This is because immediately after the start of the dilution washing process (first stage), the initially concentrated slurry contains a large amount of impurities, so that a sufficient washing effect can be obtained even with a washing liquid having low cleanliness. Thus, while the initially concentrated slurry is circulated between the slurry tank 30 and the stirring type cross-flow filtration device 6, washing in the slurry tank 30 and filtration by the stirring type cross-flow filtration device 6 are continued.

As the washing liquid from the washing liquid tank 50 is continuously supplied to the slurry tank 30 and the washing of the initially concentrated slurry progresses, impurities (electrolyte component, non-electrolyte component, and ultrafine particle) in the filtrate discharged from the stirring type cross-flow filtration device 6 decrease, so that the conductivity (or density) of the filtrate indicated by the conductivity sensor 71 (or the second density sensor not illustrated) installed in the conduit 156 decreases. At a time point when the numerical value of the conductivity sensor 71 reaches a target value (target value for switching from the washing liquid in the washing liquid tank 50 to the clean washing liquid of the washing liquid source 38) (or at a time point when the amount of liquid in the washing liquid tank 50 sufficiently decreases), the pump 48 is stopped by automatic control by the control device 67 or manually, the supply of the reusable washing liquid from the washing liquid tank 50 is stopped, and then the three-way valve 42 is automatically controlled by the control device 67 or manually operated to start the supply of the clean washing liquid from the washing liquid source 38 to the slurry tank 30.

As the washing and filtration of the initially concentrated slurry proceed using the clean washing liquid from the washing liquid source 38, impurities (electrolyte component, non-electrolyte component, and ultrafine particles) in the filtrate discharged from the stirring type cross-flow filtration device 6 further decrease, so that the conductivity (or density) of the filtrate indicated by the conductivity sensor 71 (or the second density sensor not illustrated) installed in the conduit 156 decreases. At a time point when the conductivity or density reaches the next target value (target value indicating completion of washing) and the density of the fine particle slurry reaches a predetermined value, the washing liquid source 38 is stopped, and the three-way valve 42 and the on-off valve 44 are automatically controlled or manually operated by the control device 67 to stop the supply of the washing liquid.

[Final Concentration Process]

When the supply of the washing liquid is stopped and the dilution washing process is completed, the final concentration process (c) of finally concentrating the washed slurry is performed. In the final concentration process (c), the washed slurry is supplied to the stirring type cross-flow filtration device 6, and is separated into a concentrated washed slurry and filtrate. The concentrated washed slurry is returned to the slurry tank 30. As described above, the washed slurry is continuously filtered by the stirring type cross-flow filtration device 6 while being circulated between the slurry tank 30 and the stirring type cross-flow filtration device 6. Therefore, the slurry in the slurry tank 30 is gradually concentrated.

When the conductivity of the filtrate measured by the conductivity sensor 71 provided in the conduit 156 eventually falls below a predetermined target value, it is determined that the filtrate is clean enough to be used for primary washing in the slurry tank 30, the three-way valve 74 is switched by automatic control by the control device 67 or manually, and the filtrate from the conduit 156 is stored in the washing liquid tank 50 through the conduit 76. When the filtrate is sufficiently cleaned, not only the final concentration process (c) but also the storage in the washing liquid tank 50 may be started from the subsequent stage of the dilution washing process (b).

When the density of the final concentrated slurry discharged from the discharge port 64 of the stirring type cross-flow filtration device 6 by the density sensor 66 reaches the density target value of the final concentration process, the flow rate adjusting valve 68 and the three-way valve 70 are automatically controlled by the control device 67 or manually operated to send the final concentrated slurry to the slurry tank 82. The final concentrated slurry stored in the slurry tank 82 is stirred by the anchor type stirring blade 84 so as to prevent precipitation, and the drying process is started. Note that, in the present embodiment, the concentrated slurry is returned to the slurry tank 30 and filtered while being circulated, but the present invention is not limited thereto, and the concentrated slurry can be supplied to the slurry tank 82 without being circulated.

[Drying Process]

The drying process is a process of drying the final concentrated slurry to a fine particle powder state. In the drying process, the final concentrated slurry in the slurry tank 82 is sent to the drying device 8 by the pump 90, and introduced into the casing 92 from the introduction port 96 through the conduit 94. In the casing 92, the two hollow rotation shafts 176 continuously rotate, and the hollow stirring blades 178 are heated by high-temperature steam, heat medium oil, or the like supplied to the heat medium introduction hole 184. With the rotation of the hollow stirring blades 178, the final concentrated slurry and the wet powder held in the casing 92 are mixed, and the mixture is sent in the transfer direction T. In the process, the mixture is heated by conductive heat transfer by the heated hollow stirring blades 178 while preventing the mixture from adhering to the hollow stirring blades 178 between the adjacent hollow stirring blades 178 by the swinging of the hollow stirring blades 178, and the drying processing of the mixture proceeds. By blowing normal temperature or heated air or the like from the gas inlet 174 and discharging moist air or the like from the gas outlet 175, water vapor generated in the casing 92 is discharged to the outside of the apparatus, whereby the humidity in the apparatus is maintained in an appropriate state. By the time the mixture reaches the downstream side of the casing 92, the mixture becomes fine particle powder, and is sequentially discharged from the discharge port 98. The fine particle powder discharged from the discharge port 98 is stored in the storage container 102 through the carry-out path 100.

[Effects of Present Embodiment]

By the fine particle powder manufacturing method and the fine particle powder manufacturing apparatus 1 described above, the first raw material 12A and the second raw material 12B are reacted in the mother liquor in which a high-speed swirling flow is generated in the crystallization device 10 in the fine particle slurry manufacturing process to manufacture a slurry containing fine particles having a particle diameter equal to or less than 7 $\mu$m, and thereafter, through the initial concentration process, the dilution washing process, and the final concentration process, washing and high-level concentration using the stirring type cross-flow filtration device 6 can be efficiently performed without causing clogging of a filter or a flow path, and further, in the drying process, the final concentrated slurry and the wet powder are mixed, and the heated hollow stirring blade 178 is brought into contact with the mixture to perform heating by conductive heat transfer, so that it is possible to manufacture a fine particle powder having a size equal to or less than 7 $\mu$m with high manufacturing efficiency while suppressing energy cost.

In addition, in the fine particle slurry manufacturing process, a solution containing a transition metal element as the first raw material 12A and an alkali solution as the second raw material 12B are used and the both are reacted, whereby fine particles containing a transition metal hydroxide as a main component can be obtained, and a fine particle powder as a positive electrode material precursor for a secondary battery can be manufactured with high manufacturing efficiency while suppressing energy cost.

Further, in the initial concentration process, the fine particle slurry is filtered by the stirring type cross-flow filtration device 6 and concentrated to, for example, a solid content concentration of 35 to 65 wt% to obtain an initially concentrated slurry, so that removal efficiency of impurities from the slurry before washing is high, the amount of washing liquid and the washing time consumed in the dilution washing process can be reduced, the energy cost is suppressed, and the manufacturing efficiency can be increased while eliminating problems such as filter clogging by fine particles.

In addition, by removing a part of the mother liquor and the washing liquid and concentrating the washed slurry to, for example, a solid content concentration of 50 to 65 wt% in the final concentration process by the stirring type cross-flow filtration device 6, the mother liquor and the amount of the washing liquid to be removed in the drying process can be reduced, and the energy cost is suppressed and the manufacturing efficiency is enhanced.

Further, in the crystallization device 10, since the mother liquor is circulated by the pump 22, it is easy to generate a high-speed swirling flow with simple equipment, fine particles having a particle diameter equal to or less than 7 $\mu$m, preferably equal to or less than 5 $\mu$m can be precipitated by uniformly mixing the first raw material 12A and the second raw material 12B in the high-speed swirling flow in an extremely short time, and the particle diameter of the finally obtained fine particle powder can be reduced and the particle diameter distribution can be narrowed, so that a high-quality final product can be expected.

Further, in the drying device 8, since the hollow stirring blades 178 of the hollow rotation shafts 176 are fixed at intervals in the axial direction to the respective hollow rotation shafts 176 so that the hollow stirring blades 178 of the respective hollow rotation shafts 176 partially overlap each other when viewed in the axial direction, as the hollow stirring blades 178 rotate, the heated hollow stirring blades 178 mix and transfer the final concentrated slurry and the wet powder held in the casing 92, and during that time, the mixture of the final concentrated slurry and the wet powder held in the casing 92 is dried by conductive heat transfer to be converted into the fine particle powder, so that it is possible to evaporate moisture more efficiently than hot air drying by convection heat transfer in which hot air is blown, and it is possible to achieve an excellent effect that the energy cost is suppressed and the manufacturing efficiency is increased.

Note that the present invention is not limited to the above embodiment, and it is possible to add, delete, and replace constituent elements with well-known techniques within the scope described in the claims.

Subsequently, a fine particle powder manufacturing apparatus 21 according to a second embodiment of the present invention will be described in detail. Description of configurations similar to those of the first embodiment will be basically omitted, and differences from the first embodiment will be mainly described.

The fine particle powder manufacturing apparatus 21 according to the second embodiment is different from the first embodiment in that a pump 41 is provided in the conduit 40, a control unit 69 communicably connected to the three-way valve 74 and the conductivity sensor 71 is provided, and the control device 67 of the first embodiment is not provided.

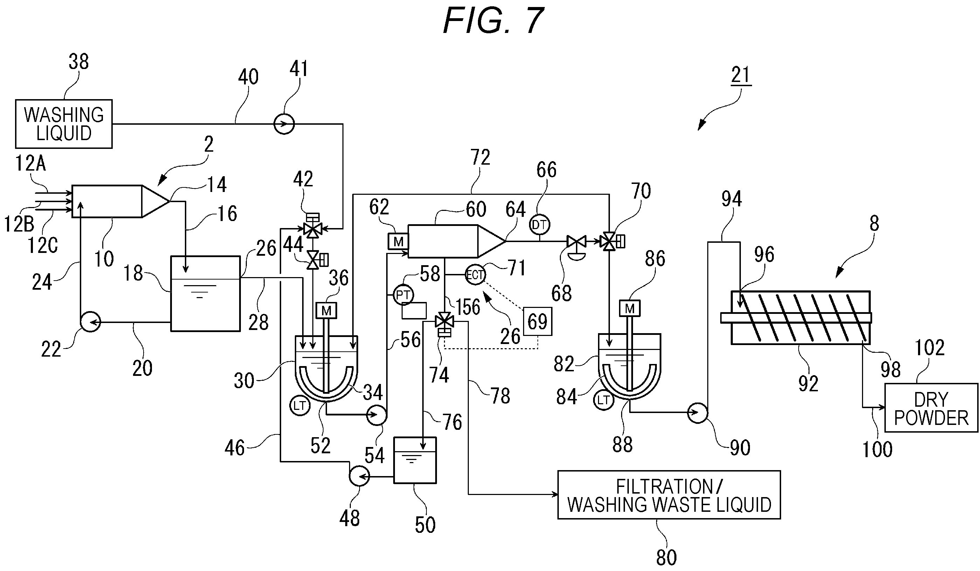

That is, as illustrated in Fig. 7, the conductivity sensor 71 is installed in the conduit 156 serving as a filtrate outlet of the stirring type cross-flow filtration device 6. The conductivity sensor 71 continuously measures the conductivity of the filtrate discharged from the stirring type cross-flow filtration device 6, and transmits the conductivity to the control unit 69 described later. The control unit 69 that has received the output of the conductivity sensor 71 detects the degree of progress of the dilution washing process from an output result and the conductivity of the filtrate stored in advance, and determines the completion timing of the dilution washing process. Specifically, when the output result falls below the threshold set by the control unit 69, it is determined that it is the completion timing of the dilution washing process. Note that the present invention is not limited to the conductivity sensor 71, and another sensor may determine the completion timing of the dilution washing process. For example, a second density sensor, which is not illustrated, may be provided in the conduit 156 serving as the filtrate outlet of the stirring type cross-flow filtration device 6. The second density sensor continuously measures the density of the filtrate discharged from the stirring type cross-flow filtration device 6, and transmits the density to the control unit 69. The control unit 69 that has received the output of the second density sensor detects the degree of progress of the dilution washing process from the density of the filtrate and determines the completion timing of the dilution washing process.

The three-way valve 74 and the conductivity sensor 71 are connected to the control unit 69 in a wired or wireless manner so that electric signals can be communicated with the control unit 69. The control unit 69 determines whether or not a measurement result of the conductivity sensor 71 is equal to or more than a threshold, and when the measurement result is equal to or more than the threshold, the filtrate is caused to flow into a flow path for discarding the filtrate, and when the measurement result is less than the threshold (when the measurement result is less than the threshold), the filtrate is caused to flow into a flow path for reusing the filtrate as a washing liquid. Specifically, the conductivity sensor 71 is a conductivity meter, and when the conductivity of the filtrate is equal to or higher than a threshold, a valve which is not illustrated in the three-way valve 74 is set so that the filtrate discharged from the stirring type cross-flow filtration device 6 through the conduit 156 is discharged from the first port of the three-way valve 74 to the second port of the three-way valve 74 and flows into the liquid discharge path 80. Then, when the conductivity of the filtrate falls below the threshold, the valve which is not illustrated in the three-way valve 74 is switched so that the filtrate discharged from the stirring type cross-flow filtration device 6 through the conduit 156 is discharged from the first port of the three-way valve 74 to the third port of the three-way valve 74 and flows into the washing liquid tank 50. Although not illustrated, the three-way valve 74 is provided with a driving device that switches the valve, and switches the valve in the three-way valve 74 according to a signal input from the control unit 69. Note that the control unit 69 and the pump 48 may be connected in a wired or wireless manner so as to be able to communicate an electric signal. A motor may be used as an example of the drive device. Here, the threshold of the conductivity is preferably set to a value in a range equal to or less than 10 [mS/cm], more preferably set to a value in a range equal to or less than 5 [mS/cm], and still more preferably set to a value in a range of 0.2 to 5 [mS/cm]. Here, the control unit 69 is a computer including a processor such as a central processing unit (CPU), a memory, and the like. The processor executes arithmetic processing for executing the function of the control unit 69. The memory stores a rewritable program in which a function executed by the CPU is described. The control unit 69 is a hardware (circuit unit including circuitry) such as a large scale integration (LSI), an application specific integrated circuit (ASIC), a field-programmable gate array (FPGA), or a graphics processing unit (GPU). Alternatively, the function of the control unit 69 may be implemented by cooperation of software and hardware.

At the time of initial concentration and for a while after the start of washing by the stirring type cross-flow filtration device 6, the filtrate entering the filtrate chamber 148 has a large amount of impurities, but as the filtration time elapses, the filtrate becomes a filtrate having a small amount of impurities, so that the conductivity detected by the conductivity sensor 71 decreases. Therefore, the three-way valve 74 is switched by the control unit 69 at the timing when the conductivity reaches the predetermined threshold, and the filtrate flowing to the liquid discharge path 80 is stored in the washing liquid tank 50. The relatively clean filtrate stored in the washing liquid tank 50 is supplied as a washing liquid to the slurry tank 30 through the conduit 46, the three-way valve 42, and the on-off valve 44 by moving the pump 48 in the next dilution washing process, and is used as a washing liquid in the initial stage of the dilution washing process. This makes it possible to reduce the amount of washing liquid used by the washing liquid source 38, which helps to reduce the cost of fine particle powder manufacturing. Furthermore, it is possible to reduce the amounts of filtrate and washing waste liquid discarded outside the fine particle powder manufacturing apparatus 21, and it is possible to reduce the load on the environment.

A downstream portion of the casing 60 is a conical tapered portion 152 that narrows toward the downstream side, and a discharge port 64 is formed at a distal end of the tapered portion 152. Moisture is removed while being transferred to the downstream side while meandering in the slurry chamber 150. Filtration and concentration are performed by the stirring type cross-flow filtration device 6 while circulating through the slurry tank 30 and the stirring type cross-flow filtration device 6, and concentrated slurry having high viscosity is discharged from the discharge port 64.

An optimum value of the solid content concentration of the concentrated slurry discharged from the stirring type cross-flow filtration device 6 is different among the initial concentration process, the dilution washing process, and the final concentration process, and is not necessarily limited. As a preferred example, for example, in the case of manufacturing a positive electrode material precursor for a secondary battery, the solid content concentration in the initially concentrated slurry is preferably equal to or more than 35 wt% and equal to or less than 65 wt%, more preferably equal to or more than 45 wt% and equal to or less than 65 wt% at the time of completion of the initial concentration process. The solid content concentration of the washed slurry at the time of completion of the dilution washing process is preferably equal to or more than 35 wt% and equal to or less than 60 wt%, and more preferably equal to or more than 35 wt% and equal to or less than 45 wt%. The solid content concentration of the final concentrated slurry at the time of completion of the final concentration process is preferably 50 wt% to 65 wt%, more preferably equal to or more than 60 wt% and equal to or less than 65 wt%.

In each process, when the concentration range is as described above, it is not difficult to transfer the concentrated slurry in the casing 60 of the stirring type cross-flow filtration device 6, and it is possible to effectively reduce the impurity amount of eventual final concentrated slurry while limiting the consumption amount of the washing liquid. Therefore, the load balance between the stirring type cross-flow filtration device 6 and the drying device 8 is good, and it is possible to increase the total processing efficiency and energy efficiency without exerting strain on each process.

As illustrated in Fig. 7, the discharge port 64 of the casing 60 of the stirring type cross-flow filtration device 6 is connected to the first port of the three-way valve 70 (path switching device) via the density sensor 66 and the flow rate adjusting valve 68. The three-way valve 70 is controlled to be switched by a control panel, which is not illustrated, or is manually switched in response to an instruction from the control panel. Note that the three-way valve 70 may be controlled by the control unit 69. A second port of the three-way valve 70 is connected to the slurry tank 30 via the conduit 72. The third port of the three-way valve 70 is connected to the slurry tank 82 for concentrated slurry storage provided at the front stage of the drying device 8. By operating the three-way valve 70, the slurry in various states discharged from the discharge port 64 of the stirring type cross-flow filtration device 6 can be returned to the slurry tank 30 and circulated, or can be supplied to the slurry tank 82 serving as a buffer of the drying device 8.

The concentrated slurry discharged from the discharge port 64 of the stirring type cross-flow filtration device 6 has a slurry density measured by the density sensor 66, and an output signal of the density sensor 66 is transmitted to the control panel, which is not illustrated. Note that, when three-way valve 70 is controlled by the control unit 69, an output signal of the density sensor 66 is transmitted to the control unit 69. There are mainly two purposes of the density sensor 66, and the first is to measure the timing at which the concentrated slurry discharged from the stirring type cross-flow filtration device 6 is sufficiently dehydrated and reaches a predetermined density, grasp the timing of at least one of a completion timing of the initial concentration process or a completion timing of the final concentration process, and use it for control to shift to the next process.

Note that, when the completion timing of the dilution washing process is determined, it is preferable to satisfy any one of the following conditions: (1) the conductivity of the filtrate decreases to a predetermined threshold based on the output of the conductivity sensor 71, and the density of the concentrated slurry increases to a predetermined threshold based on the output of the density sensor 66; and (2) the conductivity of the filtrate decreases to the predetermined threshold based on the output of the conductivity sensor 71 (the output of the density sensor 66 is not involved in the determination criteria).

A second purpose of the slurry density measurement by the density sensor 66 is to enhance the washing effect of the slurry in the dilution washing process. Specifically, a lower limit value and an upper limit value are set to a density value corresponding to the output signal of the density sensor 66, and when the upper limit value is reached, the supply of the washing liquid from the washing liquid source 38 to the slurry tank 30 is increased (or resumed from a pause), and when the lower limit value is reached, the supply of the washing liquid from the washing liquid source 38 is reduced (or paused), whereby the solid content concentration of the concentrated slurry discharged from the stirring type cross-flow filtration device 6 in the dilution washing process is maintained within a certain range until the conductivity of the filtrate discharged from the stirring type cross-flow filtration device 6 is sufficiently lowered, and the washing degree is adjusted. Here, the slurry tank 30 to the stirring type cross-flow filtration device 6 in the fine particle powder manufacturing apparatus 21 may be referred to as a fine particle slurry washing and concentrating apparatus.

In order to control the washing liquid in the dilution washing process, the three-way valve 42 and the on-off valve 44 are controlled by the control panel, which is not illustrated, or manually in accordance with the value of the density sensor 66, and when the density of the concentrated slurry detected by the density sensor 66 is too high, the three-way valve 42 and the on-off valve 44 are controlled to increase or start the amount of washing liquid from the washing liquid source 38 to the slurry tank 30. Further, when the density of the concentrated slurry detected by the density sensor 66 is too low, the three-way valve 42 and the on-off valve 44 are controlled to reduce or stop the amount of the washing liquid from the washing liquid source 38 to the slurry tank 30, and feedback control is performed so that the solid content concentration in the concentrated slurry falls within a certain range. Note that the three-way valve 42 and the on-off valve 44 may be controlled by the control unit 69.

The slurry tank 82 serves a buffering function to adjust the supply amount of the final concentrated slurry to the drying device 8. The slurry tank 82 has a bottomed cylindrical shape, and the bottom inner surface is formed in a hemispherical shape. The semicircular anchor type stirring blade 84 is disposed along the bottom inner surface of the slurry tank 82 with a slight constant gap from the bottom inner surface, and is rotated by the motor 86. The rotation speed of the motor 86 is adjusted so that the final concentrated slurry does not precipitate and solidify in the slurry tank 82. A discharge port 88 is formed at the bottom lower end of the slurry tank 82, and the final concentrated slurry having high viscosity extracted from the slurry tank 82 is sent to the conduit 94 via the pump 90 and sent to the drying device 8.

A gap amount between an outer peripheral edge of the anchor type stirring blade 84 and an inner bottom surface of the slurry tank 82 is not limited, but may be, for example, about 0.5 to 3.0 cm in order to prevent fine particles from accumulating and adhering to the inner bottom surface of the slurry tank 82, similarly to the anchor type stirring blade 34 described above. In addition, the length of the semicircular outer peripheral edge of the anchor type stirring blade 84 is preferably a length that can face the entire inner bottom surface of the slurry tank 82. Furthermore, the rotation peripheral speed of the motor 86 at the outer peripheral portion of the anchor type stirring blade 84 is not limited, but is preferably about 0.1 to 3.0 m/sec. Within such a range, an effect of preventing fine particles from being deposited and fixed on the inner bottom surface of the slurry tank 82 is obtained. In particular, in the case of manufacturing a positive electrode material precursor for a secondary battery, the fine particles are metal compounds and have a large specific gravity, which is an important effect.

[Drying Device]

Figs. 4 to 6 are a side cross-sectional view, a plan view from which a top plate is removed, and a front cross-sectional view illustrating a stirring heat transfer device as the drying device 8. The drying device 8 has a rectangular parallelepiped casing 92, and the casing 92 has a gutter shaped inner wall 194, an outer wall 198 covering an outer peripheral surface of the inner wall 194, and a rectangular top plate 196 closing an upper end of the inner wall 194. An airtight gap having a constant thickness is formed between the inner wall 194 and the outer wall 198 and this gap is a heat medium flow path 199, and a heat medium inlet 200 communicating with the heat medium flow path 199 and a heat medium outlet, which is not illustrated, are formed in the outer wall 198. By supplying high-temperature steam, heat medium oil, or the like from the heat medium inlet 200 to the heat medium outlet, the inside of the casing 92 can be uniformly heated.

An introduction port (inflow port) 96 is formed at an upper end on the upstream side (one end) of the casing 92, and a conduit 94 is connected thereto. A gas inlet 174 is formed in the upper surface on the upstream side of the casing 92, a gas outlet 175 is formed in the upper surface on the downstream side (the other end), normal temperature or heated air or the like is blown from the gas inlet 174, and moist air or the like is discharged from the gas outlet 175 together with water vapor generated along with evaporation of the mother liquor and the washing liquid in the casing 92, so that water vapor generated in the casing 92 is discharged to the outside of the machine, whereby humidity can be maintained in an appropriate state. On the other hand, a discharge port (outflow hole) 98 is formed in the lower surface of the downstream end of the casing 92, and the fine particle powder dried in the casing 92 is discharged.

In the casing 92, two hollow rotation shafts 176 are symmetrically disposed along the longitudinal direction, and both ends or one end is rotatably supported by bearings about the axes of the two hollow rotation shafts 176.

Hollow stirring blades 178 are fixed to each hollow rotation shaft 176 at regular intervals in the axial direction, and in a region between two hollow rotation shafts 176, the hollow stirring blades 178 of one hollow rotation shaft 176 are located in the middle in the axial direction of the hollow stirring blades 178 of the other hollow rotation shaft 176. The two hollow rotation shafts 176 may be parallel to each other.

As illustrated in Fig. 6, each of the hollow stirring blades 178 has a fan shape having a central angle of less than 180°, and hollow stirring blades 178 forming a pair is fixed at positions rotationally symmetric about the hollow rotation shaft 176 by 180°. A notch 190 having a constant width is formed between the hollow stirring blades 178 forming a pair so that a mixture of the final concentrated slurry and a wet powder passes in the axial direction. The inside of the hollow stirring blade 178 is hollow, communicates with the internal space of the hollow rotation shaft 176, and the heat medium supplied to the hollow rotation shaft 176 also enters the inside of the hollow stirring blade 178 to heat the hollow stirring blade 178. This may be referred to as a heating mechanism of the hollow stirring blade 178.

The wet powder is a dried product of the final concentrated slurry held in advance in the casing 92, and is not completely dried but is moist. By mixing the wet powder held in advance with the final concentrated slurry, abnormal adhesion that hinders the function of the drying device 8 is avoided, and transfer in the casing 92 by the hollow stirring blades 178 is facilitated.

As illustrated in Figs. 4 and 5, the hollow stirring blades 178 forming a pair are inclined in opposite directions with respect to the hollow rotation shaft 176, and each time the hollow rotation shaft 176 rotates by 180°, trajectories of the hollow stirring blades 178 swing in the axial direction within a certain angle range as illustrated by a solid line and a dotted line in the drawings. This swinging achieves a function of mixing the final concentrated slurry and the wet powder while preventing the final concentrated slurry and the wet powder from adhering to the hollow stirring blades 178 between the hollow stirring blades 178 adjacent in the axial direction. In addition, the hollow stirring blade 178 also has a twist along a virtual spiral plane around the hollow rotation shaft 176, and also functions to gradually transfer the mixture of the final concentrated slurry and the wet powder from the upstream side to the downstream side of the casing 92 as the hollow rotation shaft 176 rotates.

The hollow stirring blades 178 and the hollow rotation shaft 176 are formed of metal having high thermal conductivity, and a heat medium introduction hole 184 and a heat medium discharge hole 182 are formed at an end on the upstream side of the hollow rotation shaft 176. A heat medium such as high-temperature steam or heat medium oil is continuously supplied from a heat medium source, which is not illustrated, to the heat medium discharge hole 182 from the heat medium introduction hole 184, and the heat medium spreads over the entire length of the hollow rotation shaft 176, and enters the insides of the hollow stirring blades 178, and the entire hollow rotation shaft 176 and the hollow stirring blades 178 are heated to a temperature equal to or higher than the boiling points of the mother liquor and the washing liquid contained in the final concentrated slurry and the wet powder. Thus, every time the mixture of the final concentrated slurry and the wet powder comes into contact with the hollow rotation shaft 176 and the hollow stirring blades 178, the mixture is heated by conductive heat transfer, and the mother liquor and the washing liquid contained in the mixture are evaporated, and eventually, the mixture becomes a fine particle powder. A rotation mechanism 180 is provided at one end of the hollow rotation shaft 176, and the hollow rotation shafts 176 are simultaneously reversely rotated by a motor, which is not illustrated, and the mixture of the final concentrated slurry and the wet powder held in the casing 92 is transferred in a transfer direction T from upstream to downstream of the casing 92 while being heated by conductive heat transfer excellent in thermal efficiency by the hollow stirring blade 178. Note that heating by conductive heat transfer may be referred to as indirect heating. In addition, the positional relationship between the heat medium introduction hole 184 and the heat medium discharge hole 182 illustrated in Fig. 4 may be reversed. That is, the heat medium discharge hole 182 may be provided on the radially inner side of the heat medium introduction hole 184.

The fine particle powder discharged from the discharge port 98 of the drying device 8 is stored in the storage container 102 through the carry-out path 100 as illustrated in Fig. 7. Note that the number of the hollow rotation shafts 176 is not limited to two, and may be two or more. Thus, it can be said that a plurality of hollow rotation shafts 176 is sufficient. The plurality of hollow rotation shafts 176 may also be parallel to each other.

The fine particle powder manufacturing method by the fine particle powder manufacturing apparatus 21 described above is performed as follows.

[Fine Particle Slurry Manufacturing Process]

First, the crystallization device 10 and the reservoir 18 are filled with the mother liquor as an initial state. The stirring blade 128 is rotated by the motor 126, and the pump 22 is operated to blow the mother liquor in the reservoir 18 from the introduction port 115 into the reaction vessel 116, thereby generating a swirling flow in the reaction vessel 116. The first raw material 12A is supplied from the first inner tube 112, the second raw material 12B is supplied from the second inner tube 114, the both are intensely mixed in the center region R in the tapered portion 116A, and fine particles are generated by reaction between the first raw material 12A and the second raw material 12B. The mother liquor containing the fine particles is returned to the reservoir 18 through the conduit 16, and a fine particle slurry is generated in the reservoir 18 as the mother liquor repeats circulation. The pressure of the mother liquor introduced from the introduction port 115 is measured by the pressure gauge 122, the flow rate of the fine particle slurry flowing out from the discharge hole 14 is appropriately adjusted by the flow rate adjusting valve 118, and the solid content concentration of the fine particle slurry in the reservoir 18 is adjusted to an appropriate range.

[Initial Concentration Process]

When the solid content concentration of the fine particle slurry in the reservoir 18 reaches an appropriate range, an initial concentration process for concentrating the fine particle slurry and converting it to an initially concentrated slurry is started. The initial concentration process is a process of performing so-called dehydration before washing. In the initial concentration process, the three-way valve 70 is controlled to set a circulation path so that the slurry discharged from the stirring type cross-flow filtration device 6 returns to the slurry tank 30 through the conduit 72. In the initial concentration process, the supply of the washing liquid is stopped.

The extraction valve 132 is opened to allow the fine particle slurry in the reservoir 18 to flow out from the outlet 26 through the conduit 28 and be transferred to the slurry tank 30 by the pump 134. In the slurry tank 30, the anchor type stirring blade 34 is rotated by the motor 36, and the pump 54 is operated while precipitation of the fine particles in the fine particle slurry is prevented to supply the fine particle slurry from the discharge hole 52 to the stirring type cross-flow filtration device 6. As illustrated in Fig. 3, the fine particle slurry is continuously introduced into the slurry chamber 150 in the casing 60 from the introduction port 144 of the stirring type cross-flow filtration device 6.

In the slurry chamber 150, the slurry is pressurized by a discharge pressure of the pump 54, the stirring blade 142 is continuously rotated by the motor 62, the fine particle slurry is pressed against the side surface of the filter 146 while being stirred by the stirring blade 142, and the mother liquor in the fine particle slurry is filtered by the filter 146 and flows into the filtrate chamber 148. As the fine particle slurry advances downstream in the casing 60, the mother liquor in the fine particle slurry decreases and becomes a slurry concentrated to some extent and is discharged from the discharge port 64. The discharged slurry is returned to the slurry tank 30 via the three-way valve 70 and the conduit 72.

The filtrate flowing into the filtrate chamber 148 is collected in the conduit 156 via the filtrate discharge valve 154.

In the initial state, the conduit 156 is connected to the waste flow path 78 by the three-way valve 74, and the initial filtrate with a large amount of impurities is discarded into the liquid discharge path 80. This process is repeated while the density of the slurry is measured by the density sensor 66 until the density of the fine particle slurry reaches a predetermined value and an initially concentrated slurry having the solid content concentration described above is obtained.

[Dilution Washing Process]

When an initially concentrated slurry having a predetermined concentration is obtained in the slurry tank 30, the initial concentration process is completed, and the dilution washing process of diluting and washing the initially concentrated slurry with the washing liquid is started. In the dilution washing process, the three-way valve 70 maintains a circulation path through which the slurry discharged from the stirring type cross-flow filtration device 6 returns to the slurry tank 30 through the conduit 72. Even in this state, the filtrate collected in the conduit 156 via the filtrate discharge valve 154 is discharged to the liquid discharge path 80 as filtrate with a large amount of impurities via the three-way valve 74 and the waste flow path 78.

Further, while performing density management by the density sensor 66 and level management of the slurry tank 30, the on-off valve 44 is opened, the conduit 46 is connected to the slurry tank 30 by the three-way valve 42, and the pump 48 is operated to first supply the washing liquid from the washing liquid tank 50 to the slurry tank 30. The washing liquid tank 50 stores a relatively clean washing liquid obtained in the previous manufacturing of the fine particle powder. This is because immediately after the start of the dilution washing process (first stage), the initially concentrated slurry contains a large amount of impurities, so that a sufficient washing effect can be obtained even with a washing liquid having low cleanliness. Thus, while the initially concentrated slurry is circulated between the slurry tank 30 and the stirring type cross-flow filtration device 6, washing in the slurry tank 30 and filtration by the stirring type cross-flow filtration device 6 are continued. Since the filtration is continued as described above, the dilution washing process may be referred to as a dilution washing filtration process.

As the washing liquid from the washing liquid tank 50 is continuously supplied to the slurry tank 30 and the washing of the initially concentrated slurry progresses, impurities (electrolyte component, non-electrolyte component, and ultrafine particle) in the filtrate discharged from the stirring type cross-flow filtration device 6 decrease, so that the conductivity of the filtrate indicated by the conductivity sensor 71 installed in the conduit 156 decreases. At a time point when the numerical value of the conductivity sensor 71 reaches a target value (target value for switching the washing liquid to be supplied to the slurry tank 30 from the washing liquid in the washing liquid tank 50 to the clean washing liquid of the washing liquid source 38) (or at a time point when the amount of liquid in the washing liquid tank 50 sufficiently decreases), the pump 48 is stopped by automatic control by the control unit 69 or manually, the supply of the reusable washing liquid from the washing liquid tank 50 is stopped, and then the three-way valve 42 is automatically controlled by the control panel, which is not illustrated, or manually operated to start the supply of the clean washing liquid from the washing liquid source 38 to the slurry tank 30. Note that the three-way valve 42 may be controlled by the control unit 69.

As the washing and filtration of the initially concentrated slurry proceed using the clean washing liquid from the washing liquid source 38, the impurities in the filtrate discharged from the stirring type cross-flow filtration device 6 further decrease, so that the conductivity of the filtrate indicated by the conductivity sensor 71 installed in the conduit 156 decreases. At a time point when the numerical value of the conductivity sensor 71 reaches the next target value (target value indicating completion of washing) and the density of the fine particle slurry reaches a predetermined value, the washing liquid source 38 is stopped, and the three-way valve 42 and the on-off valve 44 are automatically controlled by the control panel, which is not illustrated, or manually operated to stop the supply of the washing liquid. Note that the three-way valve 42 and the on-off valve 44 may be controlled by the control unit 69.

[Final Concentration Process]

When the supply of the washing liquid is stopped and the dilution washing process is completed, a final concentration process of finally concentrating the washed slurry is performed. In the final concentration process, the washed slurry is supplied to the stirring type cross-flow filtration device 6 and separated into the concentrated washed slurry and the filtrate. The concentrated washed slurry is returned to the slurry tank 30. As described above, the washed slurry is continuously filtered by the stirring type cross-flow filtration device 6 while being circulated between the slurry tank 30 and the stirring type cross-flow filtration device 6. Therefore, the slurry in the slurry tank 30 is gradually concentrated. Note that the final concentration process may be referred to as a concentration process.

[Flow Path Switching Process]

When the conductivity of the filtrate measured by the conductivity sensor 71 provided in the conduit 156 eventually falls below a predetermined target value, it is determined that the filtrate is clean enough to be used for primary washing in the slurry tank 30, the three-way valve 74 is switched by automatic control by the control unit 69, and the filtrate from the conduit 156 is stored in the washing liquid tank 50 through a return flow path 76. When the filtrate is sufficiently cleaned, not only the final concentration process but also the storage in the washing liquid tank 50 may be started from the subsequent stage of the dilution washing process.

Note that, when a second density sensor, which is not illustrated, is installed in the conduit 156, the density of the filtrate measured by the second density sensor can be used as an index of the degree of cleanliness of the filtrate. In this case, the density is set as a threshold in advance, and when the measured density falls below the threshold, the three-way valve 74 is switched and the filtrate is stored in the washing liquid tank 50.

In this case, a configuration including at least one of the conductivity sensor 71 or the second density sensor is referred to as a filtrate sensor. Therefore, the filtrate sensor including at least one of the conductivity sensor 71 or the second density sensor that measures the density of the filtrate may be provided in the conduit 156, and the control unit 69 may switch the three-way valve 74 so as to cause the filtrate to flow to the waste flow path 78 when a measurement result of the filtrate sensor is equal to or more than a threshold, and cause the filtrate to flow to the return flow path 76 when the measurement result of the filtrate sensor is less than the threshold. In this case, the filtrate sensor is provided on the downstream side of the stirring type cross-flow filtration device 6 and on the upstream side of the three-way valve 74 as a flow path switching device.

When the density of the final concentrated slurry discharged from the discharge port 64 of the stirring type cross-flow filtration device 6 by the density sensor 66 reaches the density target value of the final concentration process, the flow rate adjusting valve 68 and the three-way valve 70 are automatically controlled by the control panel, which is not illustrated, or manually operated to send the final concentrated slurry to the slurry tank 82. Note that the flow rate adjusting valve 68 and the three-way valve 70 may be controlled by the control unit 69. The final concentrated slurry stored in the slurry tank 82 is stirred by the anchor type stirring blade 84 so as to prevent precipitation, and the drying process is started. Note that, in the present embodiment, the concentrated slurry is returned to the slurry tank 30 and filtered while being circulated, but the present invention is not limited thereto, and the concentrated slurry can be supplied to the slurry tank 82 without being circulated.

[Drying Process]

The drying process is a process of drying the final concentrated slurry to a fine particle powder state. In the drying process, the final concentrated slurry in the slurry tank 82 is sent to the drying device 8 by the pump 90, and introduced into the casing 92 from the introduction port 96 through the conduit 94. In the casing 92, the two hollow rotation shafts 176 continuously rotate, and the hollow stirring blades 178 are heated by high-temperature steam, heat medium oil, or the like supplied to the heat medium introduction hole 184. With the rotation of the hollow stirring blades 178, the final concentrated slurry and the wet powder held in the casing 92 are mixed, and the mixture is sent in the transfer direction T. In the process, the mixture is heated by conductive heat transfer by the heated hollow stirring blades 178 while preventing the mixture from adhering to the hollow stirring blades 178 between the adjacent hollow stirring blades 178 by the swinging of the hollow stirring blades 178, and the drying processing of the mixture proceeds. That is, heating and drying are performed. By blowing normal temperature or heated air or the like from the gas inlet 174 and discharging moist air or the like from the gas outlet 175, water vapor generated in the casing 92 is discharged to the outside of the apparatus, whereby the humidity in the apparatus is maintained in an appropriate state. By the time the mixture reaches the downstream side of the casing 92, the mixture becomes fine particle powder, and is sequentially discharged from the discharge port 98. The fine particle powder discharged from the discharge port 98 is stored in the storage container 102 through the carry-out path 100.

[Effects of Present Embodiment]

By the fine particle slurry washing and concentrating apparatus, the fine particle powder manufacturing method, and the fine particle powder manufacturing apparatus 21 described above, an index such as conductivity or density of a filtrate discharged from the stirring type cross-flow filtration device 6 via the conduit 156 is constantly monitored by the filtrate sensor, and when the conductivity or density of the filtrate is equal to or higher than a threshold, the filtrate is discarded. On the other hand, when the conductivity or density of the filtrate falls below the threshold, it is determined that the filtrate is clean enough to be used for primary washing in the slurry tank 30, the control unit 69 switches the three-way valve 74 as a flow path switching device, and the filtrate from the conduit 156 is stored in the washing liquid tank 50 through the return flow path 76. Therefore, the use amount of the washing liquid of the washing liquid source 38 can be reduced, which helps to reduce the cost of fine particle powder manufacturing.

Furthermore, it is possible to reduce the amounts of filtrate and washing waste liquid discarded outside the fine particle powder manufacturing apparatus 21, and it is possible to reduce the load on the environment.

In addition, in this embodiment, the first raw material 12A and the second raw material 12B are reacted in the mother liquor in which a high-speed swirling flow is generated in the crystallization device 10 in the fine particle slurry manufacturing process to manufacture a slurry containing fine particles having a particle diameter equal to or less than 7 $\mu$m, and thereafter, through the initial concentration process, the dilution washing process, and the final concentration process, washing and high-level concentration using the stirring type cross-flow filtration device 6 can be efficiently performed without causing clogging of a filter or a flow path, and further, in the drying process, the final concentrated slurry and the wet powder are mixed, and the heated hollow stirring blade 178 is brought into contact with the mixture to perform heating by conductive heat transfer, so that it is possible to manufacture fine particles having a particle diameter equal to or less than 7 $\mu$m with high manufacturing efficiency while suppressing energy cost.

In addition, in the fine particle slurry manufacturing process, a solution containing a transition metal element as the first raw material 12A and an alkali solution as the second raw material 12B are used and the both are reacted, whereby fine particles containing a transition metal hydroxide as a main component can be obtained, and a fine particle powder as a positive electrode material precursor for a secondary battery can be manufactured with high manufacturing efficiency while suppressing energy cost.

Further, in the initial concentration process, the fine particle slurry is filtered by the stirring type cross-flow filtration device 6 and concentrated to, for example, a solid content of 35 to 65 wt% to obtain an initially concentrated slurry, so that removal efficiency of impurities from the slurry before washing is high, the amount of washing liquid and the washing time consumed in the dilution washing process can be reduced, the energy cost is suppressed, and the manufacturing efficiency can be increased while eliminating problems such as filter clogging by fine particles.

Further, in the final concentration process, the washed slurry is concentrated to, for example, a solid content of 50 to 65 wt% by removing a part of the mother liquor and the washing liquid by the stirring type cross-flow filtration device 6. Thus, the amount of the mother liquor and the amount of the washing liquid to be removed in the drying process can be reduced, the energy cost is suppressed, and the manufacturing efficiency is enhanced.

Further, in the crystallization device 10, since the mother liquor is circulated by the pump 22, it is easy to generate a high-speed swirling flow with simple equipment, fine particles having a particle diameter equal to or less than 7 μm, preferably equal to or less than 5 μm can be precipitated by uniformly mixing the first raw material 12A and the second raw material 12B in the high-speed swirling flow in an extremely short time, and the particle diameter of the finally obtained fine particle powder can be reduced and the particle diameter distribution can be narrowed, so that a high-quality final product can be expected.

Further, in the drying device 8, since the hollow stirring blades 178 of the hollow rotation shafts 176 are fixed at intervals in the axial direction to the respective hollow rotation shafts 176 so that the hollow stirring blades 178 of the respective hollow rotation shafts 176 partially overlap each other when viewed in the axial direction, as the hollow stirring blades 178 rotate, the heated hollow stirring blades 178 mix and transfer the final concentrated slurry and the wet powder held in the casing 92, and during that time, the mixture of the final concentrated slurry and the wet powder held in the casing 92 is dried by conductive heat transfer to be converted into the fine particle powder. Therefore, moisture can be efficiently evaporated as compared with hot air drying by convection heat transfer in which hot air is blown, and an excellent effect of suppressing energy cost and increasing manufacturing efficiency is obtained.

Note that the present invention is not limited only to the above embodiments, and it is possible to add, delete, and replace components with well-known techniques within the scope described in the claims.

In the description of the above embodiment, the case where the flow path is switched by the three-way valve 74, which is a flow path switching device, as to whether to discard the filtrate discharged from the stirring type cross-flow filtration device 6 through the conduit 156 or to store the filtrate in the washing liquid tank 50 through the return flow path 76 has been described. However, the flow path switching device is not necessarily limited to the three-way valve 74, and the return flow path 76 and the waste flow path 78 may each include an on-off valve, so that the opening degree of each on-off valve can be controlled.

In the above embodiment, the conduit 46 is connected to the three-way valve 42, but may be directly connected from the pump 48 to the slurry tank 30. With such a configuration, the washing liquid from the washing liquid source 38 and the washing liquid from the washing liquid tank 50 can be simultaneously supplied to the slurry tank 30.

Subsequently, a fine particle powder manufacturing apparatus 31 according to a third embodiment and a fourth embodiment of the present invention will be described in detail. Description of configurations similar to those of the first embodiment will be basically omitted, and differences from the first embodiment will be mainly described.

The fine particle powder manufacturing apparatus 31 according to the third embodiment and the fourth embodiment is different from the first embodiment in that a pump 41 is provided in the conduit 40. The fine particle powder manufacturing apparatus 31 according to the fourth embodiment is different from the first embodiment in that a second density sensor 73 is provided in the conduit 156.

[Second Density Sensor]

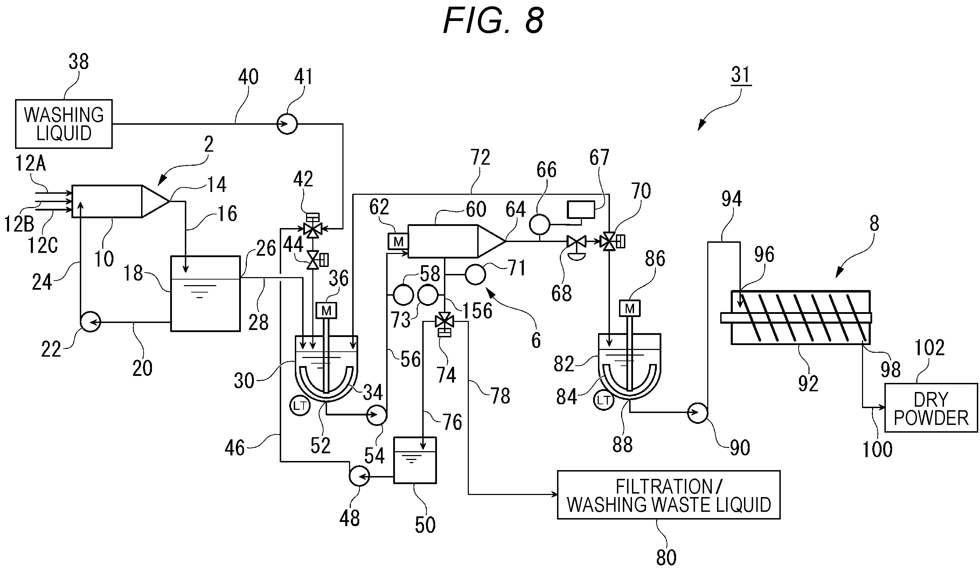

In the fine particle powder manufacturing apparatus 31 according to the third embodiment and the fourth embodiment of the present invention illustrated in Fig. 8, a sensor for measuring other physical properties may be provided instead of the conductivity sensor 71 or in addition to the conductivity sensor 71, and the completion timing of the dilution washing process may be determined using the output thereof. For example, as described in Modification 2 of the third embodiment, the fourth embodiment, and Modifications 1 and 2 of the fourth embodiment described later, the second density sensor 73 may be provided in the conduit 156 serving as the filtrate outlet of the stirring type cross-flow filtration device 6 to measure the density of the filtrate. The second density sensor 73 continuously measures the density of the filtrate discharged from the stirring type cross-flow filtration device 6, and transmits the density to the control device 67. The control device 67 that has received the output of the second density sensor 73 may detect the degree of progress of the dilution washing process from the density of the filtrate and determine the completion timing of the dilution washing process.

At the time of initial concentration and for a while after the start of washing by the stirring type cross-flow filtration device 6, the filtrate entering the filtrate chamber 148 has a large amount of impurities, but as the filtration time elapses, the filtrate becomes a filtrate having a small amount of impurities, so that the conductivity detected by the conductivity sensor 71 decreases. Therefore, the three-way valve 74 is switched by the control device 67 at the timing when the conductivity reaches the predetermined threshold, and the filtrate flowing to the liquid discharge path 80 is stored in the washing liquid tank 50. The relatively clean filtrate stored in the washing liquid tank 50 is supplied as a washing liquid to the slurry tank 30 through the conduit 46, the three-way valve 42, and the on-off valve 44 by moving the pump 48 in the next dilution washing process, and is used as a washing liquid in the initial stage of the dilution washing process. This makes it possible to reduce the amount of washing liquid used by the washing liquid source 38, which helps to reduce the cost of manufacturing the fine particle powder. Furthermore, it is possible to reduce the amounts of filtrate and washing waste liquid discarded outside the fine particle powder manufacturing apparatus 31, and it is possible to reduce the load on the environment.

A downstream portion of the casing 60 is a conical tapered portion 152 that narrows toward the downstream side, and a discharge port 64 is formed at a distal end of the tapered portion 152. The slurry in various states is transferred to the downstream side while meandering in the slurry chamber 150, and moisture is removed. Filtration and concentration are performed by the stirring type cross-flow filtration device 6 while circulating through the slurry tank 30 and the stirring type cross-flow filtration device 6, and concentrated slurry having high viscosity is discharged from the discharge port 64.

An optimum value of solid content concentration of the concentrated slurry discharged from the discharge port 64 of the stirring type cross-flow filtration device 6 is different among the initial concentration process, the dilution washing process, and the final concentration process, and is not necessarily limited. As a preferred example, for example, in the case of manufacturing a positive electrode material precursor for a secondary battery, the solid content concentration in the initially concentrated slurry is preferably equal to or more than 35 wt% and equal to or less than 65 wt%, more preferably equal to or more than 45 wt% and equal to or less than 65 wt% at the time of completion of the initial concentration process. The solid content concentration of the washed slurry at the time of completion of the dilution washing process is preferably equal to or more than 35 wt% and equal to or less than 60 wt%, and more preferably equal to or more than 35 wt% and equal to or less than 45 wt%. The solid content concentration of the concentrated slurry at the time of completion of the final concentration process is preferably 50 wt% to 65 wt%, more preferably equal to or more than 60 wt% and equal to or less than 65 wt%.

In each process, when the concentration range is as described above, it is not difficult to transfer the concentrated slurry in the casing 60 of the stirring type cross-flow filtration device 6, and it is possible to effectively reduce the impurity amount of final concentrated slurry while limiting the consumption amount of the washing liquid. Therefore, the load balance between the stirring type cross-flow filtration device 6 and the drying device 8 is good, and it is possible to increase the total processing efficiency and energy efficiency without exerting strain on each process.

[Density Sensor]

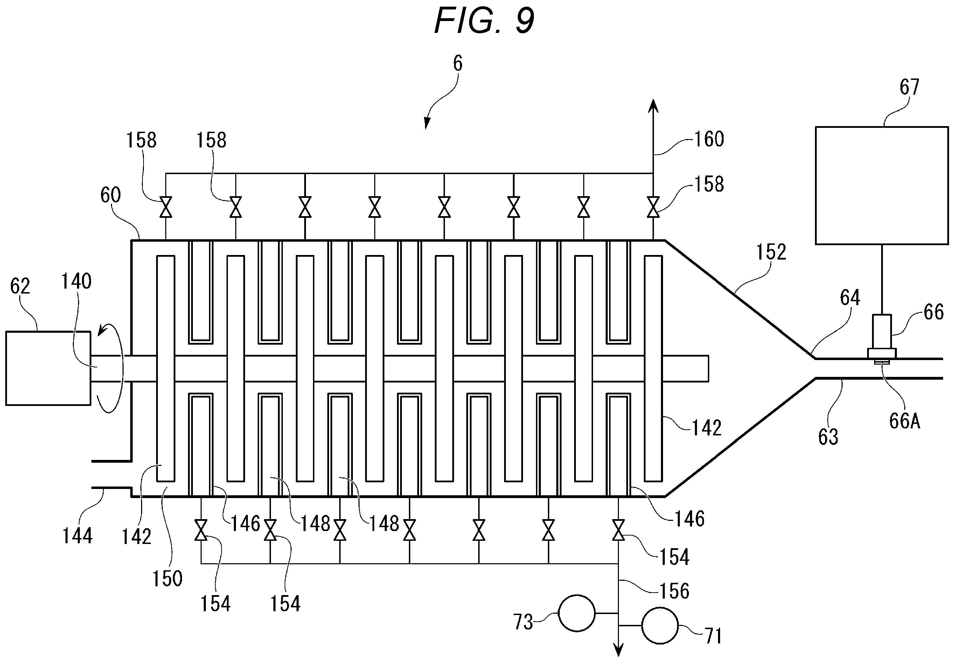

As illustrated in Figs. 8 and 9, the discharge port 64 of the casing 60 is connected to the first port of the three-way valve 70 (path switching device) via the conduit 63 and the flow rate adjusting valve 68, a density sensor 66 is installed in a part of the conduit 63, and an output thereof is connected to the control device 67. The density sensor 66 is not limited, but a vibration type in-line density sensor including a vibrator 66A in contact with the concentrated slurry to be subjected to concentration measurement, and a controller, which is not illustrated, that vibrates the vibrator 66A and measures a resonance frequency thereof can be used. The vibrator 66A of the density sensor 66 is hermetically inserted into the conduit 63 from the outlet 64 to the flow rate adjusting valve 68 so as to be in contact with the concentrated slurry flowing in the conduit 63. Thus, when the vibrator 66A vibrates, the resonance frequency of the vibrator 66A decreases as the density of the concentrated slurry in contact with the vibrator 66A increases, so that it is possible to measure the density of the concentrated slurry with high accuracy by measuring the resonance frequency. Note that, in the present invention, a density sensor other than the vibration type or the in-line type may be used, or any sensor can be used as the density sensor as long as it can measure some physical properties of the slurry and indirectly estimate the density of the slurry based on the physical properties. The second density sensor 73 may be similar to the density sensor 66.

The following Formula 1 indicates the relationship among the solid content concentration c (wt%) in the slurry, the density $\rho_{slurry}$ (g/cm$^3$) of the slurry, the true density $\rho_{solid}$ (g/cm$^3$) of the fine particles in the slurry, and the density $\rho_{liquid}$ (g/cm$^3$) of the liquid in the slurry. In order to set the solid content concentration c (wt%) in the slurry to, for example, 50 wt%, c = 50 is substituted, and the density $\rho_{slurry}$ (g/cm$^3$) of the slurry, the true density $\rho_{solid}$ (g/cm$^3$) of the fine particles in the slurry, and the density $\rho_{liquid}$ (g/cm$^3$) of the liquid in the slurry may be adjusted so as to satisfy Formula 1.

The density $\rho_{slurry}$ (g/cm$^3$) of the slurry is a density in a slurry state in which a liquid (mother liquor + washing liquid), fine particles, and impurities are mixed, and can be measured by the density sensor 66. The true density $\rho_{solid}$ (g/cm$^3$) of fine particles in the slurry is a value determined by the type (material type, particle form/shape, and particle diameter) of fine particles to be manufactured, and can be determined in advance. The density $\rho_{liquid}$ (g/cm$^3$) of the liquid in the slurry is a density in a state of containing a medium (mainly water), electrolyte solutes and non-electrolyte solutes dissolved in the medium, and ultrafine particles dispersed in the medium through a filter of the stirring type cross-flow filtration device 6. In the third embodiment, $\rho_{liquid}$ (g/cm$^3$) can be approximately estimated by measuring the amount of the electrolyte solute as the conductivity by the conductivity sensor 71, but in the fourth embodiment in which the second density sensor 73 is provided, the density $\rho_{liquid}$ (g/cm$^3$) of the liquid can be directly measured by the second density sensor 73. Therefore, as compared with the third embodiment in which $\rho_{liquid}$ (g/cm$^3$) is indirectly obtained by the conductivity sensor 71, in the fourth embodiment, the density $\rho_{liquid}$ (g/cm$^3$) of the liquid is directly measured by the second density sensor 73, and the solid content concentration c (wt%) in the slurry can be grasped and controlled more accurately.

[Math. 1]

$$\rho_{slurry} = \frac{\rho_{solid} \times \rho_{liquid}}{\rho_{solid} \times \left(1-\frac{c}{100}\right) + \rho_{liquid} \times \frac{c}{100}}$$

A second port of the three-way valve 70 is connected to the slurry tank 30 via the conduit 72 (second flow path). The third port of the three-way valve 70 is connected to the slurry tank 82 for concentrated slurry storage provided at the front stage of the drying device 8. The three-way valve 70 is switchably controlled by the control device 67 or can be manually switched in response to an instruction from the control device 67. By operating the three-way valve 70, the slurry in various states discharged from the discharge port 64 of the stirring type cross-flow filtration device 6 can be returned to the slurry tank 30 and circulated, or can be supplied to the slurry tank 82 serving as a buffer of the drying device 8.

The concentrated slurry discharged from the discharge port 64 of the stirring type cross-flow filtration device 6 has a slurry density measured by the density sensor 66, and an output signal of the density sensor 66 is transmitted to the control device 67. There are mainly two purposes of the density sensor 66, and the first is to measure the timing at which the concentrated slurry discharged from the stirring type cross-flow filtration device 6 is sufficiently dehydrated and reaches a predetermined density, grasp the timing of at least one of a completion timing of the initial concentration process (A) and the completion timing of the final concentration process (C), and use it for control to shift to the next process.

Note that, when the completion timing of the dilution washing process (B) is determined, it is preferable to satisfy any one of the following conditions: (1) the conductivity of the filtrate decreases to a predetermined threshold based on the output of the conductivity sensor 71, and the density of the concentrated slurry increases to a predetermined threshold based on the output of the density sensor 66; and (2) the conductivity of the filtrate decreases to the predetermined threshold based on the output of the conductivity sensor 71 (the output of the density sensor 66 is not involved in the determination criteria).

A second purpose of the slurry density measurement by the density sensor 66 is to enhance the washing effect of the slurry in the dilution washing process. Specifically, a lower limit value and an upper limit value are set to a density value corresponding to the output signal of the density sensor 66, and when the upper limit value is reached, the supply of the washing liquid from the washing liquid source 38 to the slurry tank 30 is increased (or resumed from a pause), and when the lower limit value is reached, the supply of the washing liquid from the washing liquid source 38 is reduced (or paused), whereby the solid content concentration of the concentrated slurry discharged from the stirring type cross-flow filtration device 6 in the dilution washing process is maintained within a certain range until the conductivity of the filtrate discharged from the stirring type cross-flow filtration device 6 is sufficiently lowered, and the washing degree is adjusted.

[Control Device]

The control device 67 may be implemented by hardware such as a computer including a circuit unit executing a software program. The hardware is, for example, a central processing unit (CPU), a large scale integration (LSI), an application specific integrated circuit (ASIC), a field-programmable gate array (FPGA), a graphics processing unit (GPU), or the like. The program is stored in a storage device including a storage medium, and the storage medium is, for example, a hard disk drive (HDD), a flash memory, a read only memory (ROM), a digital versatile disc (DVD), or the like. The program may be a differential program that implements a part of the functions of the control device 67. The control device 67 may include an output device such as a display and a speaker, and may be configured to generate an image or a sound through the output device instead of directly controlling each unit of the device and instruct the worker to perform switching operation of each unit.

[Process Switching Control of Third Embodiment]

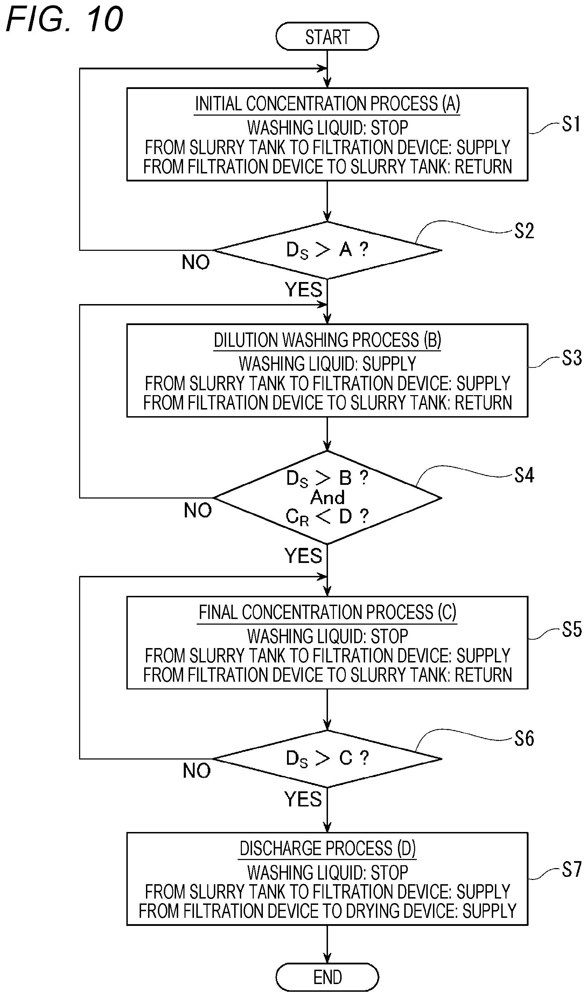

A specific example of switching control of the initial concentration process (A), the dilution washing process (B), the final concentration process (C), and the discharge process (D) by the control device 67 in the third embodiment will be described with reference to a flowchart of Fig. 10.

In the initial concentration process (A), the amount of impurity components dissolved in the filtrate is relatively large, and the density of the filtrate is high. On the other hand, in the final concentration process (C) after the dilution washing process (B), since the amount of impurity components dissolved in the filtrate is reduced, the density of the filtrate is lower than the density of the filtrate in the initial concentration process (A). As described above, since the density (g/cm$^3$) of the filtrate in each process is different, the slurry density (g/cm$^3$) is different even at the same slurry concentration (wt%).

Thus, it is preferable that the control device 67 stores in advance slurry densities (g/cm$^3$) corresponding to desired densities of the filtrate at the stage of ending respective processes as thresholds A, B, and C of the respective processes, and performs control to grasp the completion timings of the respective processes.

When the program is started, the control device 67 of the third embodiment sets the initial concentration process (A) in step S1. The pump 41 is stopped, and the supply of the washing liquid from the washing liquid source 38 to the slurry tank 30 is stopped. The fine particle slurry stored in the slurry tank 30 is continuously supplied to the stirring type cross-flow filtration device 6 through the conduit 56 (first flow path) by the pump 54 which is a slurry supply device. Further, the three-way valve 70 as a flow path switching device brings the flow path between the stirring type cross-flow filtration device 6 and the slurry tank 30 into a communicating state through the conduit 72 (second flow path), and continuously returns the slurry discharged from the stirring type cross-flow filtration device 6 to the slurry tank 30. After completion of the setting, the process proceeds to step S2, where the density sensor 66 intermittently or continuously measures the density of the slurry discharged from the stirring type cross-flow filtration device 6, and whether the density $D_S$ corresponding to the output signal exceeds the threshold A is repeatedly determined. In a case where it does not exceed the threshold A, the process is repeated from step S1.

When the density $D_S$ corresponding to the output signal exceeds the threshold A, the process proceeds to step S3 to set the dilution washing process (B). Since the filtrate density is different for each process, the threshold B is set in accordance with the filtrate density suitable for completion of the dilution washing process (B). The pump 41 or the pump 48 is operated to start the supply of the washing liquid from the washing liquid source 38 or the washing liquid tank 50 to the slurry tank 30. The fine particle slurry stored in the slurry tank 30 is continuously supplied to the stirring type cross-flow filtration device 6 through the conduit 56 by the pump 54, and the slurry discharged from the stirring type cross-flow filtration device 6 through the conduit 72 is continuously returned to the slurry tank 30 by the three-way valve 70.

After completion of the setting, the process proceeds to step S4, where the density sensor 66 intermittently or continuously measures the density $D_S$ of the slurry discharged from the stirring type cross-flow filtration device 6, and the conductivity sensor 71 intermittently or continuously measures the conductivity $C_R$ (S/m) of the filtrate. Then, the determination as to whether the "the conductivity $C_R$ corresponding to the output signal of the conductivity sensor 71 falls below a preset conductivity threshold D (S/m), and the density $D_S$ corresponding to the signal of the density sensor 66 exceeds the threshold B ($C_R$ < D? and $D_S$ > B?)" condition is satisfied is repeated. If the condition is not satisfied, the process is repeated from step S3.

[Process Switching Control of Modification 1 of Third Embodiment]

As Modification 1 of the third embodiment, the determination condition in S4 in Fig. 10 may be only "the conductivity $C_R$ corresponding to the output signal of the conductivity sensor 71 is below the threshold D ($C_R$ < D?)". In this case, whether or not the concentration in the dilution washing process (B) is sufficient is not determined, but effects similar to those of the third embodiment can be obtained in other points. This is because even if the concentration in the dilution washing process (B) is insufficient, the concentration can be performed in the subsequent final concentration process (C).

[Process Switching Control of Modification 2 of Third Embodiment]

As Modification 2 of the third embodiment, the second density sensor 73 may be provided instead of the conductivity sensor 71, and the determination condition of S4 in Fig. 10 may be set to whether to satisfy the condition "density $D_R$ of the filtrate corresponding to the output signal of the second density sensor 73 falls below a preset threshold E of the filtrate density, and the density $D_S$ corresponding to the signal of the density sensor 66 exceeds a threshold B ($D_R$ < E? and $D_S$ > B?)" or the condition "the density $D_R$ of the filtrate corresponding to the output signal of the second density sensor 73 is below a preset threshold E of the filtrate density ($D_R$ < E?)". The threshold E is the appropriate density of the filtrate at the stage where the dilution washing process (B) is to be ended. In this case, when the density of the filtrate detected by the second density sensor 73 is less than the threshold E, impurities (In this case, the ultrafine particles dispersed in the electrolyte solute, the non-electrolyte solute, and the filter) in the filtrate are reduced, and it is determined that the washing has been sufficiently performed. Other effects similar to those of the third embodiment can be obtained. The third embodiment is different from the third embodiment in that the impurity concentration can be determined not only for the electrolyte solute but also for the non-electrolyte solute and the ultrafine particles.

In a case where any one of the following conditions is satisfied: "the density $D_S$ exceeds the threshold B and the conductivity $C_R$ falls below the threshold D" in the third embodiment; "the conductivity $C_R$ falls below the threshold D" in Modification 1 of the third embodiment; or "the density $D_R$ of the filtrate corresponding to the output signal of the second density sensor 73 falls below the threshold E, and the density $D_S$ corresponding to the signal of the density sensor 66 exceeds the threshold B" or "the density $D_R$ of the filtrate corresponding to the output signal of the second density sensor 73 falls below the threshold E" in Modification 2 of the third embodiment, the process proceeds to step S5 in Fig. 10, and the final concentration process (C) is set.

The threshold C is determined in accordance with the filtrate density stored in advance by the control device 67 at a stage where the final concentration process (C) is to be ended, and is stored in advance by the control device 67. The pump 41 is stopped, and the supply of the washing liquid from the washing liquid source 38 to the slurry tank 30 is stopped. The fine particle slurry stored in the slurry tank 30 is continuously supplied to the stirring type cross-flow filtration device 6 through the conduit 56 by the pump 54. The slurry discharged from the stirring type cross-flow filtration device 6 is continuously returned to the slurry tank 30 by the three-way valve 70. After completion of the setting, the process proceeds to step S6, where the density sensor 66 intermittently or continuously measures the density $D_S$ of the slurry discharged from the stirring type cross-flow filtration device 6, and whether the density $D_S$ corresponding to the output signal exceeds the threshold C is repeatedly determined. When the condition is not satisfied, the process is repeated from step S5.

When the density $D_S$ exceeds the threshold C, the discharge process (D) is set. The slurry stored in the slurry tank 30 is continuously supplied to the stirring type cross-flow filtration device 6 through the conduit 56 by the pump 54. The three-way valve 70 is switched so that the slurry discharged from the stirring type cross-flow filtration device 6 is continuously supplied to the slurry tank 82 leading to the drying device 8. Thus, the concentrated slurry is stored in the slurry tank 82.

[Process Switching Control of Fourth Embodiment]

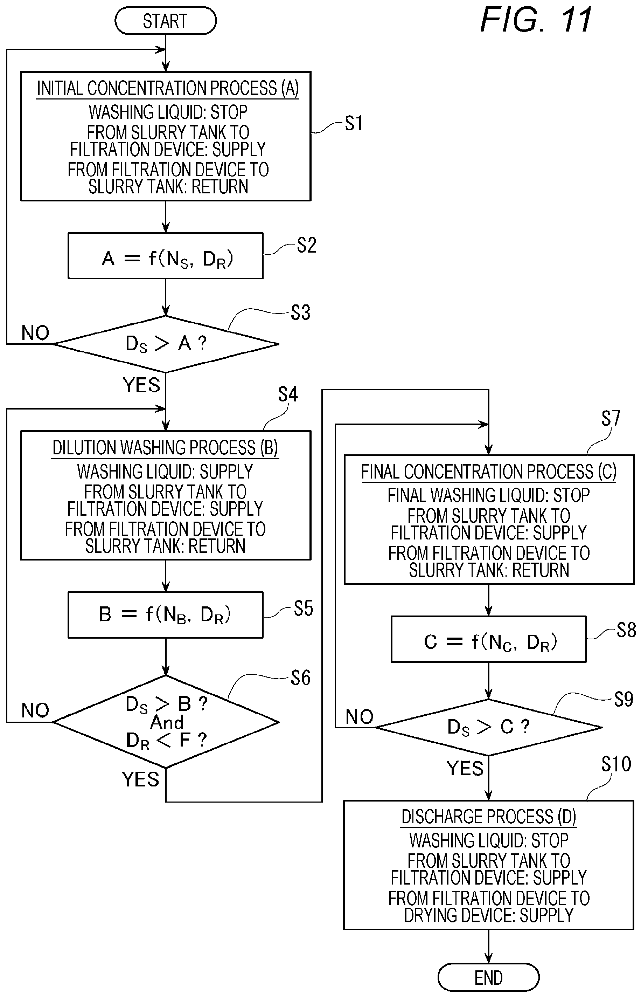

In the process switching control of the fourth embodiment, instead of the conductivity sensor 71 used in the third embodiment, the second density sensor 73 is provided in the conduit 156 which is the filtrate outlet of the stirring type cross-flow filtration device 6. This point is similar to Modification 2 of the third embodiment, but the control flow is different. In the fourth embodiment, as illustrated in Fig. 11, in each of the processes (A) to (C), the density $D_R$ (g/cm$^3$) of the filtrate is measured in real time by the second density sensor 73, and based on the target values $N_A$, $N_B$, and $N_C$ (wt%) of the solid content concentration (wt%) in each process and the density $\rho_{solid}$ (g/cm$^3$) of the fine particles to be manufactured, which are previously input in the control device 67, the thresholds A, B, and C (g/cm$^3$) of the slurry density (g/cm$^3$) are calculated for each determination cycle using Formula 1, and the thresholds A, B, and C (g/cm$^3$) of these slurry densities are compared with the slurry density $D_S$ (g/cm$^3$) at the time of determination.

As illustrated in Fig. 11, when the program is started, the control device 67 of the fourth embodiment sets the initial concentration process (A) in step S1. Since the content is the same as that in step S1 of the third embodiment, the description thereof is incorporated. After completion of the setting, the process proceeds to step S2, where the density sensor 66 intermittently or continuously measures the density $D_S$ (g/cm$^3$) of the slurry discharged from the stirring type cross-flow filtration device 6, and the second density sensor 73 intermittently or continuously measures the density $\rho_{liquid}$ (g/cm$^3$) of the filtrate discharged from the stirring type cross-flow filtration device 6. Further, the true density $\rho_{solid}$ (g/cm$^3$) of the fine particles in the slurry measured in advance, the real-time density $\rho_{liquid}$ (g/cm$^3$) of the filtrate measured by the second density sensor 73, and the target value $N_A$ (wt%) of the solid content concentration in the initial concentration process (A) are input to Formula 1, thereby calculating the slurry density $\rho_{slurry}$ (g/cm$^3$) as the threshold A at this time.

Next, the process proceeds to step S3, where the threshold A (g/cm$^3$) of the slurry density is compared with the slurry density $D_S$ (g/cm$^3$) measured in real time by the density sensor 66, and when the slurry density $D_S$ does not exceed the threshold A, the process returns to step S1, and the setting of step S1 is maintained. In step S2, the threshold A is recalculated based on the real-time density $\rho_{liquid}$ (g/cm$^3$) of the filtrate, and in step S3, the threshold A newly calculated is repeatedly compared with the slurry density $D_S$ (g/cm$^3$) measured in real time by the density sensor 66. When the slurry density $D_S$ eventually exceeds the threshold A, the process proceeds to step S4.

In step S4, the dilution washing process (B) is set. Since the content is the same as S3 of the third embodiment, the description thereof is incorporated. After completion of the setting, the process proceeds to step S5, where the density sensor 66 intermittently or continuously measures the density $D_S$ (g/cm$^3$) of the slurry discharged from the stirring type cross-flow filtration device 6, and the second density sensor 73 intermittently or continuously measures the density $\rho_{liquid}$ (g/cm$^3$) of the filtrate discharged from the stirring type cross-flow filtration device 6. Further, the true density $\rho_{solid}$ (g/cm$^3$) of the fine particles in the slurry measured in advance, the real-time density $\rho_{liquid}$ (g/cm$^3$) of the filtrate measured by the second density sensor 73, and the target value $N_B$ (wt%) of the solid content concentration in the dilution washing process (B) are input to Formula 1, thereby calculating the slurry density $\rho_{slurry}$ (g/cm$^3$) as the threshold B at this time.

Next, the process proceeds to step S6, where the threshold B (g/cm$^3$) of the slurry density is compared with the slurry density $D_S$ (g/cm$^3$) measured in real time by the density sensor 66 to determine whether the slurry density $D_S$ exceeds the threshold B and the real-time density $\rho_{liquid}$ (g/cm$^3$) of the filtrate is smaller than a preset threshold F of the filtrate density. If the condition is not satisfied, the process returns to step S4, the setting in step S4 is maintained, the threshold B is recalculated in step S5 based on the real-time density $\rho_{liquid}$ (g/cm$^3$) of the filtrate, and it is determined whether the newly calculated threshold B in step S5 exceeds the slurry density $D_S$ (g/cm$^3$) measured in real time by the density sensor 66 and the real-time density $\rho_{liquid}$ (g/cm$^3$) of the filtrate is smaller than the preset filtrate density threshold F. Eventually, when the determination condition is satisfied, the process proceeds to step S7.

In step S7, the final concentration process (C) is set. Since the content is the same as that in S5 of the third embodiment, the description thereof is incorporated. After completion of the setting, the process proceeds to step S8, where the density sensor 66 intermittently or continuously measures the density $D_S$ (g/cm$^3$) of the slurry discharged from the stirring type cross-flow filtration device 6, and the second density sensor 73 intermittently or continuously measures the density $\rho_{liquid}$ (g/cm$^3$) of the filtrate discharged from the stirring type cross-flow filtration device 6. Further, the true density $\rho_{solid}$ (g/cm$^3$) of the fine particles in the slurry measured in advance, the real-time density $\rho_{liquid}$ (g/cm$^3$) of the filtrate measured by the second density sensor 73, and the target value $N_C$ (wt%) of the solid content concentration in the final concentration process (C) are input to Formula 1, thereby calculating the slurry density $\rho_{slurry}$ (g/cm$^3$) as the threshold C at this time.

Next, the process proceeds to step S9, where the threshold C (g/cm$^3$) of the slurry density is compared with the slurry density $D_S$ (g/cm$^3$) measured in real time by the density sensor 66 to determine whether the slurry density $D_S$ exceeds the threshold C. If the condition is not satisfied, the process returns to step S7, the setting of step S7 is maintained, the threshold C is recalculated in step S8 based on the real-time density $\rho_{liquid}$ (g/cm$^3$) of the filtrate, and it is determined whether the slurry density $D_S$ (g/cm$^3$) measured in real time by the density sensor 66 exceeds the threshold C newly calculated in step S8. Eventually, when the determination condition is satisfied, the process proceeds to step S10.

In step S10, the discharge process (D) is set. The slurry stored in the slurry tank 30 is continuously supplied to the stirring type cross-flow filtration device 6 through the conduit 56 by the pump 54. The three-way valve 70 is switched so that the slurry discharged from the stirring type cross-flow filtration device 6 is continuously supplied to the slurry tank 82 leading to the drying device 8. Thus, the concentrated slurry is stored in the slurry tank 82.

By the process switching control of the fourth embodiment, in each of the processes (A) to (C), the density $D_R$ (g/cm$^3$) of the filtrate is measured in real time by the second density sensor 73, and based on the target values $N_A$, $N_B$, and $N_C$ (wt%) of the solid content concentration (wt%) in each of the processes and the density $\rho_{solid}$ (g/cm$^3$) of the fine particles to be manufactured, which are previously input in the control device 67, the thresholds A, B, and C (g/cm$^3$) of the slurry density (g/cm$^3$) are calculated for each determination cycle using Formula 1, and the thresholds A, B, and C (g/cm$^3$) of the slurry density are compared with the slurry density $D_S$ (g/cm$^3$) at the time of the determination, so that the thresholds A, B, and C (g/cm$^3$) of the slurry density can be corrected based on the real-time density $D_R$ (g/cm$^3$) of the filtrate in each determination, and there is an advantage that, even when the impurity concentration in the slurry fluctuates, more accurate control can be performed based on the target values $N_A$, $N_B$, and $N_C$ (wt%) of the solid content concentration in each process.

[Process Switching Control of Modification 1 of Fourth Embodiment]

As Modification 1 of the fourth embodiment, the conductivity sensor 71 may be used in combination with the second density sensor 73, and in addition to the flow of Fig. 11, a condition ($C_R < D$?) that the conductivity of the filtrate is equal to or less than the threshold may be added to the determination condition in step S6. That is, the determination condition in S6 of Fig. 11 may be "$D_S > B$? and $D_R < F$? and $C_R < D$?". Thus, it is possible to doubly monitor the concentration of the electrolyte solute having a large influence on the quality of the final product and to improve the control quality of the electrolyte impurities.

[Process Switching Control of Modification 2 of Fourth Embodiment]

As Modification 2 of the fourth embodiment, in place of the density $D_R$ of the filtrate in S6 of Fig. 11, the conductivity $C_R$ of the filtrate may be intermittently or continuously measured by the conductivity sensor 71, and the measured conductivity $C_R$ may be compared with the threshold D of the conductivity. That is, the determination condition in S6 of Fig. 11 may be "$D_S > B$? and $C_R < D$?". The threshold D is conductivity that is appropriate at a stage where the dilution washing process (B) should be completed, and is set in advance.

[Process Switching Control of Modification 3 of Fourth Embodiment]

As Modification 3 of the fourth embodiment, a slurry concentration can be used instead of the slurry density as a threshold used in each process. In this case, in each of the processes (A) to (C), the slurry concentrations $C_A$, $C_B$, and $C_C$ (wt%) in each of the processes (A) to (C) are calculated continuously or at predetermined intervals from the slurry density $D_S$ (g/cm$^3$) measured in real time by the density sensor and the second density sensor 73 using Formula 1, the density $D_R$ (g/cm$^3$) of the filtrate, and the true density $\rho_{solid}$ (g/cm$^3$) of the fine particles to be manufactured, and calculation results thereof are compared with solid content concentrations $W_A$, $W_B$, and $W_C$ (wt%) serving as thresholds in each of the processes (A) to (C) stored in advance in the control device 67.

In the initial concentration process (A), the control device 67 compares the calculated slurry concentration $C_A$ with the present threshold $W_A$ of the solid content concentration, and determines to switch to the dilution washing process when the slurry concentration $C_A$ exceeds the threshold $W_A$. That is, the determination condition of the initial concentration process (A) is "$C_A > W_A$?".

In the dilution washing process (B), the slurry concentration $C_B$ is compared with the threshold $W_B$ of the solid content concentration, and when it is determined that the slurry concentration $C_B$ exceeds the threshold $W_B$ and at least one of the density of the filtrate or the conductivity of the filtrate falls below the density of the filtrate or the conductivity of the filtrate, which is the threshold stored in the control device 67, it is determined to switch to the final concentration process. That is, the determination condition of the dilution washing process (B) is "$C_B > W_B$? and $D_R < F$?", or "$CB > W_B$? or and $CR < D$?", or "$C_B > W_B$? and $D_R < F$? and $C_R < D$?". The above description is applied to the thresholds F and D.

In the final concentration process (C), the calculated slurry concentration $C_C$ is compared with the threshold $W_C$, and when the slurry concentration $C_C$ exceeds the threshold $W_C$, it is determined that the final concentration process (C) is completed. That is, the determination condition of the final concentration process (C) is "$C_C > W_C$?".

As described above, in Modification 3 of the fourth embodiment, the slurry concentration is calculated from the slurry density Ds measured in real time and the density $D_R$ of the filtrate, and compared and determined with the threshold, so that the precise control reflecting the properties of the slurry and the filtrate can be performed. By setting the slurry concentration as the threshold, the operator can easily change the setting of the threshold.

Note that, in Modification 3 of the fourth embodiment, in the dilution washing process (B), it is preferable that the current slurry concentration is calculated from the density sensor 66, the second density sensor 73, and the true density of the fine particles to be manufactured, and increase/decrease of the supply flow rate of washing water or supply/stop of the washing water is controlled so that the current slurry concentration falls within the range of the lower limit and the upper limit of the slurry concentration in the dilution washing process set in advance.

Next, a specific example of control for enhancing the washing effect of the slurry in the dilution washing process (B) by the control device 67 will be described. The following control is performed until the conductivity of the filtrate discharged from the stirring type cross-flow filtration device 6 is sufficiently lowered, and when the conductivity is sufficiently lowered, the process proceeds to step S5 in Fig. 10 in the third embodiment (and Modifications 1 and 2), and proceeds to step S7 in Fig. 11 in the fourth embodiment.

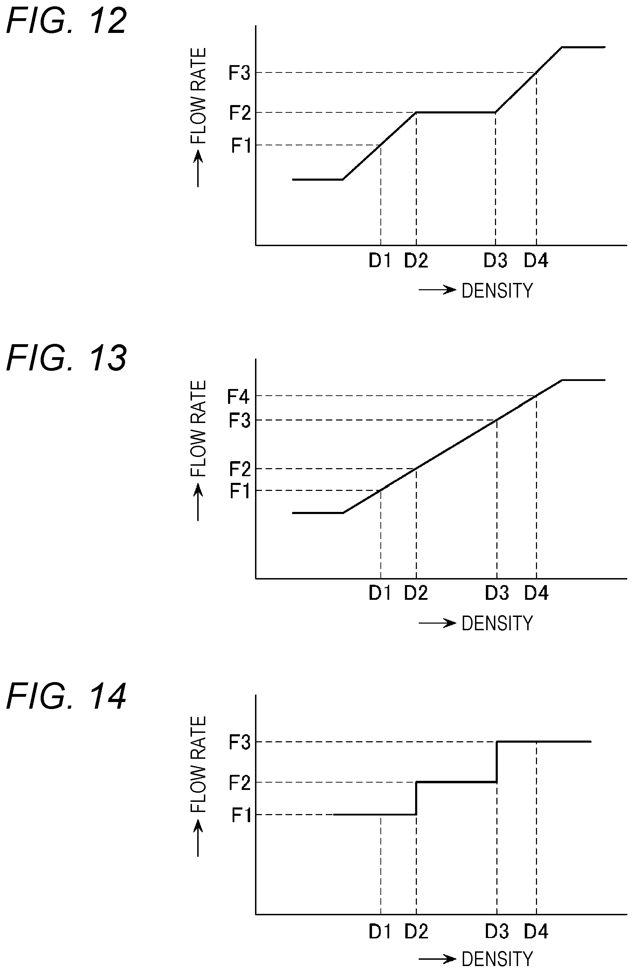

Figs. 12 to 14 illustrate specific examples of the washing liquid amount control by the control device 67, which can be implemented in each embodiment described above.

In the control example of Fig. 12, when the density of the slurry in the dilution washing process (B) is in the target density range D2 to D3, the flow rate of the washing liquid is constant at a reference flow rate F2. When the density of the concentrated slurry decreases to be lower than the lower limit value D2 of the target density range and becomes, for example, D1, a value proportional to the value of D2 - D1 is set to a flow rate F1 obtained by subtracting the value from the reference value F2. In addition, when the density of the concentrated slurry increases to be higher than the upper limit value D3 of the target density range and becomes, for example, D4, the flow rate F3 is obtained by adding a value proportional to the value of D4 - D3 to the reference value F2.

In the control example of Fig. 13, even when the density of the concentrated slurry is in the target density range D2 to D3, as the density increases to D1, D2, D3, and D4, the flow rate of the washing liquid is linearly increased to F1, F2, F3, and F4.

In the control example of Fig. 14, when the density of the concentrated slurry is in the target density range D2 to D3, the flow rate of the washing liquid is constant at the reference flow rate F2. When the density of the concentrated slurry decreases to be lower than the lower limit value D2 of the target density range (for example, D1), the flow rate F1 is set to a fixed value lower than the reference value F2. When the density of the concentrated slurry increases to be higher than the upper limit value D3 of the target density range and becomes, for example, D4, the flow rate F3 is set to a fixed value at the flow rate F3 larger than the reference value F2. Even in this simple control, it is possible to maintain the density of the concentrated slurry in the target density range D2 to D3.

In addition, it may be configured such that the supply flow rate of washing water is kept constant, and the supply of washing water is stopped when the slurry density falls below a set lower limit threshold, and the supply of washing water is started when the slurry density exceeds the set upper limit threshold.

In any case, since a certain time T from the introduction of the washed slurry into the stirring type cross-flow filtration device 6 by the pump 54 to the completion of filtration is taken from when the flow rate of the washing liquid is increased by the pump 41 to when it is reflected in the density of the concentrated slurry discharged from the stirring type cross-flow filtration device 6, each control described above may be performed intermittently every certain time T' longer than the time T, and the same flow rate of the washing liquid may be maintained while the time T' elapses.

In addition, a more advanced feedback control may be performed by incorporating a control method, for example, a Smith predictor, into the control device 67 in consideration of "dead time" from when the flow rate of the washing liquid is increased by the pump 41 to when it is reflected in the density of the concentrated slurry discharged from the stirring type cross-flow filtration device 6.

The control method by the control device 67 is not limited to the examples of Figs. 10 to 14 described above, and may be appropriately changed as necessary. For example, the switching control can be performed only at one of the completion timing of the initial concentration process (A), the completion timing of the dilution washing process (B), and the completion timing of the final concentration process (C), or the switching control may be performed only at two timings. Other switching may be performed by the worker's judgment without depending on the control device 67.

Returning to Fig. 8, continuation of the apparatus will be described. The slurry tank 82 serves a buffering function for adjusting the supply amount of the concentrated slurry to the drying device 8. The slurry tank 82 has a bottomed cylindrical shape, and the bottom inner surface is formed in a hemispherical shape. The semicircular anchor type stirring blade 84 is disposed along the bottom inner surface of the slurry tank 82 with a slight constant gap from the bottom inner surface, and is rotated by the motor 86. The rotation speed of the motor 86 is adjusted so that the concentrated slurry does not precipitate and solidify in the slurry tank 82. A discharge port 88 is formed at the bottom lower end of the slurry tank 82, and the concentrated slurry having high viscosity extracted from the slurry tank 82 is sent to the conduit 94 via the pump 90 and sent to the drying device 8.

A gap amount between an outer peripheral edge of the anchor type stirring blade 84 and an inner bottom surface of the slurry tank 82 is not limited, but may be, for example, about 0.5 to 3.0 cm in order to prevent fine particles from accumulating and adhering to the inner bottom surface of the slurry tank 82, similarly to the anchor type stirring blade 34 described above. In addition, the length of the semicircular outer peripheral edge of the anchor type stirring blade 84 is preferably a length that can face the entire inner bottom surface of the slurry tank 82. Furthermore, the rotation peripheral speed of the motor 86 at the outer peripheral portion of the anchor type stirring blade 84 is not limited, but is preferably about 0.1 to 3.0 m/sec. Within such a range, an effect of preventing fine particles from being deposited and fixed on the inner bottom surface of the slurry tank 82 is obtained. In particular, in the case of manufacturing a secondary battery positive electrode material precursor, the fine particles are metal compounds and have a large specific gravity, which is an important effect.

[Drying Device]

Figs. 4 to 6 are a side cross-sectional view, a plan view from which a top plate is removed, and a front cross-sectional view illustrating a stirring heat transfer device as the drying device 8. The drying device 8 has a rectangular parallelepiped casing 92, and the casing 92 has a gutter shaped inner wall 194, an outer wall 198 covering an outer peripheral surface of the inner wall 194, and a rectangular top plate 196 closing an upper end of the inner wall 194. An airtight gap having a constant thickness is formed between the inner wall 194 and the outer wall 198 and this gap is a heat medium flow path 199, and a heat medium inlet 200 communicating with the heat medium flow path 199 and a heat medium outlet, which is not illustrated, are formed in the outer wall 198. By supplying high-temperature steam, heat medium oil, or the like from the heat medium inlet 200 to the heat medium outlet, the inside of the casing 92 can be uniformly heated.

An introduction port 96 is formed at an upper end on an upstream side of the casing 92, and the conduit 94 is connected thereto. A gas inlet 174 is formed in the upper surface on the upstream side of the casing 92, a gas outlet 175 is formed in the upper surface on the downstream side, normal temperature or heated air or the like is blown from the gas inlet 174, and moist air or the like is discharged from the gas outlet 175 together with water vapor generated along with evaporation of the mother liquor and the washing liquid in the casing 92, so that water vapor generated in the casing 92 is discharged to the outside of the machine, whereby humidity can be maintained in an appropriate state. On the other hand, a discharge port 98 is formed in the lower surface of the downstream end of the casing 92, and the fine particle powder dried in the casing 92 is discharged.

In the casing 92, two hollow rotation shafts 176 are symmetrically disposed along the longitudinal direction, and both ends or one end is rotatably supported by bearings. Hollow stirring blades 178 are fixed to each hollow rotation shaft 176 at regular intervals in the axial direction, and in a region between two hollow rotation shafts 176, the hollow stirring blades 178 of one hollow rotation shaft 176 are located in the middle of the hollow stirring blades 178 of the other hollow rotation shaft 176.

As illustrated in Fig. 6, each of the hollow stirring blades 178 has a fan shape having a central angle of less than 180°, and hollow stirring blades 178 forming a pair is fixed at positions rotationally symmetric about the hollow rotation shaft 176 by 180°. A notch 190 having a constant width is formed between the hollow stirring blades 178 forming a pair so that a mixture of the concentrated slurry and a wet powder passes in the axial direction. The inside of the hollow stirring blade 178 is hollow, communicates with the internal space of the hollow rotation shaft 176, and the heat medium supplied to the hollow rotation shaft 176 also enters the inside of the hollow stirring blade 178 to heat the hollow stirring blade 178.

The wet powder is a dried product of the concentrated slurry held in advance in the casing 92, and is not completely dried but is moist. By mixing the wet powder held in advance with the concentrated slurry, abnormal adhesion that hinders the function of the drying device 8 is avoided, and transfer in the casing 92 by the hollow stirring blades 178 is facilitated.

As illustrated in Figs. 4 and 5, the hollow stirring blades 178 forming a pair are inclined in opposite directions with respect to the hollow rotation shaft 176, and each time the hollow rotation shaft 176 rotates by 180°, trajectories of the stirring blades 178 swing in the axial direction within a certain angle range as illustrated by a solid line and a dotted line in the drawings. This swinging achieves a function of mixing the concentrated slurry and the wet powder held in the casing 92 while preventing the concentrated slurry and the wet powder from adhering to the hollow stirring blades 178 between the stirring blades 178 adjacent in the axial direction. Further, the stirring blade 178 also has a twist along a virtual spiral plane around the hollow rotation shaft 176, and also functions to gradually transfer the mixture of the concentrated slurry and the wet powdery materials held in the casing 92 from the upstream side to the downstream side of the casing 92 as the hollow rotation shaft 176 rotates.

The hollow stirring blades 178 and the hollow rotation shaft 176 are formed of metal having high thermal conductivity, and a heat medium introduction hole 184 and a heat medium discharge hole 182 are formed at an end on the upstream side of the hollow rotation shaft 176. A heat medium such as high-temperature steam or heat medium oil is continuously supplied from a heat medium source, which is not illustrated, to the heat medium discharge hole 182 from the heat medium introduction hole 184, and the heat medium spreads over the entire length of the hollow rotation shaft 176, and enters the insides of the hollow stirring blades 178, and the entire hollow rotation shaft 176 and the hollow stirring blades 178 are heated to a temperature equal to or higher than the boiling points of the mother liquor and the washing liquid contained in the concentrated slurry and the wet powder. Thus, every time the mixture of the concentrated slurry and the wet powder comes into contact with the hollow rotation shaft 176 and the hollow stirring blades 178, the mixture is heated by conductive heat transfer, and the mother liquor and the washing liquid contained in the mixture are evaporated, and eventually, the mixture becomes a fine particle powder. A rotation mechanism 180 is provided at one end of the hollow rotation shaft 176, and the hollow rotation shafts 176 are simultaneously reversely rotated by a motor, which is not illustrated, and the mixture of the concentrated slurry and the wet powder held in the casing 92 is transferred in a transfer direction T from upstream to downstream of the casing 92 while being heated by conductive heat transfer by the hollow stirring blades 178. In addition, the positional relationship between the heat medium introduction hole 184 and the heat medium discharge hole 182 illustrated in Fig. 4 may be reversed. That is, the heat medium discharge hole 182 may be provided on the radially inner side of the heat medium introduction hole 184.

The fine particle powder discharged from the discharge port 98 of the drying device 8 is stored in the storage container 102 through the carry-out path 100 as illustrated in Fig. 8. Note that the number of the hollow rotation shafts 176 is not limited to two, and may be two or more. Thus, it can be said that a plurality of hollow rotation shafts 176 is sufficient. The plurality of hollow rotation shafts 176 may also be parallel to each other.

The fine particle powder manufacturing method by the fine particle powder manufacturing apparatus 31 described above is performed as follows.

[Fine Particle Slurry Manufacturing Process]

First, the crystallization device 10 and the reservoir 18 are filled with the mother liquor as an initial state. The stirring blade 128 is rotated by the motor 126, and the pump 22 is operated to blow the mother liquor in the reservoir 18 from the introduction port 115 into the reaction vessel 116, thereby generating a swirling flow in the reaction vessel 116. The first raw material 12A is supplied from the first inner tube 112, the second raw material 12B is supplied from the second inner tube 114, the both are intensely mixed in the center region R in the tapered portion 116A, and fine particles are generated by reaction between the first raw material 12A and the second raw material 12B. The mother liquor containing the fine particles is returned to the reservoir 18 through the conduit 16, and a fine particle slurry is generated in the reservoir 18 as the mother liquor repeats circulation. The pressure of the mother liquor introduced from the introduction port 115 is measured by the pressure gauge 122, the flow rate of the fine particle slurry flowing out from the discharge hole 14 is appropriately adjusted by the flow rate adjusting valve 118, and the solid content concentration of the fine particle slurry in the reservoir 18 is adjusted to an appropriate range.

[Initial Concentration Process]

When the solid content concentration of the fine particle slurry in the reservoir 18 reaches an appropriate range, the initial concentration process (A) for concentrating the fine particle slurry and converting it to an initially concentrated slurry is started. The initial concentration process is a process of performing so-called dehydration before washing. In the initial concentration process, the three-way valve 70 is controlled to set a circulation path so that the slurry discharged from the stirring type cross-flow filtration device 6 returns to the slurry tank 30 through the conduit 72. In the initial concentration process, the supply of the washing liquid is stopped (step S1 in Fig. 10 and step S1 in Fig. 11).

The extraction valve 132 is opened to allow the fine particle slurry in the reservoir 18 to flow out from the outlet 26 through the conduit 28 and be transferred to the slurry tank 30 by the pump 134. In the slurry tank 30, the anchor type stirring blade 34 is rotated by the motor 36, and the pump 54 is operated while precipitation of the fine particles in the fine particle slurry is prevented to supply the fine particle slurry from the discharge hole 52 to the stirring type cross-flow filtration device 6. As illustrated in Fig. 9, the fine particle slurry is continuously introduced into the slurry chamber 150 in the casing 60 from the introduction port 144 of the stirring type cross-flow filtration device 6.

In the slurry chamber 150, the slurry is pressurized by a discharge pressure of the pump 54, the stirring blade 142 is continuously rotated by the motor 62, the fine particle slurry is pressed against the side surface of the filter 146 while being stirred by the stirring blade 142, and the mother liquor in the fine particle slurry is filtered by the filter 146 and flows into the filtrate chamber 148. As the fine particle slurry advances downstream in the casing 60, the mother liquor in the fine particle slurry decreases and becomes a slurry concentrated to some extent and is discharged from the discharge port 64. The discharged slurry is returned to the slurry tank 30 via the three-way valve 70 and the conduit 72.

The filtrate flowing into the filtrate chamber 148 is collected in the conduit 156 via the filtrate discharge valve 154.

In the initial state, the conduit 156 is connected to the conduit 78 by the three-way valve 74, and the initial filtrate with a large amount of impurities is discarded into the liquid discharge path 80. This process is repeated while the density of the slurry is measured by the density sensor 66 until the density of the fine particle slurry reaches a predetermined value and an initially concentrated slurry having the solid content concentration described above is obtained (step S2 in Fig. 10 and step S3 in Fig. 11).

[Dilution Washing Process]

When an initially concentrated slurry having a predetermined concentration is obtained in the slurry tank 30, the initial concentration process is completed, and the dilution washing process (B) of diluting and washing the initially concentrated slurry with the washing liquid is started (step S3 in Fig. 10 and step S4 in Fig. 11). In the dilution washing process, the three-way valve 70 maintains a circulation path through which the slurry discharged from the stirring type cross-flow filtration device 6 returns to the slurry tank 30 through the conduit 72. Even in this state, the filtrate collected in the conduit 156 via the filtrate discharge valve 154 is discharged to the liquid discharge path 80 as filtrate with a large amount of impurities via the three-way valve 74 and the conduit 78.

Further, while performing density management by the density sensor 66 and level management of the slurry tank 30, the on-off valve 44 is opened, the conduit 46 is connected to the slurry tank 30 by the three-way valve 42, and the pump 48 is operated to first supply the washing liquid from the washing liquid tank 50 to the slurry tank 30. The washing liquid tank 50 stores a relatively clean washing liquid obtained in the previous manufacturing of the fine particle powder. This is because immediately after the start of the dilution washing process (first stage), the initially concentrated slurry contains a large amount of impurities, so that a sufficient washing effect can be obtained even with a washing liquid having low cleanliness. Thus, while the initially concentrated slurry is circulated between the slurry tank 30 and the stirring type cross-flow filtration device 6, washing in the slurry tank 30 and filtration by the stirring type cross-flow filtration device 6 are continued.

As the washing liquid from the washing liquid tank 50 is continuously supplied to the slurry tank 30 and the washing of the initially concentrated slurry progresses, impurities (electrolyte component, non-electrolyte component, and ultrafine particle) in the filtrate discharged from the stirring type cross-flow filtration device 6 decrease, so that the conductivity (or density) of the filtrate indicated by the conductivity sensor 71 (or the second density sensor 73) installed in the conduit 156 decreases. At a time point when the conductivity or density reaches a target value (target value for switching from the washing liquid in the washing liquid tank 50 to the clean washing liquid of the washing liquid source 38) (or at a time point when the amount of liquid in the washing liquid tank 50 sufficiently decreases), the pump 48 is stopped by automatic control by the control device 67 or manually, the supply of the reusable washing liquid from the washing liquid tank 50 is stopped, and then the three-way valve 42 is automatically controlled by the control device 67 or manually operated to start the supply of the clean washing liquid from the washing liquid source 38 to the slurry tank 30.

As the washing and filtration of the initially concentrated slurry proceed using the clean washing liquid from the washing liquid source 38, the impurities in the filtrate discharged from the stirring type cross-flow filtration device 6 further decrease, so that the conductivity (or density) of the filtrate indicated by the conductivity sensor 71 (or the second density sensor 73) installed in the conduit 156 decreases. At a time point when the conductivity or density reaches the next target value (target value indicating completion of washing) and the density of the fine particle slurry reaches a predetermined value (step S4 in Fig. 10 and step S6 in Fig. 11), the washing liquid source 38 is stopped, and the three-way valve 42 and the on-off valve 44 are automatically controlled or manually operated by the control device 67 to stop the supply of the washing liquid.

[Final Concentration Process]

When the supply of the washing liquid is stopped and the dilution washing process is completed, a final concentration process of finally concentrating the washed slurry is performed (step S5 in Fig. 10 and step S7 in Fig. 11). In the final concentration process, the washed slurry is supplied to the stirring type cross-flow filtration device 6, and separated into the concentrated washed slurry and the filtrate. The concentrated washed slurry is returned to the slurry tank 30. As described above, the washed slurry is continuously filtered (dehydrated) by the stirring type cross-flow filtration device 6 while being circulated between the slurry tank 30 and the stirring type cross-flow filtration device 6. Therefore, the slurry in the slurry tank 30 is gradually concentrated (step S6 in Fig. 10 and step S9 in Fig. 11).

When the conductivity of the filtrate measured by the conductivity sensor 71 provided in the conduit 156 eventually falls below a predetermined target value, it is determined that the filtrate is clean enough to be used for primary washing in the slurry tank 30, the three-way valve 74 is switched by automatic control by the control device 67 or manually, and the filtrate from the conduit 156 is stored in the washing liquid tank 50 through the conduit 76. When the filtrate is sufficiently cleaned, not only the final concentration process but also the storage in the washing liquid tank 50 may be started from the subsequent stage of the dilution washing process.

The density of the concentrated slurry discharged from the discharge port 64 of the stirring type cross-flow filtration device 6 is continuously or intermittently measured by the density sensor 66. When the density of the concentrated slurry measured by the density sensor 66 is higher than a target range, the rotation speed of the pump 41 is increased or the pump 41 is activated to increase the amount of washing liquid from the washing liquid source 38 to the slurry tank 30, thereby diluting the slurry in the slurry tank 30. Conversely, when the density of the concentrated slurry measured by the density sensor 66 is lower than the target range, the rotation speed of the pump 41 is reduced or the pump 41 is stopped to reduce or stop the amount of washing liquid from the washing liquid source 38 to the slurry tank 30, thereby suppressing dilution of the slurry in the slurry tank 30. Thus, feedback control is performed so that the solid content concentration in the concentrated slurry falls within a certain range (Figs. 12 to 14).

The concentrated slurry adjusted so that the solid content concentration falls within a certain range is sent to the slurry tank 82 via the flow rate adjusting valve 68 and the three-way valve 70 (step S7 in Fig. 10 and step S10 in Fig. 11). The concentrated slurry stored in the slurry tank 82 is continuously stirred by the anchor type stirring blade 84 so as to prevent precipitation.

[Drying Process]

The drying process is a process of drying the concentrated slurry to a fine particle powder state. In the drying process, the concentrated slurry in the slurry tank 82 is sent to the drying device 8 by the pump 90, and introduced into the casing 92 from the introduction port 96 through the conduit 94. In the casing 92, the two hollow rotation shafts 176 continuously rotate, and the hollow stirring blades 178 are heated by high-temperature steam, heat medium oil, or the like supplied to the heat medium introduction hole 184. With the rotation of the hollow stirring blade 178, the concentrated slurry and the wet powder held in the casing 92 are mixed, and the mixture is sent in the transfer direction T. In the process, the mixture is heated by conductive heat transfer by the heated hollow stirring blades 178 while preventing the mixture from adhering to the hollow stirring blades 178 between the adjacent hollow stirring blades 178 by the swinging of the hollow stirring blades 178, and the drying processing of the mixture proceeds. By blowing normal temperature or heated air or the like from the gas inlet 174 and discharging moist air or the like from the gas outlet 175, water vapor generated in the casing 92 is discharged to the outside of the apparatus, whereby the humidity in the apparatus is maintained in an appropriate state. By the time the mixture reaches the downstream side of the casing 92, the mixture becomes fine particle powder, and is sequentially discharged from the discharge port 98. The fine particle powder discharged from the discharge port 98 is stored in the storage container 102 through the carry-out path 100.

[Effects of Present Embodiment]

By the fine particle slurry concentrating apparatus, the fine particle powder manufacturing method and manufacturing apparatus 31 according to the above embodiment, the density of the concentrated slurry after filtration by the stirring type cross-flow filtration device 6 is measured by the density sensor 66, the rotation speed of the pump 41 is adjusted by the control device 67, and the supply amount of the washing liquid to the slurry tank 30 is feedback-controlled. Therefore, even if the treated product has an extremely small average particle diameter of fine particles of, for example, equal to or less than 7 $\mu$m, the concentration of the concentrated slurry can be stably managed even in a high concentration range of, for example, 35 wt% to 65 wt%, and the fine particle powder can be stably manufactured while preventing clogging by the concentrated slurry.

In addition, it is possible to stably concentrate the slurry even in a high concentration region while appropriately switching the initial concentration process (A) of obtaining the initially concentrated slurry, the dilution washing process (B) of diluting and washing the initially concentrated slurry to obtain the washed slurry, and the final concentration process (C) of concentrating the washed slurry to obtain the concentrated slurry by controlling or instructing the timing by the control device 67.

In addition, according to the present embodiment, when the solid content concentration of the washed slurry is adjusted to equal to or more than 30 wt% and equal to or less than 60 wt%, and the solid content concentration of the concentrated slurry generated by the stirring type cross-flow filtration device 6 is adjusted to be equal to or more than 35 wt% and equal to or less than 65 wt%, it is possible to optimize the manufacturing efficiency in the filtration process and the drying process while preventing clogging by the high-concentration slurry, and to suppress the energy cost.

In addition, in a case where a vibration type in-line density sensor is used as the density sensor 66, the vibrator 66A in contact with the concentrated slurry is vibrated, and the resonance frequency thereof is measured as a function of the density of the concentrated slurry, the density of the concentrated slurry can be measured with high accuracy without delay even if the concentrated slurry has a high concentration and high viscosity, whereby the fine particle powder can be stably manufactured while preventing clogging by the concentrated slurry.

In addition, since the stirring type cross-flow filtration device 6 is used, even when the average particle diameter of the fine particles is extremely small, for example, equal to or less than 7 $\mu$m, it is possible to manufacture a concentrated slurry in a higher concentration region, and it is possible to increase the manufacturing efficiency in the filtration process and the drying process and to suppress the energy cost while preventing clogging by the high concentration slurry.

When the fine particles are the positive electrode material precursor for a secondary battery, it is possible to manufacture the positive electrode material precursor for a secondary battery while preventing clogging in the concentrated slurry stage, increasing manufacturing efficiency in the filtration process and the drying process, and suppressing energy cost.

Further, in the drying device 8, since the hollow stirring blades 178 of the hollow rotation shafts 176 are fixed at intervals in the axial direction to the respective hollow rotation shafts 176 so that the hollow stirring blades 178 of the respective hollow rotation shafts 176 partially overlap each other when viewed in the axial direction, as the hollow stirring blades 178 rotate, the heated hollow stirring blades 178 transfer the concentrated slurry while heating the concentrated slurry, and during that time, the concentrated slurry is dried and converted into the fine particle powder. Therefore, moisture can be efficiently evaporated as compared with the method using hot air, and an excellent effect of suppressing energy cost and increasing manufacturing efficiency is obtained.

Note that the present invention is not limited only to the above embodiments, and it is possible to add, delete, and replace components with well-known techniques within the scope described in the claims.

Subsequently, a fine particle powder manufacturing apparatus 41 according to a fifth embodiment of the present invention will be described in detail. Description of configurations similar to those of the first embodiment will be basically omitted, and differences from the first embodiment will be mainly described.

The fine particle powder manufacturing apparatus 41 according to the fifth embodiment is different from the first embodiment in that the control device 67 of the first embodiment is not provided.

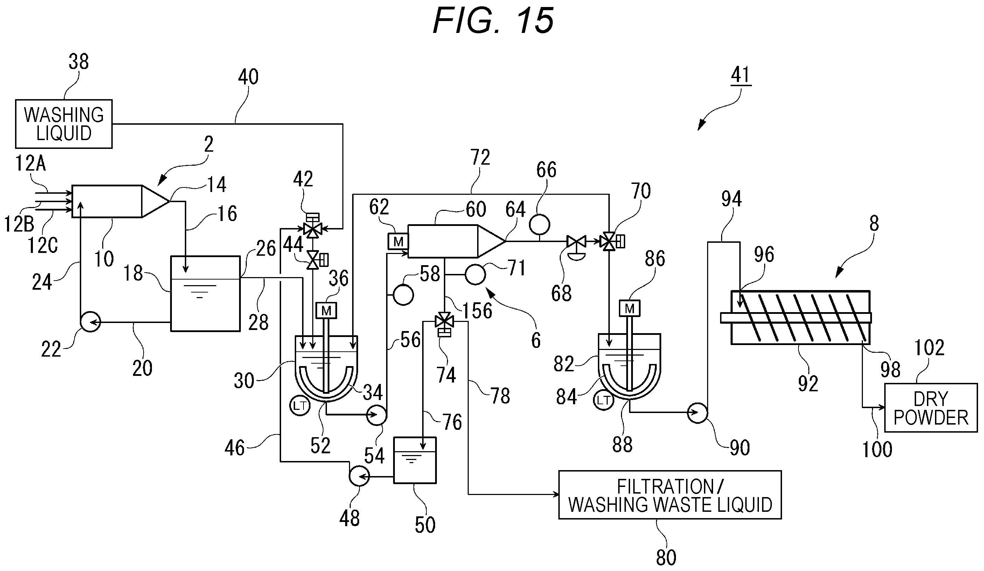

As illustrated in Fig. 15, a conductivity sensor 71 is installed in the conduit 156 serving as a filtrate outlet of the stirring type cross-flow filtration device 6. The conductivity sensor 71 continuously measures the conductivity of the filtrate discharged from the stirring type cross-flow filtration device 6, and transmits the conductivity to a control panel, which is not illustrated. The control panel that has received an output of the conductivity sensor 71 detects the degree of progress of the dilution washing process from the output result and the conductivity of the filtrate stored in advance, and determines the completion timing of the dilution washing process. Specifically, when the output result falls below the threshold set by the control panel, it is determined that it is the completion timing of the dilution washing process.

Note that the present invention is not limited to the conductivity sensor 71, and another sensor may determine the completion timing of the dilution washing process. For example, a second density sensor, which is not illustrated, may be provided in the conduit 156 serving as the filtrate outlet of the stirring type cross-flow filtration device 6. The second density sensor continuously measures the density of the filtrate discharged from the stirring type cross-flow filtration device 6, and transmits the density to the control panel, which is not illustrated. The control panel, which is not illustrated, that has received the output of the second density sensor detects the degree of progress of the dilution washing process from the density of the filtrate and determines the completion timing of the dilution washing process.

At the time of initial concentration and for a while after the start of washing by the stirring type cross-flow filtration device 6, the filtrate entering the filtrate chamber 148 has a large amount of impurities, but as the filtration time elapses, the filtrate becomes a filtrate having a small amount of impurities, so that the conductivity detected by the conductivity sensor 71 decreases. Therefore, the three-way valve 74 is switched by the control panel, which is not illustrated, at the timing when the conductivity reaches the predetermined threshold, and the filtrate flowing to the liquid discharge path 80 is stored in the washing liquid tank 50. The relatively clean filtrate stored in the washing liquid tank 50 is supplied as a washing liquid to the slurry tank 30 through the conduit 46, the three-way valve 42, and the on-off valve 44 by moving the pump 48 in the next dilution washing process, and is used as a washing liquid in the initial stage of the dilution washing process. This makes it possible to reduce the amount of washing liquid used by the washing liquid source 38, which helps to reduce the cost of fine particle powder manufacturing. Furthermore, it is possible to reduce the amounts of filtrate and washing waste liquid discarded outside the fine particle powder manufacturing apparatus 41, and it is possible to reduce the load on the environment.

A downstream portion of the casing 60 is a conical tapered portion 152 that narrows toward the downstream side, and a discharge port 64 is formed at a distal end of the tapered portion 152. Moisture is removed while being transferred to the downstream side while meandering in the slurry chamber 150. Filtration and concentration are performed by the stirring type cross-flow filtration device 6 while circulating through the slurry tank 30 and the stirring type cross-flow filtration device 6, and concentrated slurry having high viscosity is discharged from the discharge port 64.

An optimum value of the solid content concentration of the concentrated slurry discharged from the stirring type cross-flow filtration device 6 is different among the initial concentration process, the dilution washing process, and the final concentration process, and is not necessarily limited. As a preferred example, for example, in the case of manufacturing a positive electrode material precursor for a secondary battery, the solid content concentration in the initially concentrated slurry is preferably equal to or more than 35 wt% and equal to or less than 65 wt%, more preferably equal to or more than 45 wt% and equal to or less than 65 wt% at the time of completion of the initial concentration process. The solid content concentration of the washed slurry at the time of completion of the dilution washing process is preferably equal to or more than 35 wt% and equal to or less than 60 wt%, and more preferably equal to or more than 35 wt% and equal to or less than 45 wt%. The solid content concentration of the final concentrated slurry at the time of completion of the final concentration process is preferably 50 wt% to 65 wt%, more preferably equal to or more than 60 wt% and equal to or less than 65 wt%.

In each process, when the concentration range is as described above, it is not difficult to transfer the concentrated slurry in the casing 60 of the stirring type cross-flow filtration device 6, and it is possible to effectively reduce the impurity amount of eventual final concentrated slurry while limiting the consumption amount of the washing liquid. Therefore, the load balance between the stirring type cross-flow filtration device 6 and the drying device 8 is good, and it is possible to increase the total processing efficiency and energy efficiency without exerting strain on each process.

As illustrated in Fig. 15, the discharge port 64 of the casing 60 of the stirring type cross-flow filtration device 6 is connected to the first port of the three-way valve 70 (path switching device) via the density sensor 66 and the flow rate adjusting valve 68. The three-way valve 70 is controlled to be switched by the control panel, which is not illustrated, or is manually switched in response to an instruction from the control panel. A second port of the three-way valve 70 is connected to the slurry tank 30 via the conduit 72 (second flow path). The third port of the three-way valve 70 is connected to the slurry tank 82 for concentrated slurry storage provided at the front stage of the drying device 8. By operating the three-way valve 70, the slurry in various states discharged from the discharge port 64 of the stirring type cross-flow filtration device 6 can be returned to the slurry tank 30 and circulated, or can be supplied to the slurry tank 82 serving as a buffer of the drying device 8.

The concentrated slurry discharged from the discharge port 64 of the stirring type cross-flow filtration device 6 has a slurry density measured by the density sensor 66, and an output signal of the density sensor 66 is transmitted to the control panel, which is not illustrated. There are mainly two purposes of the density sensor 66, and the first is to measure the timing at which the concentrated slurry discharged from the stirring type cross-flow filtration device 6 is sufficiently dehydrated and reaches a predetermined density, grasp the timing of at least one of a completion timing of the initial concentration process or a completion timing of the final concentration process, and use it for control to shift to the next process.

Note that, when the completion timing of the dilution washing process is determined, it is preferable to satisfy any one of the following conditions: (1) the conductivity of the filtrate decreases to a predetermined threshold based on the output of the conductivity sensor 71, and the density of the concentrated slurry increases to a predetermined threshold based on the output of the density sensor 66; and (2) the conductivity of the filtrate decreases to the predetermined threshold based on the output of the conductivity sensor 71 (the output of the density sensor 66 is not involved in the determination criteria).

A second purpose of the slurry density measurement by the density sensor 66 is to enhance the washing effect of the slurry in the dilution washing process. Specifically, a lower limit value and an upper limit value are set to a density value corresponding to an output signal of the density sensor 66, and when the upper limit value is reached, the washing liquid supply from the washing liquid source 38 to the slurry tank 30 is increased (or resumed from a pause), and when the lower limit value is reached, the washing liquid supply from the washing liquid source 38 is decreased (or stopped), whereby the solid content concentration of the concentrated slurry discharged from the stirring type cross-flow filtration device 6 in the dilution washing process is maintained within a certain range until the conductivity of the filtrate discharged from the stirring type cross-flow filtration device 6 is sufficiently lowered, and the washing degree is adjusted. Here, the slurry tank 30 to the stirring type cross-flow filtration device 6 in the fine particle powder manufacturing apparatus 41 may be referred to as a fine particle slurry concentrating apparatus. Further, the washing liquid source 38 may be referred to as a washing liquid supply device.

In order to control the washing liquid in the dilution washing process, the three-way valve 42 and the on-off valve 44 are controlled by the control panel, which is not illustrated, or manually in accordance with the value of the density sensor 66, and when the density of the concentrated slurry detected by the density sensor 66 is too high, the three-way valve 42 and the on-off valve 44 are controlled to increase or start the amount of washing liquid from the washing liquid source 38 to the slurry tank 30. Further, when the density of the concentrated slurry detected by the density sensor 66 is too low, the three-way valve 42 and the on-off valve 44 are controlled to reduce or stop the amount of the washing liquid from the washing liquid source 38 to the slurry tank 30, and feedback control is performed so that the solid content concentration in the concentrated slurry falls within a certain range.

The slurry tank 82 serves a buffering function to adjust the supply amount of the final concentrated slurry to the drying device 8. The slurry tank 82 has a bottomed cylindrical shape, and the bottom inner surface is formed in a hemispherical shape. The semicircular anchor type stirring blade 84 is disposed along the bottom inner surface of the slurry tank 82 with a slight constant gap from the bottom inner surface, and is rotated by the motor 86. The rotation speed of the motor 86 is adjusted so that the final concentrated slurry does not precipitate and solidify in the slurry tank 82. A discharge port 88 is formed at the bottom lower end of the slurry tank 82, and the final concentrated slurry having high viscosity extracted from the slurry tank 82 is sent to the conduit 94 via the pump 90 and sent to the drying device 8.

A gap amount between an outer peripheral edge of the anchor type stirring blade 84 and an inner bottom surface of the slurry tank 82 is not limited, but may be, for example, about 0.5 to 3.0 cm in order to prevent fine particles from accumulating and adhering to the inner bottom surface of the slurry tank 82, similarly to the anchor type stirring blade 34 described above. In addition, the length of the semicircular outer peripheral edge of the anchor type stirring blade 84 is preferably a length that can face the entire inner bottom surface of the slurry tank 82. Furthermore, the rotation peripheral speed of the motor 86 at the outer peripheral portion of the anchor type stirring blade 84 is not limited, but is preferably about 0.1 to 3.0 m/sec. Within such a range, an effect of preventing fine particles from being deposited and fixed on the inner bottom surface of the slurry tank 82 is obtained. In particular, in the case of manufacturing a positive electrode material precursor for a secondary battery, the fine particles are metal compounds and have a large specific gravity, which is an important effect.

[Drying Device]

Figs. 4 to 6 are a side cross-sectional view, a plan view from which a top plate is removed, and a front cross-sectional view illustrating a stirring heat transfer drying device as the drying device 8. The drying device 8 has a rectangular parallelepiped casing 92, and the casing 92 has a gutter shaped inner wall 194, an outer wall 198 covering an outer peripheral surface of the inner wall 194, and a rectangular top plate 196 closing an upper end of the inner wall 194. An airtight gap having a constant thickness is formed between the inner wall 194 and the outer wall 198 and this gap is a heat medium flow path 199, and a heat medium inlet 200 communicating with the heat medium flow path 199 and a heat medium outlet, which is not illustrated, are formed in the outer wall 198. By supplying high-temperature steam, heat medium oil, or the like from the heat medium inlet 200 to the heat medium outlet, the inside of the casing 92 can be uniformly heated.

An introduction port (inflow port) 96 is formed at an upper end on the upstream side (one end) of the casing 92, and a conduit 94 is connected thereto. The final concentrated slurry is sent to a conduit 94 via a pump 90 and supplied from an introduction port 96. The final concentrated slurry is preferably fed continuously. A gas inlet 174 is formed in the upper surface on the upstream side of the casing 92, a gas outlet 175 is formed in the upper surface on the downstream side (the other end), normal temperature or heated air or the like is blown from the gas inlet 174, and moist air or the like is discharged from the gas outlet 175 together with water vapor generated along with evaporation of the mother liquor and the washing liquid in the casing 92, so that water vapor generated in the casing 92 is discharged to the outside of the machine, whereby humidity can be maintained in an appropriate state. On the other hand, a discharge port (outflow hole) 98 is formed in the lower surface of the downstream end of the casing 92, and the fine particle powder dried in the casing 92 is discharged.

In the casing 92, two hollow rotation shafts 176 are symmetrically disposed along the longitudinal direction, and both ends or one end is rotatably supported by bearings about the axes of the two hollow rotation shafts 176 (about the axis). Hollow stirring blades 178 are fixed to each hollow rotation shaft 176 at regular intervals in the axial direction, and in a region between two hollow rotation shafts 176, the hollow stirring blades 178 of one hollow rotation shaft 176 are located in the middle in the axial direction of the hollow stirring blades 178 of the other hollow rotation shaft 176. The two hollow rotation shafts 176 may be parallel to each other.

Note that the hollow rotation shaft 176 may be simply referred to as a rotation shaft.

As illustrated in Fig. 6, each of the hollow stirring blades 178 has a fan shape having a central angle of less than 180°, and hollow stirring blades 178 forming a pair is fixed at positions rotationally symmetric about the hollow rotation shaft 176 by 180°. A notch 190 having a constant width is formed between the hollow stirring blades 178 forming a pair so that a mixture of the final concentrated slurry and a wet powder passes in the axial direction. The inside of the hollow stirring blade 178 is hollow, communicates with the internal space of the hollow rotation shaft 176, and the heat medium supplied to the hollow rotation shaft 176 also enters the inside of the hollow stirring blade 178 to heat the hollow stirring blade 178. This may be referred to as a heating mechanism of the hollow stirring blade 178.

The wet powder is a dried product of the final concentrated slurry held in advance in the casing 92, and is not completely dried but is moist. In the case of metal fine particles having an average particle diameter equal to or less than 7 μm, the water content may be in the range of 5 wt% to 65 wt%, preferably 5 wt% to 25 wt%.

The wet powder is preferably held in the casing 92 so as to cover the hollow rotation shaft 176. The wet powder is preferably held in the casing 92 by a half or more, preferably the same amount or more, on a weight basis with respect to a supply amount per hour of slurry having a slurry concentration of 50 to 65 wt%. By mixing the wet powder held in advance with the final concentrated slurry, abnormal adhesion that hinders the function of the drying device 8 is avoided, and appropriate transfer in the casing 92 by the hollow stirring blade 178 becomes possible.

As illustrated in Figs. 4 and 5, the hollow stirring blades 178 forming a pair are inclined in opposite directions with respect to the hollow rotation shaft 176, and each time the hollow rotation shaft 176 rotates by 180°, trajectories of the hollow stirring blades 178 swing in the axial direction within a certain angle range as illustrated by a solid line and a dotted line in the drawings. This swinging achieves a function of mixing the final concentrated slurry and the wet powder while preventing the final concentrated slurry and the wet powder from adhering to the hollow stirring blades 178 between the hollow stirring blades 178 adjacent in the axial direction. In addition, the hollow stirring blade 178 also has a twist along a virtual spiral plane around the hollow rotation shaft 176, and also functions to gradually transfer the mixture of the final concentrated slurry and the wet powder from the upstream side to the downstream side of the casing 92 as the hollow rotation shaft 176 rotates.

The hollow stirring blades 178 and the hollow rotation shaft 176 are formed of metal having high thermal conductivity, and a heat medium introduction hole 184 and a heat medium discharge hole 182 are formed at an end on the upstream side of the hollow rotation shaft 176. A heat medium such as high-temperature steam or heat medium oil is continuously supplied from a heat medium source, which is not illustrated, to the heat medium discharge hole 182 from the heat medium introduction hole 184, and the heat medium spreads over the entire length of the hollow rotation shaft 176, and enters the insides of the hollow stirring blades 178, and the entire hollow rotation shaft 176 and the hollow stirring blades 178 are heated to a temperature equal to or higher than the boiling points of the mother liquor and the washing liquid contained in the final concentrated slurry and the wet powder. Thus, every time the mixture of the final concentrated slurry and the wet powder comes into contact with the hollow rotation shaft 176 and the hollow stirring blades 178, the mixture is heated by conductive heat transfer, and the mother liquor and the washing liquid contained in the mixture are evaporated, and eventually, the mixture becomes a fine particle powder. A rotation mechanism 180 is provided at one end of the hollow rotation shaft 176, and the hollow rotation shafts 176 are simultaneously reversely rotated by a motor, which is not illustrated, and the mixture of the final concentrated slurry and the wet powder held in the casing 92 is transferred in a transfer direction T from upstream to downstream of the casing 92 while being heated by conductive heat transfer excellent in thermal efficiency by the hollow stirring blade 178. Note that heating by conductive heat transfer may be referred to as indirect heating. In addition, the positional relationship between the heat medium introduction hole 184 and the heat medium discharge hole 182 illustrated in Fig. 4 may be reversed. That is, the heat medium discharge hole 182 may be provided on the radially inner side of the heat medium introduction hole 184.

The fine particle powder discharged from the discharge port 98 of the drying device 8 is stored in the storage container 102 through the carry-out path 100 as illustrated in Fig. 15. Note that the number of the hollow rotation shafts 176 is not limited to two, and may be two or more. Thus, it can be said that a plurality of hollow rotation shafts 176 is sufficient. The plurality of hollow rotation shafts 176 may also be parallel to each other.

When a plurality of rotation shafts are provided, the hollow stirring blades 178 provided on the two adjacent rotation shafts are configured to be located in the middle in the axial direction between the hollow stirring blade 178 of one hollow rotation shaft 176 and the hollow stirring blade 178 of the other hollow rotation shaft 176. At this time, the hollow stirring blade 178 is inclined in opposite directions with respect to the hollow rotation shaft 176 and has twisting along a virtual spiral plane around the hollow rotation shaft 176, and two adjacent hollow rotation shafts 176 rotate in opposite directions to each other.

The fine particle powder manufacturing method by the fine particle powder manufacturing apparatus 41 described above is performed as follows.

[Fine Particle Slurry Manufacturing Process]

First, the crystallization device 10 and the reservoir 18 are filled with the mother liquor as an initial state. The stirring blade 128 is rotated by the motor 126, and the pump 22 is operated to blow the mother liquor in the reservoir 18 from the introduction port 115 into the reaction vessel 116, thereby generating a swirling flow in the reaction vessel 116. The first raw material 12A is supplied from the first inner tube 112, the second raw material 12B is supplied from the second inner tube 114, the both are intensely mixed in the center region R in the tapered portion 116A, and fine particles are generated by reaction between the first raw material 12A and the second raw material 12B. The mother liquor containing the fine particles is returned to the reservoir 18 through the conduit 16, and a fine particle slurry is generated in the reservoir 18 as the mother liquor repeats circulation. The pressure of the mother liquor introduced from the introduction port 115 is measured by the pressure gauge 122, the flow rate of the fine particle slurry flowing out from the discharge hole 14 is appropriately adjusted by the flow rate adjusting valve 118, and the solid content concentration of the fine particle slurry in the reservoir 18 is adjusted to an appropriate range.

[Initial Concentration Process]

When the solid content concentration of the fine particle slurry in the reservoir 18 reaches an appropriate range, an initial concentration process for concentrating the fine particle slurry and converting it to an initially concentrated slurry is started. The initial concentration process is a process of performing so-called dehydration before washing. In the initial concentration process, the three-way valve 70 is controlled to set a circulation path so that the slurry discharged from the stirring type cross-flow filtration device 6 returns to the slurry tank 30 through the conduit 72. In the initial concentration process, the supply of the washing liquid is stopped.

The extraction valve 132 is opened to allow the fine particle slurry in the reservoir 18 to flow out from the outlet 26 through the conduit 28 and be transferred to the slurry tank 30 by the pump 134. In the slurry tank 30, the anchor type stirring blade 34 is rotated by the motor 36, and the pump 54 is operated while precipitation of the fine particles in the fine particle slurry is prevented to supply the fine particle slurry from the discharge hole 52 to the stirring type cross-flow filtration device 6. As illustrated in Fig. 3, the fine particle slurry is continuously introduced into the slurry chamber 150 in the casing 60 from the introduction port 144 of the stirring type cross-flow filtration device 6.

In the slurry chamber 150, the slurry is pressurized by a discharge pressure of the pump 54, the stirring blade 142 is continuously rotated by the motor 62, the fine particle slurry is pressed against the side surface of the filter 146 while being stirred by the stirring blade 142, and the mother liquor in the fine particle slurry is filtered by the filter 146 and flows into the filtrate chamber 148. As the fine particle slurry advances downstream in the casing 60, the mother liquor in the fine particle slurry decreases and becomes a slurry concentrated to some extent and is discharged from the discharge port 64. The discharged slurry is returned to the slurry tank 30 via the three-way valve 70 and the conduit 72.

The filtrate flowing into the filtrate chamber 148 is collected in the conduit 156 via the filtrate discharge valve 154.

In the initial state, the conduit 156 is connected to the conduit 78 by the three-way valve 74, and the initial filtrate with a large amount of impurities is discarded into the liquid discharge path 80. This process is repeated while the density of the slurry is measured by the density sensor 66 until the density of the fine particle slurry reaches a predetermined value and an initially concentrated slurry having the solid content concentration described above is obtained.

[Dilution Washing Process]

When an initially concentrated slurry having a predetermined concentration is obtained in the slurry tank 30, the initial concentration process is completed, and the dilution washing process of diluting and washing the initially concentrated slurry with the washing liquid is started. In the dilution washing process, the three-way valve 70 maintains a circulation path through which the slurry discharged from the stirring type cross-flow filtration device 6 returns to the slurry tank 30 through the conduit 72. Even in this state, the filtrate collected in the conduit 156 via the filtrate discharge valve 154 is discharged to the liquid discharge path 80 as filtrate with a large amount of impurities via the three-way valve 74 and the conduit 78.

Further, while performing density management by the density sensor 66 and level management of the slurry tank 30, the on-off valve 44 is opened, the conduit 46 is connected to the slurry tank 30 by the three-way valve 42, and the pump 48 is operated to first supply the washing liquid from the washing liquid tank 50 to the slurry tank 30. The washing liquid tank 50 stores a relatively clean washing liquid obtained in the previous manufacturing of the fine particle powder. This is because immediately after the start of the dilution washing process (first stage), the initially concentrated slurry contains a large amount of impurities, so that a sufficient washing effect can be obtained even with a washing liquid having low cleanliness. Thus, while the initially concentrated slurry is circulated between the slurry tank 30 and the stirring type cross-flow filtration device 6, washing in the slurry tank 30 and filtration by the stirring type cross-flow filtration device 6 are continued.

As the washing liquid from the washing liquid tank 50 is continuously supplied to the slurry tank 30 and the washing of the initially concentrated slurry progresses, impurities (electrolyte component, non-electrolyte component, and ultrafine particle) in the filtrate discharged from the stirring type cross-flow filtration device 6 decrease, so that the conductivity (or density) of the filtrate indicated by the conductivity sensor 71 (or the second density sensor not illustrated) installed in the conduit 156 decreases. At a time point when the conductivity or density reaches a target value (target value for switching from the washing liquid in the washing liquid tank 50 to the clean washing liquid of the washing liquid source 38) (or at the time when the amount of liquid in the washing liquid tank 50 sufficiently decreases), the pump 48 is stopped by automatic control by the control panel, which is not illustrated, or manually, the supply of the reusable washing liquid from the washing liquid tank 50 is stopped, and then the three-way valve 42 is automatically controlled by the control panel, which is not illustrated, or manually operated to start the supply of the clean washing liquid from the washing liquid source 38 to the slurry tank 30.

As the washing and filtration of the initially concentrated slurry proceed using the clean washing liquid from the washing liquid source 38, the impurities in the filtrate discharged from the stirring type cross-flow filtration device 6 further decrease, so that the conductivity (or density) of the filtrate indicated by the conductivity sensor 71 (or the second density sensor, which is not illustrated) installed in the conduit 156 decreases. At a time point when the conductivity or density reaches the next target value (target value indicating completion of washing) and the density of the fine particle slurry reaches a predetermined value, the washing liquid source 38 is stopped, and the three-way valve 42 and the on-off valve 44 are automatically controlled by the control panel, which is not illustrated, or manually operated to stop the supply of the washing liquid.

[Final Concentration Process]

When the supply of the washing liquid is stopped and the dilution washing process is completed, a final concentration process of finally concentrating the washed slurry is performed. In the final concentration process, the washed slurry is supplied to the stirring type cross-flow filtration device 6 and separated into the concentrated washed slurry and the filtrate. The concentrated washed slurry is returned to the slurry tank 30. As described above, the washed slurry is continuously filtered by the stirring type cross-flow filtration device 6 while being circulated between the slurry tank 30 and the stirring type cross-flow filtration device 6. Therefore, the slurry in the slurry tank 30 is gradually concentrated.

When the conductivity of the filtrate measured by the conductivity sensor 71 provided in the conduit 156 eventually falls below a predetermined target value, it is determined that the filtrate is clean enough to be used for primary washing in the slurry tank 30, the three-way valve 74 is switched by automatic control by the control panel, which is not illustrated, or manually, and the filtrate from the conduit 156 is stored in the washing liquid tank 50 through the conduit 76. When the filtrate is sufficiently cleaned, not only the final concentration process but also the storage in the washing liquid tank 50 may be started from the subsequent stage of the dilution washing process.

The density of the final concentrated slurry discharged from the discharge port 64 of the stirring type cross-flow filtration device 6 is continuously or intermittently measured by the density sensor 66, and when the density reaches the density target value of the final concentration process, the flow rate adjusting valve 68 and the three-way valve 70 are automatically controlled by the control panel, which is not illustrated, or manually operated to send the final concentrated slurry to the slurry tank 82. The final concentrated slurry stored in the slurry tank 82 is stirred by the anchor type stirring blade 84 so as to prevent precipitation, and the drying process is started. Note that, in the present embodiment, the concentrated slurry is returned to the slurry tank 30 and filtered while being circulated, but the present invention is not limited thereto, and the concentrated slurry can be supplied to the slurry tank 82 without being circulated.

[Drying Process]

The drying process is a process of drying the final concentrated slurry to a fine particle powder state. In the drying process, the final concentrated slurry in the slurry tank 82 is sent to the drying device 8 by the pump 90, and introduced into the casing 92 from the introduction port 96 through the conduit 94. In the casing 92, the two hollow rotation shafts 176 continuously rotate, and the hollow stirring blades 178 are heated by high-temperature steam, heat medium oil, or the like supplied to the heat medium introduction hole 184. With the rotation of the hollow stirring blades 178, the final concentrated slurry and the wet powder held in the casing 92 are mixed, and the mixture is sent in the transfer direction T. In the process, the mixture is heated by conductive heat transfer by the heated hollow stirring blades 178 while preventing the mixture from adhering to the hollow stirring blades 178 between the adjacent hollow stirring blades 178 by the swinging of the hollow stirring blades 178, and the drying processing of the mixture proceeds. That is, heating and drying are performed. By blowing normal temperature or heated air or the like from the gas inlet 174 and discharging moist air or the like from the gas outlet 175, water vapor generated in the casing 92 is discharged to the outside of the apparatus, whereby the humidity in the apparatus is maintained in an appropriate state. By the time the mixture reaches the downstream side of the casing 92, the mixture becomes fine particle powder, and is sequentially discharged from the discharge port 98. The fine particle powder discharged from the discharge port 98 is stored in the storage container 102 through the carry-out path 100.

[Effects of Present Embodiment]

By the fine particle powder manufacturing method and the fine particle powder manufacturing apparatus 41 described above, the first raw material 12A and the second raw material 12B are reacted in the mother liquor in which a high-speed swirling flow is generated in the crystallization device 10 in the fine particle slurry manufacturing process to manufacture a slurry containing fine particles having a particle diameter equal to or less than 7 $\mu$m, and thereafter, through the initial concentration process, the dilution washing process, and the final concentration process, washing and high-level concentration using the stirring type cross-flow filtration device 6 can be efficiently performed without causing clogging of a filter or a flow path, and further, in the drying process, the final concentrated slurry and the wet powder are mixed, and the heated hollow stirring blade 178 is brought into contact with the mixture to perform heating by conductive heat transfer excellent in thermal efficiency, so that it is possible to manufacture a fine particle powder having a size equal to or less than 7 $\mu$m with high manufacturing efficiency while suppressing energy cost.

In addition, in the fine particle slurry manufacturing process, a solution containing a transition metal element as the first raw material 12A and an alkali solution as the second raw material 12B are used and the both are reacted, whereby fine particles containing a transition metal hydroxide as a main component can be obtained, and a fine particle powder as a positive electrode material precursor for a secondary battery can be manufactured with high manufacturing efficiency while suppressing energy cost.

Further, in the initial concentration process, the fine particle slurry is filtered by the stirring type cross-flow filtration device 6 and concentrated to, for example, a solid content of 35 to 65 wt% to obtain an initially concentrated slurry, so that removal efficiency of impurities from the slurry before washing is high, the amount of washing liquid and the washing time consumed in the dilution washing process can be reduced, the energy cost is suppressed, and the manufacturing efficiency can be increased while eliminating problems such as filter clogging by fine particles.

Further, in the final concentration process, the washed slurry is concentrated to, for example, a solid content of 50 to 65 wt% by removing a part of the mother liquor and the washing liquid by the stirring type cross-flow filtration device 6. Thus, the amount of the mother liquor and the amount of the washing liquid to be removed in the drying process can be reduced, the energy cost is suppressed, and the manufacturing efficiency is enhanced.

Further, in the crystallization device 10, since the mother liquor is circulated by the pump 22, it is easy to generate a high-speed swirling flow with simple equipment, fine particles having a particle diameter equal to or less than 7 $\mu$m, preferably equal to or less than 5 $\mu$m can be precipitated by uniformly mixing the first raw material 12A and the second raw material 12B in the high-speed swirling flow in an extremely short time, and the particle diameter of the finally obtained fine particle powder can be reduced and the particle diameter distribution can be narrowed, so that a high-quality final product can be expected.

Further, in the drying device 8, since the hollow stirring blades 178 of the hollow rotation shafts 176 are fixed at intervals in the axial direction to the respective hollow rotation shafts 176 so that the hollow stirring blades 178 of the respective hollow rotation shafts 176 partially overlap each other when viewed in the axial direction, as the hollow stirring blades 178 rotate, the heated hollow stirring blades 178 mix and transfer the final concentrated slurry and the wet powder held in the casing 92, and during that time, the mixture of the final concentrated slurry and the wet powder held in the casing 92 is dried by conductive heat transfer to be converted into the fine particle powder. Therefore, moisture can be efficiently evaporated as compared with hot air drying by convection heat transfer in which hot air is blown, and an excellent effect of suppressing energy cost and increasing manufacturing efficiency is obtained.

Note that the present invention is not limited only to the above embodiments, and it is possible to add, delete, and replace components with well-known techniques within the scope described in the claims.

Industrial Applicability

As described above, by the fine particle powder manufacturing method and manufacturing apparatus of the present invention, fine particles of 7 $\mu$m or less can be manufactured in the fine particle slurry manufacturing process, the subsequent washing and concentration can be efficiently performed, and the manufacturing efficiency can be enhanced while the energy cost is suppressed. Therefore, the present invention is industrially applicable.

As described above, by the fine particle slurry washing and concentrating apparatus, the fine particle powder manufacturing apparatus, and the fine particle powder manufacturing method of the present invention, the amount of washing water or the amount of washing wastewater to be used can be reduced, and the fine particle powder can be stably manufactured. Therefore, the present invention is industrially applicable.

As described above, by the fine particle slurry concentrating apparatus, and the fine particle powder manufacturing apparatus and manufacturing method of the present invention, a viscosity change of slurry is correctly grasped even in a high concentration region by a density sensor, and a washing liquid supply amount to the slurry tank by the washing liquid supply device is controlled by the control device. Therefore, even when the average particle diameter of the fine particles is small, it is possible to stably concentrate the fine particle slurry even in a high concentration region while suppressing clogging of a filter and an attached flow path. Thus, the invention of the present application can be used industrially.

As described above, by a fine particle powder manufacturing apparatus and manufacturing method of the present invention, a fine particle powder can be stably manufactured while improving energy efficiency in a process of drying a concentrated slurry. Therefore, the present invention is industrially applicable.

Reference Signs List

| | |
|---|---|
| 1 | Fine particle powder manufacturing apparatus |
| 2 | Fine particle slurry manufacturing device |
| 6 | Stirring type cross-flow filtration device |
| 8 | Drying device |
| 10 | Crystallization device |
| 12A | First raw material |
| 12B | Second raw material |
| 12C | Mother liquor |

| 14 | Discharge hole |
|---|---|
| 16 | Conduit |
| 18 | Reservoir |
| 20 | Conduit |
| 21 | Fine particle powder manufacturing apparatus |
| 22 | Pump |
| 24 | Conduit |
| 26 | Outlet |
| 28 | Conduit |
| 30 | Slurry tank |
| 31 | Fine particle powder manufacturing apparatus |
| 34 | Anchor type stirring blade |
| 36 | Motor |
| 38 | Washing liquid source |
| 40 | Conduit |
| 41 | Fine particle powder manufacturing apparatus |
| 42 | Three-way valve |
| 44 | On-off valve |
| 46 | Conduit |
| 48 | Pump |
| 50 | Washing liquid tank |
| 52 | Discharge hole |
| 54 | Pump |
| 56 | Conduit |
| 60 | Casing |
| 62 | Motor |
| 64 | Discharge port |
| 66 | Density sensor |
| 67 | Control device |
| 68 | Flow rate adjusting valve |
| 69 | Control unit |
| 70 | Three-way valve (switching device) |
| 71 | Conductivity sensor |
| 72 | Conduit |
| 74 | Three-way valve |
| 76 | Conduit |
| 78 | Conduit |
| 80 | Liquid discharge path |
| 82 | Slurry tank |
| 84 | Anchor type stirring blade |
| 86 | Motor |
| 88 | Discharge port |
| 90 | Pump |
| 92 | Casing |
| T | Transfer direction |
| 94 | Conduit |
| 96 | Introduction port |
| 98 | Discharge port |
| 100 | Carry-out path |
| 102 | Storage container |
| 110 | Outer tube |
| 112 | First inner tube |
| 114 | Second inner tube |
| 115 | Introduction port |
| 116 | Reaction vessel |
| 116A | Tapered portion |
| 118 | Flow rate adjusting valve |
| 120 | Drive unit |

| 122 | Pressure gauge |
| 124 | Temperature adjuster |
| 126 | Motor |
| 128 | Stirring blade |
| 130 | Partition plate |
| 132 | Extraction valve |
| 134 | Pump |
| 140 | Rotation shaft |
| 142 | Stirring blade |
| 144 | Introduction port |
| 146 | Filter |
| 148 | Filtrate chamber |
| 150 | Slurry chamber |
| 152 | Tapered portion |
| 154 | Filtrate discharge valve |
| 156 | Conduit |
| 174 | Gas inlet |
| 175 | Gas outlet |
| 176 | Hollow rotation shaft |
| 178 | Hollow stirring blade |
| 180 | Rotation mechanism |
| 182 | Heat medium discharge hole |
| 184 | Heat medium introduction hole |
| 190 | Notch |
| 194 | Inner wall |
| 196 | Top plate |
| 198 | Outer wall |
| 199 | Heat medium flow path |
| 200 | Heat medium inlet |

**Claims**

1. A fine particle powder manufacturing method comprising:

   a fine particle slurry manufacturing process of manufacturing a fine particle slurry containing fine particles having a particle diameter equal to or less than 7 $\mu$m by reacting a plurality of raw materials in a mother liquor in which a swirling flow is generated in a reaction processor;
   an initial concentration process of supplying the fine particle slurry to filtration equipment in which a slurry tank and a stirring type cross-flow filtration device are arranged on a circulation path, and initially concentrating the fine particle slurry while circulating the fine particle slurry in the filtration equipment to obtain an initially concentrated slurry;
   a dilution washing process of obtaining a washed slurry by performing filtration in the stirring type cross-flow filtration device while supplying a washing liquid to the initially concentrated slurry in the slurry tank;
   a final concentration process of filtering the washed slurry in the stirring type cross-flow filtration device to perform final concentration to obtain a final concentrated slurry; and
   a drying process of supplying the final concentrated slurry to a drying device, transferring the final concentrated slurry while stirring the final concentrated slurry with a heated stirring blade, and drying the final concentrated slurry by conductive heat transfer to obtain a fine particle powder, wherein
   the stirring type cross-flow filtration device includes a slurry chamber and a filtrate chamber separated by a filter, a stirring body disposed in the slurry chamber along the filter, and a drive unit that moves the stirring body along the filter to prevent deposition of fine particles on a surface of the filter, and performs filtration by supplying the fine particle slurry or the initially concentrated slurry or the washed slurry supplied from the slurry tank to the slurry chamber.

2. The fine particle powder manufacturing method according to claim 1, wherein the fine particle powder is a positive electrode material precursor for a secondary battery, and in the fine particle slurry manufacturing process, a solution containing a transition metal element as a first raw material is reacted with an alkali solution as a second raw material to obtain fine particles containing a transition metal hydroxide as a main component.

3. The fine particle powder manufacturing method according to claim 1 or 2, wherein in the initial concentration process, the fine particle slurry obtained in the fine particle slurry manufacturing process is filtered by the stirring type cross-flow filtration device and concentrated until a solid content concentration becomes 35 to 65 wt% to obtain the initially concentrated slurry.

4. The fine particle powder manufacturing method according to claim 1 or 2, wherein in the final concentration process, the washed slurry is concentrated by the stirring type cross-flow filtration device until a solid content concentration becomes 50 to 65 wt% to obtain the final concentrated slurry.

5. The fine particle powder manufacturing method according to claim 1 or 2, wherein in the fine particle slurry manufacturing process, a reaction liquid containing the mother liquor and the raw material in the reaction processor is once discharged to an outside, the discharged reaction liquid is returned into the reaction processor to form a circulation system of the reaction liquid, a swirling flow is generated in the reaction processor by an inflow force of the reaction liquid, and the fine particle slurry containing fine particles crystallized by a reaction of the raw material is manufactured from the circulation system of the reaction liquid.

6. The fine particle powder manufacturing method according to claim 1 or 2, wherein the drying process is a process of drying the final concentrated slurry for which the final concentration process has been completed by a stirring heat transfer device, the stirring heat transfer device including: a casing having an inflow port formed at one end and an outflow hole formed at another end; a plurality of rotation shafts rotatable about respective axes in the casing and arranged so that the axes are parallel to each other; stirring blades fixed to each of the rotation shafts at an interval in an axial direction so that respective stirring blades of the rotation shafts partially overlap each other as viewed in the axial direction; and a heating mechanism that heats the stirring blades, the heated stirring blades mix the final concentrated slurry supplied from the inflow port and a wet powder held in the casing and transfer the mixed slurry to the outflow hole by rotating the rotation shafts, and a mixture of the final concentrated slurry and the wet powder is dried by conductive heat transfer during the transfer to convert the mixture into a fine particle powder.

7. A fine particle powder manufacturing apparatus comprising:

a fine particle slurry manufacturing device that manufactures a fine particle slurry containing fine particles having a particle diameter equal to or less than 7 $\mu$m by reacting a plurality of raw materials in a mother liquor in which a swirling flow is generated in a reaction processor;
filtration equipment in which a slurry tank and a stirring type cross-flow filtration device are arranged on a circulation path;
a washing liquid supply device for supplying a washing liquid into the slurry tank;
a switching device for switching among (a) an initial concentration process of performing initial concentration while circulating the fine particle slurry in the filtration equipment to obtain an initially concentrated slurry, (b) a dilution washing process of filtering the initially concentrated slurry in the stirring type cross-flow filtration device while supplying a washing liquid from the washing liquid supply device to the initially concentrated slurry in the slurry tank, to obtain a washed slurry, and (c) a final concentration process of filtering the washed slurry in the stirring type cross-flow filtration device to perform final concentration to obtain a final concentrated slurry; and
a drying device that transfers the final concentrated slurry while stirring the final concentrated slurry with a heated stirring blade and dries the final concentrated slurry by conductive heat transfer to obtain a fine particle powder, wherein
the stirring type cross-flow filtration device includes a slurry chamber and a filtrate chamber separated by a filter, a stirring body disposed in the slurry chamber along the filter, and a drive unit that moves the stirring body along the filter to prevent deposition of fine particles on a surface of the filter, and performs filtration by supplying the fine particle slurry or the initially concentrated slurry or the washed slurry supplied from the slurry tank to the slurry chamber.

8. A fine particle slurry washing and concentrating apparatus comprising:

a slurry tank that stores a fine particle slurry containing fine particles having a particle diameter equal to or less than 7 $\mu$m;
a flow path that supplies the stored fine particle slurry to a stirring type cross-flow filtration device;
a return flow path that returns filtrate discharged from the stirring type cross-flow filtration device to the slurry tank;
a waste flow path that discards the filtrate discharged from the stirring type cross-flow filtration device;
a filtrate sensor including at least one of a conductivity sensor that measures conductivity of the filtrate discharged from the stirring type cross-flow filtration device or a density sensor that measures density of the filtrate;

a flow path switching device that switches a flow path of the filtrate discharged from the stirring type cross-flow filtration device between flowing to the return flow path and flowing to the waste flow path; and

a control unit that controls the flow path switching device so as to cause the filtrate to flow into the waste flow path when a measurement result of the filtrate sensor is equal to or more than a threshold, and to cause the filtrate to flow into the return flow path when the measurement result of the filtrate sensor is less than the threshold.

9. The fine particle slurry washing and concentrating apparatus according to claim 8, wherein the filtrate sensor is a conductivity meter, and the threshold is set to a value in a range equal to or less than 10 [mS/cm].

10. The fine particle slurry washing and concentrating apparatus according to claim 8 or 9, wherein the filtrate sensor is provided on a downstream side of the stirring type cross-flow filtration device and on an upstream side of the flow path switching device.

11. The fine particle slurry washing and concentrating apparatus according to claim 8 or 9, wherein the fine particles are a positive electrode material precursor for a secondary battery.

12. A fine particle powder manufacturing apparatus comprising a drier of a conductive heat transfer type that dries the fine particle slurry supplied from the fine particle slurry washing and concentrating apparatus according to claim 8, wherein the drier includes a stirring heat transfer device, and the stirring heat transfer device includes a casing having an inflow port formed at one end and an outflow hole formed at another end, a plurality of rotation shafts rotatable about respective axes in the casing and arranged so that the axes are parallel to each other, stirring blades fixed to each of the rotation shafts at an interval in an axial direction so that respective stirring blades of the rotation shafts partially overlap each other as viewed in the axial direction, and a heating mechanism that heats the stirring blades, and by rotating the rotation shafts, the heated stirring blades transfer the fine particle slurry supplied from the inflow port to the outflow hole while heating the fine particle slurry, and during the transfer, the fine particle slurry is dried and converted into a fine particle powder.

13. A fine particle powder manufacturing method comprising:

a dilution washing filtration process of filtering a slurry obtained by adding a washing liquid to a slurry containing fine particles having a particle diameter equal to or less than 7 $\mu$m and a mother liquor by a stirring type cross-flow filtration device to obtain a washed slurry, and a concentration process of concentrating the washed slurry by the stirring type cross-flow filtration device to obtain a concentrated slurry;

a flow path switching process of measuring conductivity or density of a filtrate discharged from the stirring type cross-flow filtration device, discarding the filtrate when the conductivity or density is equal to or higher than a threshold, and reusing the filtrate as the washing liquid when the conductivity or density is lower than the threshold; and

a drying process of heating and drying the concentrated slurry to obtain a fine particle powder.

14. A fine particle slurry concentrating apparatus comprising:

a slurry tank that stores a fine particle slurry;

a washing liquid supply device that supplies a washing liquid to the slurry tank;

a stirring type cross-flow filtration device for concentrating the fine particle slurry;

a first flow path for supplying the fine particle slurry stored in the slurry tank to the stirring type cross-flow filtration device;

a second flow path that returns a concentrated slurry discharged from the stirring type cross-flow filtration device to the slurry tank;

a density sensor that generates a signal corresponding to a density of the concentrated slurry discharged from the stirring type cross-flow filtration device; and

a control device that controls a supply amount of the washing liquid to the slurry tank by the washing liquid supply device based on the output of the density sensor.

15. The fine particle slurry concentrating apparatus according to claim 14, comprising:

a conductivity sensor that generates a signal corresponding to conductivity of a filtrate discharged from the stirring type cross-flow filtration device, wherein

the control device switches or instructs a timing of switching from an initial concentration process to a dilution washing process or from a final concentration process to a discharge process based on the output of the density sensor, and switches or instructs a timing of switching from the dilution washing process to the final concentration process based on the output of the density sensor and an output of the conductivity sensor,

the initial concentration process including supplying the fine particle slurry stored in the slurry tank to the stirring type cross-flow filtration device through the first flow path, and returning the concentrated slurry discharged from the stirring type cross-flow filtration device to the slurry tank through the second flow path, thereby separating a mother liquor in the fine particle slurry to obtain an initially concentrated slurry,

the dilution washing process including supplying a washing liquid to the slurry tank by the washing liquid supply device, supplying the initially concentrated slurry stored in the slurry tank to the stirring type cross-flow filtration device through the first flow path, and returning the concentrated slurry discharged from the stirring type cross-flow filtration device to the slurry tank through the second flow path, thereby diluting and washing the initially concentrated slurry to obtain a washed slurry,

the final concentration process including stopping the supply of the washing liquid to the slurry tank by the washing liquid supply device, supplying a washed slurry stored in the slurry tank to the stirring type cross-flow filtration device through the first flow path, and returning the concentrated slurry discharged from the stirring type cross-flow filtration device to the slurry tank through the second flow path, thereby separating a washing liquid in the washed slurry to obtain a final concentrated slurry, and

the discharge process including discharging the final concentrated slurry from the stirring type cross-flow filtration device.

16. The fine particle slurry concentrating apparatus according to claim 14, comprising:

a second density sensor that generates a signal corresponding to a density of a filtrate discharged from the stirring type cross-flow filtration device, wherein

the control device switches or instructs a timing of switching from an initial concentration process to a dilution washing process, from the dilution washing process to a final concentration process, or from the final concentration process to a discharge process based on outputs of the density sensor and the second density sensor,

the initial concentration process including supplying the fine particle slurry stored in the slurry tank to the stirring type cross-flow filtration device through the first flow path, and returning the concentrated slurry discharged from the stirring type cross-flow filtration device to the slurry tank through the second flow path, thereby separating a mother liquor in the fine particle slurry to obtain an initially concentrated slurry,

the dilution washing process including supplying a washing liquid to the slurry tank by the washing liquid supply device, supplying the initially concentrated slurry stored in the slurry tank to the stirring type cross-flow filtration device through the first flow path, and returning the concentrated slurry discharged from the stirring type cross-flow filtration device to the slurry tank through the second flow path, thereby diluting and washing the initially concentrated slurry to obtain a washed slurry,

the final concentration process including stopping the supply of the washing liquid to the slurry tank by the washing liquid supply device, supplying a washed slurry stored in the slurry tank to the stirring type cross-flow filtration device through the first flow path, and returning the concentrated slurry discharged from the stirring type cross-flow filtration device to the slurry tank through the second flow path, thereby separating a washing liquid in the washed slurry to obtain a final concentrated slurry, and

the discharge process including discharging the final concentrated slurry from the stirring type cross-flow filtration device.

17. The fine particle slurry concentrating apparatus according to claim 15 or 16, wherein in the dilution washing process, the control device decreases or stops the supply of the washing liquid by the washing liquid supply device when a density of the concentrated slurry is lower than a lower limit value of a target density range, and performs feedback control by increasing a supply amount or starting supply of the washing liquid in the washing liquid supply device when the density of the concentrated slurry is higher than an upper limit value of the target density range, based on an output of the density sensor.

18. The fine particle slurry concentrating apparatus according to claim 15, wherein in the initial concentration process, the control device compares an output of the density sensor with a slurry density corresponding to a predetermined value in a range of a solid content concentration of the concentrated slurry of 35 to 65 wt%, and at a time point when the density sensor reaches the slurry density corresponding to the predetermined value, the control device switches to the dilution washing process or instructs a timing to switch to the dilution washing process.

19. The fine particle slurry concentrating apparatus according to claim 16, wherein in the initial concentration process, the control device switches to the dilution washing process or instructs a timing to switch to the dilution washing process at a time point when the solid content concentration of the concentrated slurry reaches a predetermined value within a range of 35 to 65 wt% based on outputs of the density sensor and the second density sensor.

20. The fine particle slurry concentrating apparatus according to claim 15, wherein in the final concentration process, the control device compares an output of the density sensor with a slurry density corresponding to a predetermined value in a range of a solid content concentration of the concentrated slurry of 50 to 65 wt%, and shifts to the discharge process at a time point when the density sensor reaches the slurry density corresponding to the predetermined value.

21. The fine particle slurry concentrating apparatus according to claim 16, wherein in the final concentration process, the control device shifts to the discharge process at a time point when a solid content concentration of the concentrated slurry reaches a predetermined value within a range of 50 to 65 wt% based on outputs of the density sensor and the second density sensor.

22. The fine particle slurry concentrating apparatus according to any one of claims 14 to 16, wherein the density sensor is a vibration type in-line density sensor including a vibrator in contact with the concentrated slurry, and a controller that vibrates the vibrator and measures a resonance frequency of the vibrator.

23. The fine particle slurry concentrating apparatus according to any one of claims 14 to 16, wherein the stirring type cross-flow filtration device includes a slurry chamber and a filtrate chamber separated by a filter, a stirring body disposed in the slurry chamber along the filter, and a drive unit that moves the stirring body along the filter to prevent fine particle deposition on a surface of the filter, and concentrates the fine particle slurry passing through the slurry chamber.

24. The fine particle slurry concentrating apparatus according to any one of claims 14 to 16, wherein the fine particles in the fine particle slurry are a positive electrode material precursor for a secondary battery.

25. A fine particle powder manufacturing apparatus comprising:

a fine particle slurry concentrating apparatus according to any one of claims 14 to 16; and
a stirring heat transfer drying device that dries a concentrated slurry supplied from the fine particle slurry concentrating apparatus,
the stirring heat transfer drying device includes:

a casing having an inflow port formed at one end and an outflow hole formed at another end;
a plurality of rotation shafts rotatable about respective axes in the casing and arranged so that the axes are parallel to each other;
stirring blades fixed to each of the rotation shafts at an interval in an axial direction so that respective stirring blades of the rotation shafts partially overlap each other as viewed in the axial direction; and
a heating mechanism that heats the stirring blades, and
by rotating the rotation shafts, the heated stirring blades transfer the concentrated slurry supplied from the inflow port to the outflow hole while heating the concentrated slurry, and during the transfer, the concentrated slurry is dried and converted into a fine particle powder.

26. A fine particle powder manufacturing method comprising:

a dilution washing filtration process of filtering a slurry obtained by adding a washing liquid to a slurry containing fine particles having a particle diameter equal to or less than 7 $\mu$m and a mother liquor by a stirring type cross-flow filtration device to obtain a washed slurry;
a concentration process of concentrating the washed slurry by the stirring type cross-flow filtration device to obtain a concentrated slurry; and
a drying process of heating and drying the concentrated slurry to obtain a fine particle powder, wherein
in the dilution washing filtration process, a density of the washed slurry is measured by a density sensor, and when the density of the washed slurry measured by the density sensor is lower than a lower limit value of a target range, a supply amount of the washing liquid in the dilution washing filtration process is decreased or the supply is stopped, and when the density of the washed slurry measured by the density sensor is higher than an upper limit value of the target range, the supply amount of the washing liquid in the dilution washing filtration process is increased or the supply is started to perform feedback control.

27. A fine particle powder manufacturing apparatus comprising:

a fine particle slurry concentrating apparatus including a slurry tank that stores a fine particle slurry, a washing liquid supply device that supplies a washing liquid to the slurry tank, a stirring type cross-flow filtration device for concentrating the fine particle slurry, a first flow path for supplying the fine particle slurry stored in the slurry tank to the stirring type cross-flow filtration device, and a second flow path that returns a concentrated slurry discharged from the stirring type cross-flow filtration device to the slurry tank; and

a stirring heat transfer drying device that dries the concentrated slurry supplied from the fine particle slurry concentrating apparatus, wherein

the stirring heat transfer drying device includes:

a casing having an inflow port formed at one end and an outflow hole formed at another end;

a plurality of rotation shafts rotatable about respective axes in the casing and arranged so that the axes are parallel to each other;

stirring blades fixed to each of the rotation shafts at an interval in an axial direction so that respective stirring blades of the rotation shafts partially overlap each other as viewed in the axial direction; and

a heating mechanism that heats the stirring blades, and

by rotating the rotation shafts, the heated stirring blades transfer the concentrated slurry supplied from the inflow port to the outflow hole while heating the concentrated slurry, and during the transfer, the concentrated slurry is dried and converted into a fine particle powder.

28. The fine particle powder manufacturing apparatus according to claim 27, wherein the rotation shaft is rotated to mix the concentrated slurry supplied from the inflow port by the heated stirring blades with a wet powder held in the casing, transfer the concentrated slurry to the outflow hole while heating, and dry the concentrated slurry during the transfer to convert the concentrated slurry into a fine particle powder.

29. The fine particle powder manufacturing apparatus according to claim 27 or 28, wherein in each of two adjacent rotation shafts among the rotation shafts, the stirring blades forming a pair are fixed at positions rotationally symmetric about the rotation shaft by 180°, in each of the rotation shafts, the stirring blades are inclined in opposite directions with respect to the rotation shaft and twisted along a virtual spiral plane around the rotation shaft, and two adjacent rotation shafts of the rotation shafts rotate in opposite directions.

30. The fine particle powder manufacturing apparatus according to claim 27 or 28, wherein the fine particle powder is a positive electrode material precursor for a secondary battery.

31. A fine particle powder manufacturing method comprising:

a fine particle slurry concentrating apparatus including a slurry tank that stores a fine particle slurry, a washing liquid supply device that supplies a washing liquid to the slurry tank, a stirring type cross-flow filtration device for concentrating the fine particle slurry, a first flow path for supplying the fine particle slurry stored in the slurry tank to the stirring type cross-flow filtration device, and a second flow path that returns a concentrated slurry discharged from the stirring type cross-flow filtration device to the slurry tank; and

a stirring heat transfer drying device that dries the concentrated slurry supplied from the fine particle slurry concentrating apparatus, wherein

the stirring heat transfer drying device includes:

a casing having an inflow port formed at one end and an outflow hole formed at another end;

a plurality of rotation shafts rotatable about respective axes in the casing and arranged so that the axes are parallel to each other;

stirring blades fixed to each of the rotation shafts at an interval in an axial direction so that respective stirring blades of the rotation shafts partially overlap each other as viewed in the axial direction; and

a heating mechanism that heats the stirring blades, and

by rotating the rotation shafts, the heated stirring blades transfer the concentrated slurry supplied from the inflow port to the outflow hole while heating the concentrated slurry, and during the transfer, the concentrated slurry is dried and converted into a fine particle powder.

FIG. 1

*FIG. 2*

FIG. 3

# FIG. 4

EP 4 772 819 A1

EP 4 772 819 A1

## FIG. 5

*FIG. 6*

*FIG. 7*

EP 4 772 819 A1

## FIG. 8

## FIG. 9

EP 4 772 819 A1

## FIG. 10

```
                    ( START )
                        │
                        ▼
┌──────────────────────────────────────────────────┐
│         INITIAL CONCENTRATION PROCESS (A)          │── S1
│              WASHING LIQUID: STOP                  │
│  FROM SLURRY TANK TO FILTRATION DEVICE: SUPPLY     │
│  FROM FILTRATION DEVICE TO SLURRY TANK: RETURN     │
└──────────────────────────────────────────────────┘
                        │
                        ▼
            ◇─────────────────────◇  ── S2
   NO       │      Dₛ > A ?         │
   ◄────────│                       │
            ◇─────────────────────◇
                       │ YES
                       ▼
┌──────────────────────────────────────────────────┐
│          DILUTION WASHING PROCESS (B)              │── S3
│              WASHING LIQUID: SUPPLY                │
│  FROM SLURRY TANK TO FILTRATION DEVICE: SUPPLY     │
│  FROM FILTRATION DEVICE TO SLURRY TANK: RETURN     │
└──────────────────────────────────────────────────┘
                        │
                        ▼
            ◇─────────────────────◇  ── S4
   NO       │      Dₛ > B ?         │
   ◄────────│        And            │
            │      Cᵣ < D ?         │
            ◇─────────────────────◇
                       │ YES
                       ▼
┌──────────────────────────────────────────────────┐
│          FINAL CONCENTRATION PROCESS (C)           │── S5
│              WASHING LIQUID: STOP                  │
│  FROM SLURRY TANK TO FILTRATION DEVICE: SUPPLY     │
│  FROM FILTRATION DEVICE TO SLURRY TANK: RETURN     │
└──────────────────────────────────────────────────┘
                        │
                        ▼
            ◇─────────────────────◇  ── S6
   NO       │      Dₛ > C ?         │
   ◄────────│                       │
            ◇─────────────────────◇
                       │ YES
                       ▼
┌──────────────────────────────────────────────────┐
│             DISCHARGE PROCESS (D)                  │── S7
│              WASHING LIQUID: STOP                  │
│  FROM SLURRY TANK TO FILTRATION DEVICE: SUPPLY     │
│  FROM FILTRATION DEVICE TO DRYING DEVICE: SUPPLY   │
└──────────────────────────────────────────────────┘
                        │
                        ▼
                    ( END )
```

Decision S2: $D_S > A$ ?

Decision S4: $D_S > B$ ? And $C_R < D$ ?

Decision S6: $D_S > C$ ?

*FIG. 11*

START

INITIAL CONCENTRATION PROCESS (A)

WASHING LIQUID: STOP
FROM SLURRY TANK TO
FILTRATION DEVICE: SUPPLY
FROM FILTRATION DEVICE TO
SLURRY TANK: RETURN
— S1

$A = f(N_S, D_R)$ — S2

S3

NO — $D_S > A$ ?

YES

S4

DILUTION WASHING PROCESS (B)

WASHING LIQUID: SUPPLY
FROM SLURRY TANK TO
FILTRATION DEVICE: SUPPLY
FROM FILTRATION DEVICE TO
SLURRY TANK: RETURN

$B = f(N_B, D_R)$ — S5

S6

NO — $D_S > B$ ?
And
$D_R < F$ ?

YES

S7

FINAL CONCENTRATION PROCESS (C)

FINAL WASHING LIQUID: STOP
FROM SLURRY TANK TO
FILTRATION DEVICE: SUPPLY
FROM FILTRATION DEVICE TO
SLURRY TANK: RETURN

$C = f(N_C, D_R)$ — S8

S9

NO — $D_S > C$ ?

YES

S10

DISCHARGE PROCESS (D)

WASHING LIQUID: STOP
FROM SLURRY TANK TO
FILTRATION DEVICE: SUPPLY
FROM FILTRATION DEVICE TO
DRYING DEVICE: SUPPLY

END

*FIG. 12*

*FIG. 13*

*FIG. 14*

64

FIG. 15

EP 4 772 819 A1

## INTERNATIONAL SEARCH REPORT

| International application No. |
| --- |
| **PCT/JP2024/030521** |

| **A.** | **CLASSIFICATION OF SUBJECT MATTER** |
| --- | --- |

*F26B 17/20*(2006.01)i; *B01D 9/02*(2006.01)i; *B01D 24/00*(2006.01)i; *B01D 24/44*(2006.01)i; *B01D 24/48*(2006.01)i; *B01D 29/00*(2006.01)i; *B01D 29/01*(2006.01)i; *B01D 29/25*(2006.01)i; *B01D 29/37*(2006.01)i; *B01D 29/39*(2006.01)i; *B01D 29/60*(2006.01)i; *B01D 29/90*(2006.01)i; *B01D 29/94*(2006.01)i; *B01D 35/22*(2006.01)i; *B01F 23/50*(2022.01)i; *B01F 23/53*(2022.01)i; *B01F 23/57*(2022.01)i; *B01F 25/10*(2022.01)i; *B01F 27/50*(2022.01)i; *B01F 27/73*(2022.01)i; *B01F 27/90*(2022.01)i; *B01F 27/112*(2022.01)i; *B01F 27/115*(2022.01)i; *B01F 27/191*(2022.01)i; *B01F 27/702*(2022.01)i; *B01F 27/1122*(2022.01)i; *B01F 27/2123*(2022.01)i; *B01F 27/2322*(2022.01)i; *B01F 35/95*(2022.01)i; *B01J 2/00*(2006.01)i; *B01J 2/10*(2006.01)i; *H01M 4/04*(2006.01)i; *H01M 4/36*(2006.01)i; *H01M 4/48*(2010.01)i; *H01M 4/505*(2010.01)i; *H01M 4/525*(2010.01)i

FI:  F26B17/20 B; B01D29/04 520E; B01F27/1122; B01F27/115; B01F27/2123; B01F27/73; B01F27/90; B01F35/95; B01F23/50; B01F23/53; B01F23/57; B01F25/10; B01D25/08; B01D9/02 601B; B01D9/02 602E; B01D9/02 603E; B01D9/02 609A; B01D9/02 615A; H01M4/48; B01D29/00 B; B01D37/08; B01J2/00 A; B01D29/36 C; B01D29/04 510B; B01D29/04 530Z; B01D29/42 501A; B01D29/42 520; B01F27/2322; B01F27/112; B01F27/50; B01F27/702; B01J2/10 Z; H01M4/04 A; B01F27/191; B01D37/06; H01M4/36 Z; H01M4/525; H01M4/505; B01D29/34 510F

According to International Patent Classification (IPC) or to both national classification and IPC

| **B.** | **FIELDS SEARCHED** |
| --- | --- |

Minimum documentation searched (classification system followed by classification symbols)

F26B17/20; B01D9/02; B01D24/00; B01D24/44; B01D24/48; B01D29/00; B01D29/01; B01D29/25; B01D29/37; B01D29/39; B01D29/60; B01D29/90; B01D29/94; B01D35/22; B01F23/50; B01F23/53; B01F23/57; B01F25/10; B01F27/50; B01F27/73; B01F27/90; B01F27/112; B01F27/115; B01F27/191; B01F27/702; B01F27/1122; B01F27/2123; B01F27/2322; B01F35/95; B01J2/00; B01J2/10; H01M4/04; H01M4/36; H01M4/48; H01M4/505; H01M4/525

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

☑ Further documents are listed in the continuation of Box C.       ☑ See patent family annex.

| | | |
| --- | --- | --- |
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"  later document published after the international filing date or priority date and not in conflict with the application but cited to understand the principle or theory underlying the invention

"X"  document of particular relevance; the claimed invention cannot be considered novel or cannot be considered to involve an inventive step when the document is taken alone

"Y"  document of particular relevance; the claimed invention cannot be considered to involve an inventive step when the document is combined with one or more other such documents, such combination being obvious to a person skilled in the art

"&"  document member of the same patent family

| Date of the actual completion of the international search | Date of mailing of the international search report |
| --- | --- |
| **05 November 2024** | **19 November 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

## INTERNATIONAL SEARCH REPORT

| International application No. |
| --- |
| **PCT/JP2024/030521** |

**C.    DOCUMENTS CONSIDERED TO BE RELEVANT**

| Category* | Citation of document, with indication, where appropriate, of the relevant passages | Relevant to claim No. |
| --- | --- | --- |
| Y | WO 2011/136036 A1 (SUMITOMO CHEMICAL COMPANY, LIMITED) 03 November 2011 (2011-11-03)<br>    fig. 1-4 and explanations thereof | 1-7, 14-15, 20-25, 27-31 |
| A | | 8-13, 16-19, 26 |
| Y | JP 2015-123384 A (TSUKISHIMA KIKAI CO.) 06 July 2015 (2015-07-06)<br>    fig. 1-10 and explanations thereof | 1-7, 14-15, 20-25, 27-31 |
| Y | JP 2023-064963 A (NIPPON SHOKUBAI CO., LTD.) 12 May 2023 (2023-05-12)<br>    paragraphs [0106]-[0116] | 1-7, 14-15, 20-25, 27-31 |
| Y | WO 2022/220101 A1 (MITSUBISHI CHEMICAL CORPORATION) 20 October 2022 (2022-10-20)<br>    paragraphs [0142]-[0144] | 1-7, 14-15, 20-25, 27-31 |

Form PCT/ISA/210 (second sheet) (July 2022)

**INTERNATIONAL SEARCH REPORT**
Information on patent family members

International application No.

**PCT/JP2024/030521**

| Patent document cited in search report | | | Publication date (day/month/year) | Patent family member(s) | Publication date (day/month/year) |
|---|---|---|---|---|---|
| WO | 2011/136036 | A1 | 03 November 2011 | (Family: none) | |
| JP | 2015-123384 | A | 06 July 2015 | (Family: none) | |
| JP | 2023-064963 | A | 12 May 2023 | (Family: none) | |
| WO | 2022/220101 | A1 | 20 October 2022 | US      2024/0258505      A1 paragraphs [0242]-[0246] | |

Form PCT/ISA/210 (patent family annex) (July 2022)

**REFERENCES CITED IN THE DESCRIPTION**

**Patent documents cited in the description**

- JP 2023138382 A
- JP 2023138384 A
- JP 2023138383 A
- JP 2023138385 A
- JP 2012087039 A
- JP 2012099470 A